(19) Europäisches Patentamt
European Patent Office
Office européen des brevets

(11) EP 2 719 281 A1

(12) EUROPEAN PATENT APPLICATION
published in accordance with Art. 153(4) EPC

(43) Date of publication:
**16.04.2014 Bulletin 2014/16**

(21) Application number: **12796314.8**

(22) Date of filing: **06.06.2012**

(51) Int Cl.:
*A01N 43/653* (2006.01) *A01N 37/34* (2006.01)
*A01N 37/46* (2006.01) *A01N 37/50* (2006.01)
*A01N 43/40* (2006.01) *A01N 43/54* (2006.01)
*A01N 43/56* (2006.01) *A01N 43/84* (2006.01)
*A01N 47/24* (2006.01) *A01N 47/34* (2006.01)
*A01P 3/00* (2006.01)

(86) International application number:
**PCT/JP2012/064549**

(87) International publication number:
**WO 2012/169523 (13.12.2012 Gazette 2012/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2011 JP 2011127303**
**07.06.2011 JP 2011127767**

(71) Applicant: **Kureha Corporation**
**Chuo-ku**
**Tokyo 103-8552 (JP)**

(72) Inventors:
- **TATEISHI, Hideaki**
**Chuo-ku**
**Tokyo 103-8552 (JP)**
- **ARAKI, Nobuyuki**
**Chuo-ku**
**Tokyo 103-8552 (JP)**
- **YAMAZAKI, Toru**
**Chuo-ku**
**Tokyo 103-8552 (JP)**
- **MIYAKE, Taiji**
**Chuo-ku**
**Tokyo 103-8552 (JP)**
- **SUDO, Keiichi**
**Chuo-ku**
**Tokyo 103-8552 (JP)**
- **KANNO, Hisashi**
**Chuo-ku**
**Tokyo 103-8552 (JP)**

(74) Representative: **HOFFMANN EITLE**
**Patent- und Rechtsanwälte**
**Arabellastrasse 4**
**81925 München (DE)**

# (54) AGRICULTURAL OR HORTICULTURAL CHEMICAL AGENT, COMPOSITION FOR CONTROLLING PLANT DISEASE, METHOD FOR CONTROLLING PLANT DISEASE, AND PRODUCT FOR CONTROLLING PLANT DISEASE

(57) An agro-horticultural agent of the present invention is intended to provide an agro-horticultural agent capable of providing, with a smaller spray amount, the same effect as compared to a conventional agro-horticultural agent. The agro-horticultural agent of the present invention includes a plurality of active ingredients and one of the plurality of active ingredients is an azole derivative represented by the following general formula (I);

EP 2 719 281 A1

[Chem. 1]

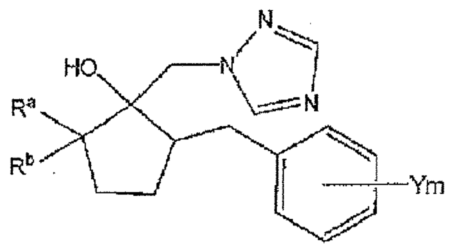

(I)

,

where: $R^a$ and $R^b$ each represent a predetermined hydrocarbon group and at least one of $R^a$ and $R^b$ has a chlorine atom or a bromine atom substituted for a hydrogen atom; Y represents a chlorine atom or a fluorine atom; and m represents 0 or 1.

FIG. 1

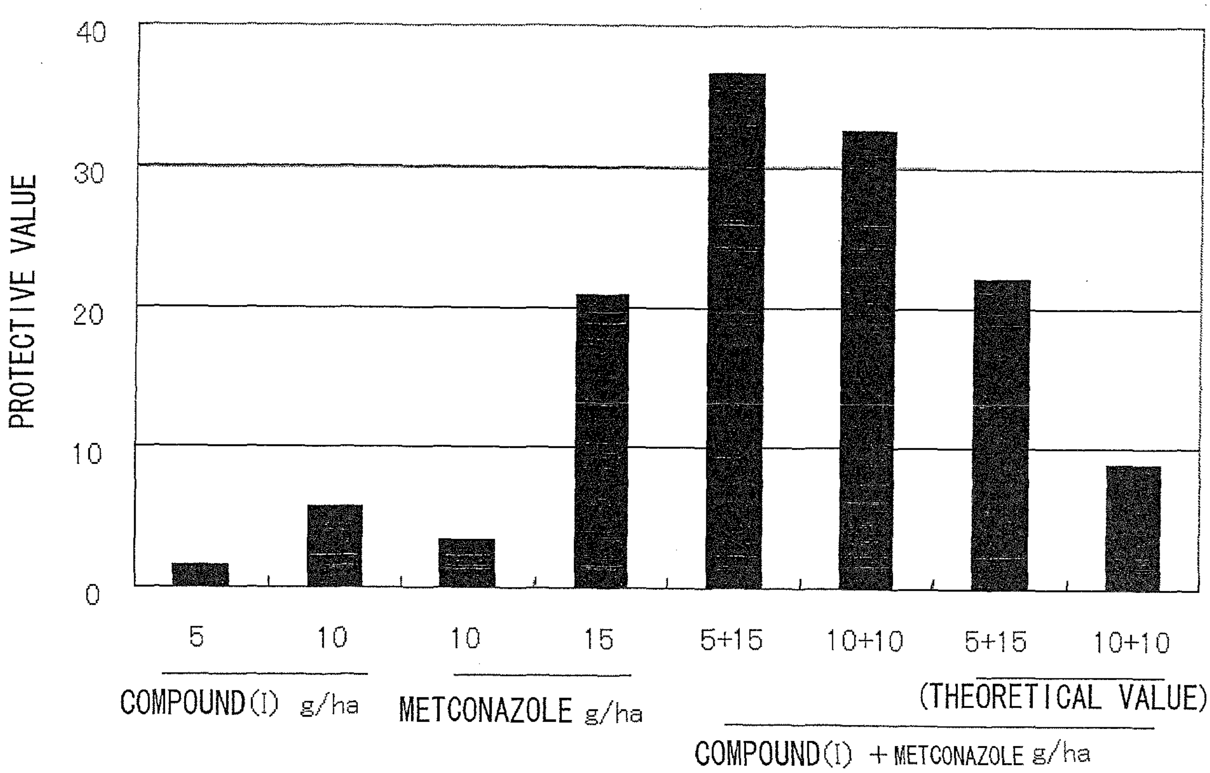

## Description

### Technical Field

The present invention relates to an agro-horticultural agent, a plant disease control composition, a method for controlling a plant disease. More specifically, the present invention relates to an agro-horticultural agent, a plant disease control composition, and the like each containing as an active ingredient at least one kind of azole compound, which agro-horticultural agent, the plant disease control composition, and the like each can be used for controlling a disease on wheat and the like, paddy-field rice, fruits, vegetables, etc. Further, the present invention relates to a plant disease control product separately containing at least two kinds of active ingredients.

### Background Art

It is known that certain kinds of 2-substituted-5-benzyl-1-azolylmethylcyclopentanol derivative show a biocidal activity (e.g., see Patent Literatures 1 and 2).
Further, it is reported that some compounds encompassed in 2-(halogenated hydrocarbon-substituted)-5-benzyl-1-azolylmethylcyclopentanol derivative show an anticonvulsive property and an anti-anxiety fighting activity (see Patent Literature 3). Note that Patent Literature 3 does not disclose agro-horticultural agents or industrial material protecting agents, and does not specifically disclose compounds that are encompassed in the scope of the present invention.
Conventionally, a large number of hydroxyethylazole derivatives, each being a 5-membered heterocyclic ring containing one or more nitrogen atoms in the ring has been proposed as active ingredients of agro-horticultural fungicides. In each of these hydroxyazole derivatives, a hydroxy group is bound to a carbon atom, and this carbon atom is further bound to a cycloalkyl group or a cycloalkyl group-substituted alkyl group (see, for example, Patent Literatures 6 to 18).

### Citation List

[Patent Literatures]

Patent Literature 1
Japanese Patent Application Publication, Tokukaihei, No. 01-93574 A
Patent Literature 2
Japanese Patent Application Publication, Tokukaihei, No. 01-186871 A
Patent Literature 3
German Patent Application Publication No. 3902031 Specification
Patent Literature 4
Japanese Patent Application Publication, Tokukaihei, No. 05-271197 A
Patent Literature 5
Japanese Patent Application Publication, Tokukaihei, No. 01-301664 A
Patent Literature 6
European Patent Application Publication No. 0015756 Specification
Patent Literature 7
European Patent Application Publication No. 0052424 Specification
Patent Literature 8
European Patent Application Publication No. 0061835 Specification
Patent Literature 9
European Patent Application Publication No. 0297345 Specification
Patent Literature 10
European Patent Application Publication No. 0047594 Specification
Patent Literature 11
European Patent Application Publication No. 0212605 Specification
Patent Literature 12
Japanese Patent Application Publication, Tokukaishou, No. 56-97276 A
Patent Literature 13
Japanese Patent Application Publication, Tokukaishou, No. 61-126049 A
Patent Literature 14

Japanese Patent Application Publication, Tokukaihei, No. 2-286664 A
Patent Literature 15
Japanese Patent Application Publication, Tokukaishou, No. 59-98061 A
Patent Literature 16
Japanese Patent Application Publication, Tokukaishou, No. 61-271276 A
Patent Literature 17
European Patent Application Publication No. 0229642 Specification
Patent Literature 18
Japanese Patent Application Publication, Tokukaihei, No. 4-230270 A

Summary of Invention

Technical Problem

In disease control with use of agro-horticultural fungicides, there arise problems of, for example, an effect on non-target organisms, an effect on environments, and emergence of fungicide-resistant pathogens. Accordingly, there has occurred a demand for a fungicide capable of providing a high control effect while reducing a spray amount of a chemical agent, for the purpose of not only reducing toxicity to non-target organisms and negative effects on environment but also preventing emergence of fungicide-resistant pathogens.

The present invention is attained in view of the above problems. A main object of the present invention is to provide an agro-horticultural agent capable of providing, with a smaller spray amount, the same effect as compared to a conventional agro-horticultural agent.

Solution to Problem

In order to solve the above problem, the inventors of the present invention synthesized many 2-(halogenated hydrocarbon-substituted)-5-benzyl-1-azolylmethylcyclopentanol derivatives and examined in detail chemical structures and biological activities of thus synthesized derivatives. As a result, the inventors found that an azole derivative (more specifically, 2-(halogenated hydrocarbon-substituted)-5-benzyl-1-azolylmethylcyclopentanol derivative) represented by the following general formula (I) shows synergistic activity in a case where the azole derivative is mixed with a conventionally-used azole compound (more specifically, metconazole and/or epoxiconazole) or the like and used as an admixture. Thereby, the inventors of the present invention accomplished the present invention. Further, the inventors found that both of the azole derivative represented by the following formula (I) and an azole derivative represented by the following formula (XVII) have an excellent activity. In addition, the inventors also found that a mixture of these azole derivatives exerts a cooperative effect. Thereby, the inventors of the present invention accomplished the present invention.

In other words, the agro-horticultural agent of the present invention includes a plurality of active ingredients, one of which is an azole derivative represented by the general formula (I):

[Chem. 1]

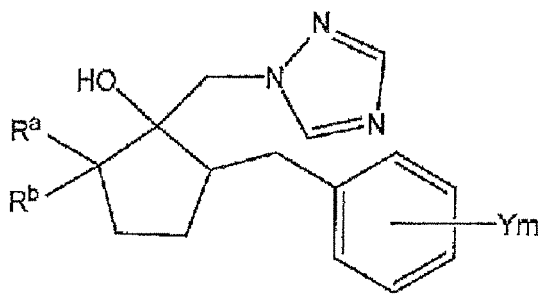

(I)

,

where: $R^a$ represents a $C_1$-$C_3$ alkyl group substituted with a halogen atom or a $C_2$-$C_3$ alkenyl group substituted with a halogen atom;

$R^b$ represents a $C_1$-$C_2$ alkyl group unsubstituted or substituted with a halogen atom;
Y represents a halogen atom;
m represents 0 or 1; and when m is 1, Y binds to 4-position.

The azole derivative represented by the above general formula (I) shows a control effect to a broad range of plant diseases. Further, the azole derivative represented by the general formula (I) exerts a synergistic effect when used in combination with other active ingredient, as compared to a case where each of the azole derivative and other active ingredient is solely used. Therefore, an agro-horticultural agent containing the azole derivative represented by the general formula (I) as one of active ingredients can provide, with a smaller spray amount, the same effect as compared to a conventional agro-horticultural agent.

A plant disease control composition of the present invention includes:

as an active ingredient, a compound represented by the general formula (I):

[Chem. 2]

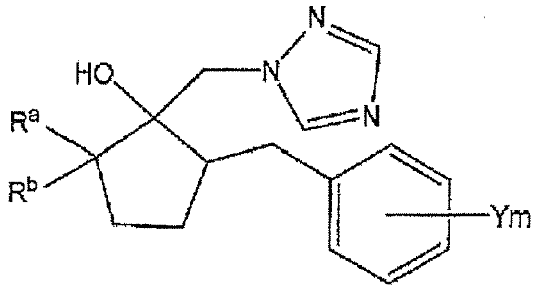

(I)

,

where: $R^a$ represents a $C_1$-$C_3$ alkyl group substituted with a halogen atom or a $C_2$-$C_3$ alkenyl group substituted with a halogen atom; $R^b$ represents a $C_1$-$C_2$ alkyl group unsubstituted or substituted with a halogen atom; Y represents a halogen atom; m represents 0 or 1; and when m is 1, Y binds to 4-position; and
as another active ingredient, a compound represented by the general formula (XVII):

[Chem. 3]

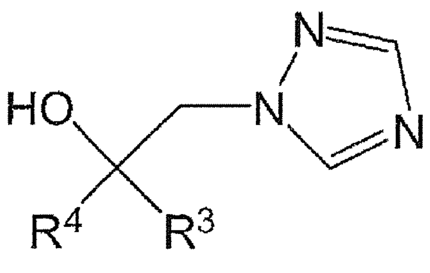

(XVII)

,

where: $R^3$ represents a cyclopropyl group in which at least one hydrogen atom is substituted with a halogen atom, a methyl group or an ethyl group or a $C_1$-$C_4$ alkyl group in which one hydrogen atom is substituted with the cyclopropyl group; and $R^4$ represents a cyclopropyl group in which at least one hydrogen atom is substituted with a halogen atom or a $C_1$-$C_3$ alkyl group in which one hydrogen atom is substituted with the cyclopropyl group.

Further, the present invention encompasses a plant disease control product including an azole derivative as

represented by general formula (I) and other active ingredient, separately, as respective combination preparations for allowing a plurality of active ingredients to be used in mixture.

Further, the present invention also encompasses a method for controlling a plant disease, including the step of carrying out a foliage treatment or a non-foliage treatment by use of the above agro-horticultural agent or the above plant disease control composition.

In the present specification, as signs specifying an identical substituent, an identical functional group or an identical atom in each formula, an identical symbol is assigned and details of substitution or the like indicated by the symbol is not repeatedly explained. For example, both $R^a$ in the general formula (I) and $R^a$ in the general formula (III) indicate an identical substituent, an identical functional group, or an identical atom.

## Advantageous Effects of Invention

An agro-horticultural agent of the present invention contains as an active ingredient at least an azole derivative represented by the above general formula (I). The agro-horticultural agent containing at least the azole derivative represented by the above general formula (I) shows a synergistic biocidal effect to many microorganisms that causes plant diseases, as compared to an effect obtained in a case where other chemical agent contained as an active ingredient in the agro-horticultural agent is solely used. Accordingly, the agro-horticultural agent of the present invention provides an effect such that the same control effect as that of a conventional chemical agent solely used can be obtained with a smaller spray amount of the chemical agent. In addition, the agro-horticultural agent of the present invention is capable of not only reducing toxicity to non-target organisms and negative effects on environment but also preventing emergence of fungicide-resistant pathogens.

Furthermore, the plant disease control composition of the present invention can exert a cooperative effect by containing two kinds of compounds and can provide a high control effect to a broad range of plant diseases.

## Brief Description of Drawings

Fig. 1 is a graph substitute for a drawing, illustrating a result of an efficacy test on wheat Fusarium head blight control of Test Example 1.

Fig. 2 is a graph substitute for a drawing, illustrating a result of an efficacy test on wheat Fusarium head blight control of Test Example 2.

Fig. 3 is an isoeffect curve in protective value of plant disease control compositions in Test Example 21.

## Description of Embodiments

The following description will discuss favorable embodiments for implementing the present invention. Note that Embodiments described below are merely examples of typical embodiments of the present invention, so that the scope of the present invention should not be limited by such embodiments.

Further, in these Embodiments, a single term is used so as to have one meaning throughout the specification, unless specifically noted otherwise. The same applies to symbols each indicating a substituent, a functional group, or an atom in general formulae, and to symbols each indicating the number of substituents, functional groups, or atoms.

### 1. Admixture

The agro-horticultural agent is a so-called admixture and contains a plurality of active ingredients. One of such active ingredients is an azole derivative represented by the following general formula (I). In other words, the agro-horticultural agent of the preset invention includes at least one compound as an active ingredient, in addition to the azole derivative represented by the general formula (I).

Further, the plant disease control composition of the present invention may be a plant disease control composition containing two kinds of triazole derivatives. One of the two kinds of triazole derivatives is a compound represented by the following formula (I); the other one is, for example, a compound represented by the general formula (XVII) described later.

Note that kinds of active ingredients contained in each of the agro-horticultural agent and the plant disease control composition of the present invention are not specifically limited as long as two or more kinds of active ingredients are contained. Specific examples of such active ingredients contained in each of the agro-horticultural agent and the plant disease control composition of the present invention will be described in detail below.

2. Azole Derivative etc.

(1) Compound (I)

The following discusses the azole derivative (hereinafter, referred to as Compound (I)) represented by the general formula (I) below. Compound (I) is contained in each of the agro-horticultural agent and the plant disease control agent of the present invention. More specifically, Compound (I) is 2-(halogenated hydrocarbon-substituted)-5-benzyl-1-azolylmethylcyclopentanol derivative. In other words, Compound (I) has a halogen-substituted hydrocarbon group at 2-position of the cyclopentane ring.

[Chem. 4]

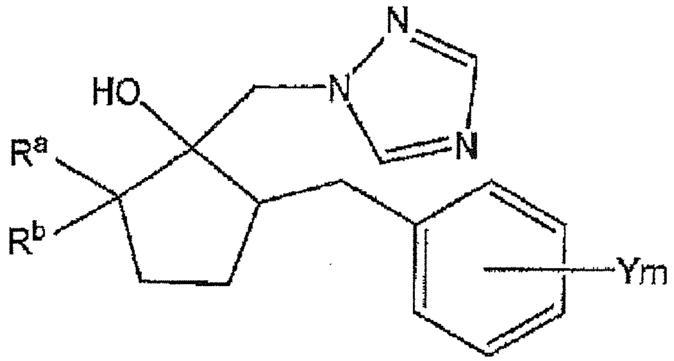

(I)

The following discusses definitions and specific examples of respective symbols ($R^a$, $R^b$, Y, and m) of Compound (I).

(1-1) $R^a$ and $R^b$

$R^a$ represents a $C_1$-$C_3$ alkyl group substituted with a halogen atom or a $C_2$-$C_3$ alkenyl group substituted with a halogen atom. $R^a$ can be, for example, a chloromethyl group a bromomethyl group, a chloroethyl group or a 2-chloro-2-propenyl group. In addition to the above example, examples of $R^a$ also encompass a dichloromethyl group, a trichloromethyl group, a 2-chloroethyl group, a 1-chloroethyl group, 2,2-dichloroethyl group, a 1,2-dichloroethyl group, a 2,2,2-trichloroethyl group, a 3-chloropropyl group, a 2,3-dichloropropyl group, a 1-chloro-1-methylethyl group, a 2-chloro-1-methylethyl group, a 2-chloropropyl group, a fluoromethyl group, a difluoromethyl group, a trifluoromethyl group, a 2-fluoroethyl group, a 1-fluoroethyl group, a 2,2-difluoroethyl group, a 1,2-difluoroethyl group, a 2,2,2-trifluoroethyl group, a 3-fluoropropyl group, a 2,3-difluoropropyl group, a 1-fluoro-1-methylethyl group, a 2-fluoro-1-methylethyl group, a 2-fluoropropyl group, a 3,3,3-trifluoropropyl group, a 2,2,3,3-tetrafluoropropyl group , 2,2,3,3,3-pentafluoropropyl group, a dibromomethyl group, a tribromomethyl group, a 2-bromoethyl group, a 1-bromoethyl group, a 2,2-dibromoethyl group, a 1,2-dibromoethyl group, a 2,2,2-tribromoethyl group, a 3-bromopropyl group, a 2,3-dibromopropyl group, a 1-bromo-1-methylethyl group, a 2-bromo-1-methylethyl group, a 2-bromopropyl group, an iodomethyl group, a diiodomethyl group, a 2-iodoethyl group, a 1-iodoethyl group, a 2,2-diiodoethyl group, a 1,2-diiodoethyl group, a 2,2,2-triiodoethyl group, a 3-iodopropyl group, a 2,3-diiodopropyl group, a 1-iodo-1-methylethyl group, a 2-iodo-1-methylethyl group, a 2-iodopropyl group, a 2-chloroethenyl group, a 2,2-dichloroethenyl group, a 3,3-dichloro-2-propenyl group, a 2,3-dichloro-2-propenyl group, a 2-fluoroethenyl group, a 2,2-difluoroethenyl group, a 2-fluoro-2-propenyl group, a 3,3-difluoro-2-propenyl group, a 2,3-difluoro-2-propenyl group, a 2-bromoethenyl group, a 2,2-dibromoethenyl group, a 2-bromo-2-propenyl group, a 3,3-dibromo-2-propenyl group, a 2,3-dibromo-2-propenyl group, a 2-iodoethenyl group, a 2,2-diiodoethenyl group, a 2-iodo-2-propenyl group, a 3,3-diiodo-2-propenyl group, and a 2,3-diiodo-2-propenyl group. $R^b$ represents a $C_1$-$C_2$ alkyl group unsubstituted or substituted with a halogen atom. $R^b$ can be, for example, a methyl group, an ethyl group or a chloromethyl group. In addition to the above example, examples of $R^b$ encompass a dichloromethyl group, a trichloromethyl group, a 2-chloroethyl group, a 1-chloroethyl group, 2,2-dichloroethyl group, a 1,2-dichloroethyl group, a 2,2,2-trichloroethyl group, a fluoromethyl group, a difluoromethyl group, a trifluoromethyl group, a 2-fluoroethyl group, a 1-fluoroethyl group, a 2,2-difluoroethyl group, a 1,2-difluoroethyl group, a 2,2,2-trifluoroethyl group, a dibromomethyl group,

a tribromomethyl group, a 2-bromoethyl group, a 1-bromoethyl group, a 2,2-dibromoethyl group, a 1,2-dibromoethyl group, a 2,2,2-tribromoethyl group, an iodomethyl group, a diiodomethyl group, a 2-iodoethyl group, a 1-iodoethyl group, a 2,2-diiodoethyl group, a 1,2-diiodoethyl group, and a 2,2,2-triiodoethyl group.

(1-2) Y and m

Y represents a halogen atom. Y can be, for example, a chlorine atom or a fluorine atom. In addition to the above example, examples of Y encompass a bromine atom and an iodine atom. Further, m represents the number 0 or 1. When m is 1, Y binds to the 4-position of a benzene ring (in regard to Y, a carbon atom bound to a methylene group is defined to be the 1-position of the benzene ring).

(1-3) Stereoisomer

Compound (I) has stereoisomers (Type C and Type T) which are represented by the following general formulae (I-C) and (I-T). Compound (I) may be any one of isomers, or a mixture thereof. Note that, in the following general formulae, when a hydroxy group at 1-position of a cyclopentane ring and a benzyl group at 5-position of the cyclopentane ring are in a *cis* configuration, a relative steric configuration is (I-C); meanwhile, when the hydroxy group at 1-position of the cyclopentane ring and the benzyl group at 5-position of the cyclopentane ring are in a *trans* configuration, a relative steric configuration is (I-T). Note that steric configurations of $R^a$ and $R^b$ at 2-position of the cyclopentane ring may be reversed from $R^a$ and $R^b$ as shown in the relative steric configurations represented by the general formulae (I-C) and (I-T) below.

[Chem. 5]

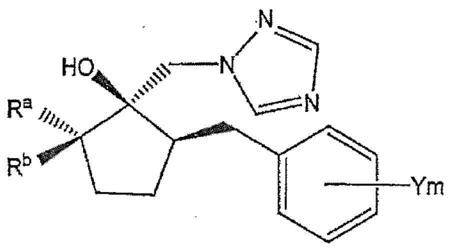

(I-C)

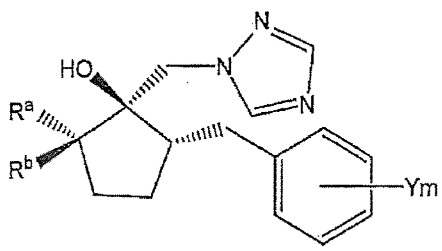

(I-T)

(1-4) Specific Examples

Specific examples of Compound (I) are shown below.

[Chem. 6]

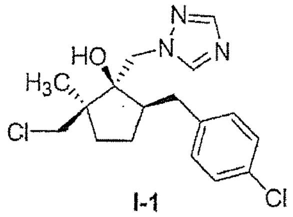
I-1

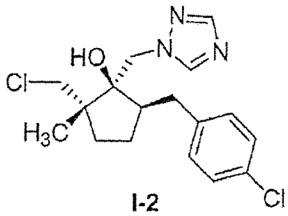
I-2

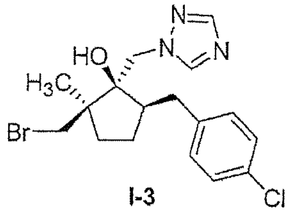
I-3

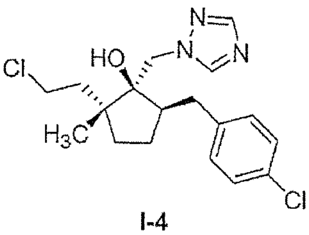
I-4

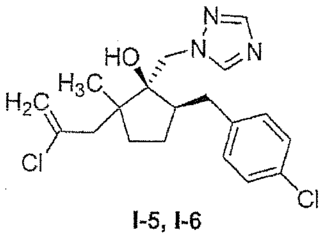
I-5, I-6

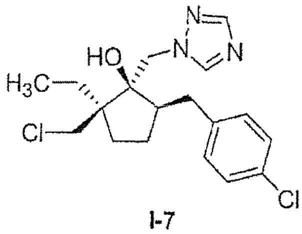
I-7

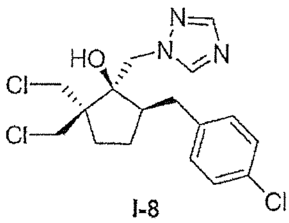
I-8

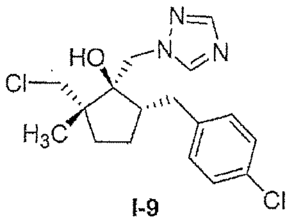
I-9

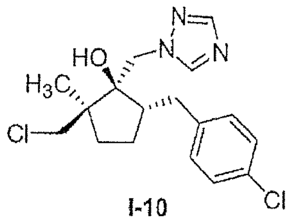
I-10

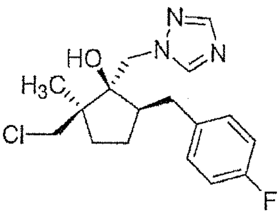
I-11

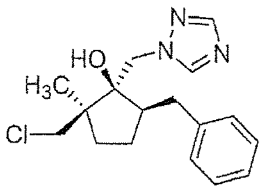
I-12

(2) Ergosterol Biosynthesis Inhibitor Compound

The following discusses a case in which a compound (ergosterol biosynthesis inhibitor compound) having an ergosterol biosynthesis inhibiting (EBI) ability is contained as an active ingredient of the agro-horticultural agent according to the present invention. The agro-horticultural agent of the present invention contains, as active ingredients, an ergosterol biosynthesis inhibitor compound shown below and Compound (I), and thereby, the agro-horticultural agent of the present invention is capable of providing, with a smaller spray amount, the same effect as compared to an agro-horticultural agent containing only the ergosterol biosynthesis inhibitor compound.

Examples of the ergosterol biosynthesis inhibitor compound encompass azaconazole, biteltanol, bromuconazole, difenoconazole, cyproconazole, diniconazole, fenarimol, fenbuconazole, fenpropidine, fenpropimorph, fluquinconazole, flusilazole, flutriafol, hexaconazole, imazalil, imibenconazole, metconazole, ipconazole, myclobutanil, nuarimol, oxpoconazole, pefurazoate, penconazole, prochloraz, propiconazole, prothioconazole, epoxiconazole, simeconazole, spiroxamine, tebuconazole, tetraconazole, triadimefon, triadimenol, triflumizole, triforine, triticonazole, fenhexamid, dodemorph and tridemorph. Among these examples, the ergosterol biosynthesis inhibitor compound is preferably an azole compound or fenpropimorph, and more preferably, metconazole, epoxiconazole, ipconazole, prothioconazole, prochloraz, tebuconazole or fenpropimorph. An agro-horticultural agent containing metconazole, epoxiconazole, ipconazole, prothioconazole, prochloraz, tebuconazole or fenpropimorph shows a particularly high activity.

(2-1) Metconazole

Metconazole (see the structural formula below) is known as a triazole compound that shows a high control effect to diseases on wheat and the like, fruits, vegetables, brushwood, rice, and the like. Note that metconazole can be produced by a conventionally known method.

[Chem. 7]

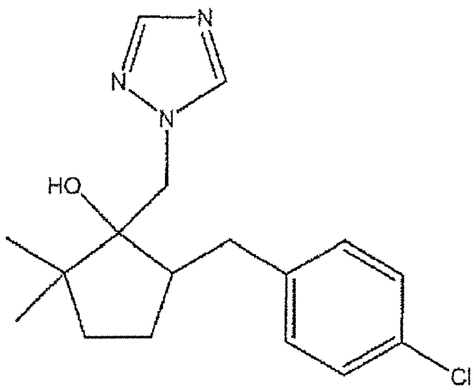

(2-2) Epoxiconazole

Epoxiconazole (see the structural formula below) is known as a triazole compound that shows a high control effect to diseases on wheat and the like, and the like. Note that epoxiconazole can be produced by a conventionally known method.

[Chem. 8]

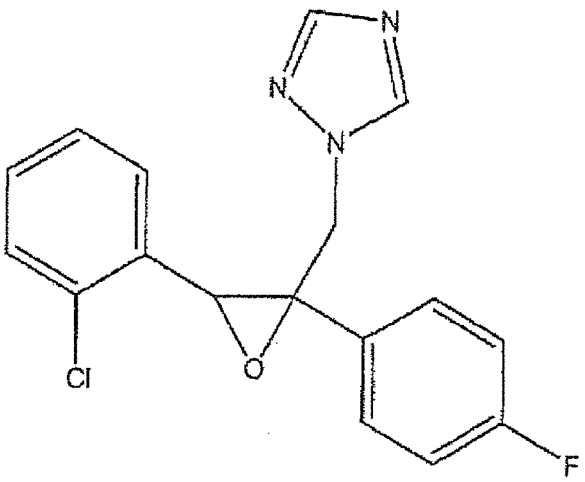

(3) SDHI Compound

Further, the agro-horticultural agent of the present invention may contain, as an active ingredient, a compound (also referred to as a SDHI compound) having succinate dehydrogenase inhibiting ability.

The SDHI compound may be contained in place of the above-described azole compound, or in addition to the above-described azole compound. The agro-horticultural agent of the present invention contains, as active ingredients, the SDHI compound below and Compound (I), and thereby, the agro-horticultural agent of the present invention is capable of providing, with a smaller spray amount, the same effect as compared to an agro-horticultural agent containing

only the SDHI compound.

Examples of the SDHI compound encompass bixafen, boscalid, penthiopyrad, isopyrazam, fluopyram, furametpyr, thifluzamide, flutolanil, mepronil, fenfuram, carboxin, oxycarboxin, and benodanil. Among these examples, bixafen (see the structural formula below) is particularly preferable. Bixafen is known as an SDHI compound that shows a high control effect to diseases on vegetables such as cucumber. Note that bixafen can be produced by a conventionally known method. The agro-horticultural agent containing bixafen, boscalid, penthiopyrad, isopyrazam, fluopyram, furametpyr or benodanil shows a particularly high activity.

[Chem. 9]

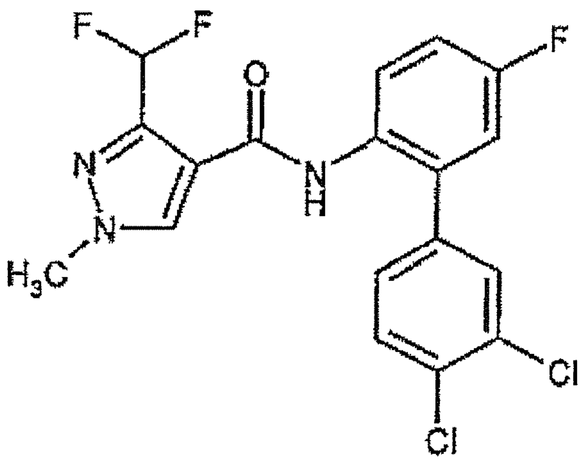

(4) Strobilurin Compound

Further, the agro-horticultural agent of the present invention may contain, as an active ingredient, a strobilurin compound. The strobilurin compound is a compound inhibiting an electron transfer system of pathogens.

The strobilurin compound may be contained in place of the above-described azole compound and the above-described SDHI compound or in addition to at least either one of the above-described azole compound and the above-described SDHI compound. The agro-horticultural agent of the present invention contains, as active ingredients, the strobilurin compound below and Compound (I), and thereby is capable of providing, with a smaller spray amount, the same effect as compared to an agro-horticultural agent containing only the strobilurin compound.

Examples of the strobilurin compound encompass pyraclostrobin, azoxystrobin, dimethoxystrobin, famoxadone, fluoxastrobin, metominostrobin, orysastrobin, pyraclostrobin, trifloxystrobin, dimoxystrobin, fenamidone, and kresoxim-methyl. Among these examples, the strobilurin compound is preferably pyraclostrobin (see the structural formula below), azoxystrobin or kresoxim-methyl. Pyraclostrobin is known as a strobilurin compound that shows a high control effect to a broad range of diseases on rice, wheat and the like, vegetables, fruits and the like. Note that pyraclostrobin may be produced by a conventionally known method. An agro-horticultural agent containing pyraclostrobin, azoxystrobin or kresoxim-methyl shows a particularly high activity.

[Chem. 10]

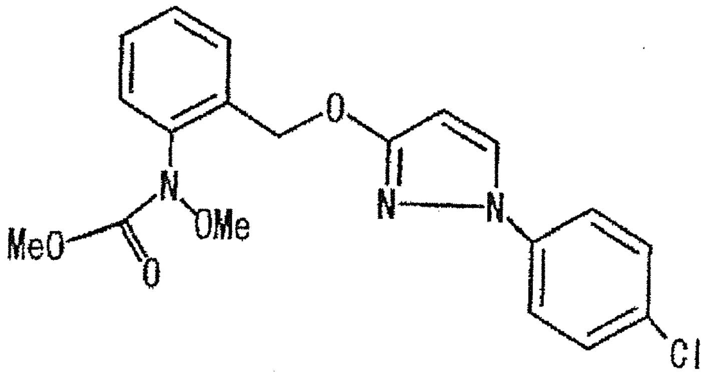

(5) Benzimidazole Compound

Further, the agro-horticultural agent of the present invention may contain, as an active ingredient, a benzimidazole compound.

The benzimidazole compound may be contained in place of the above-described azole compound, the above-described SDHI compound and the above-described strobilurin compound or in addition to at least any one of the above-described azole compound, the above-described SDHI compound and the above-described strobilurin compound. The agro-horticultural agent of the present invention contains, as active ingredients, the benzimidazole compound below and Compound (I), and thereby is capable of providing, with a smaller spray amount, the same effect as compared to an agro-horticultural agent containing only the benzimidazole compound.

Examples of the benzimidazole compound encompass benomyl, carbendazim, fuberidazole, thiabendazole, thiophanate-methyl, and diethofencarb. Among these examples, the benzimidazole compound is preferably thiophanate-methyl.

(6) Metalaxyl and Chlorothalonil

Further, the agro-horticultural agent of the present invention may contain, as an active ingredient, at least one of metalaxyl and chlorothalonil. Metalaxyl and chlorothalonil each may be contained in place of the above-described azole compound, the above-described SDHI compound, the above-described strobilurin compound and the above-described benzimidazole compound or in addition to at least any one of the above-described azole compound, the above-described SDHI compound and the above-described strobilurin compound and the above-described benzimidazole compound. The agro-horticultural agent of the present invention contains, as active ingredients, at least one of metalaxyl and chlorothalonil and Compound (I), and thereby is capable of providing, with a smaller spray amount, the same effect as compared to an agro-horticultural agent containing only metalaxyl or chlorothalonil.

As described above, in addition to the azole derivative represented by the above general formula (I), the agro-horticultural agent of the present invention preferably contains, as the active ingredients, at least one compound selected from the compound having an ergosterol biosynthesis inhibiting ability, the compound having a succinate dehydrogenase inhibiting ability and the strobilurin compound. The compound having an ergosterol biosynthesis inhibiting ability can be an azole compound and particularly preferably at least either one of metconazole and epoxiconazole. Further, the compound having a succinate dehydrogenase inhibiting ability is preferably bixafen. Furthermore, the strobilurin compound is preferably pyraclostrobin. The agro-horticultural agent containing such a compound shows a particularly high activity.

The number of kinds of the active ingredients contained in the agro-horticultural agent of the present invention can be three or more. In such a case, the agro-horticultural agent of the present invention contains at least two kinds of the above-described compounds in addition to Compound (I). It is certainly possible that the agro-horticultural agent of the present invention contains compounds of different systems. However, preferably, the agro-horticultural agent of the present invention contains at least any one of metconazole, epoxiconazole, bixafen and pyraclostrobin so that an effect of Compound (I) is utilized.

Note the above compounds are merely examples, and the agro-horticultural agent of the present invention can contain, as an active ingredient, any compound that has a similar activity other than the compounds described above.

(4) Compound (XVII)

The plant disease control composition of the present invention may contain, as an active ingredient, a compound (hereinafter, referred to as "Compound (XVII)") represented by the formula (XVII) below, in addition to Compound (I).

[Chem. 11]

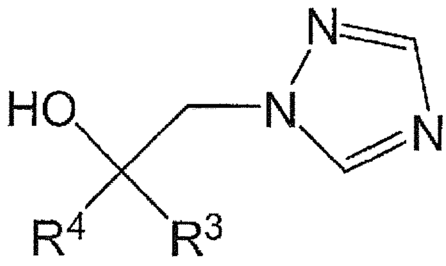

(XVII)

(where: $R^3$ represents a cyclopropyl group in which at least one hydrogen atom is substituted with a halogen atom, a methyl group or an ethyl group or a $C_1$-$C_4$ alkyl group in which one hydrogen atom is substituted with the cyclopropyl group; and $R^4$ represents a cyclopropyl group in which at least one hydrogen atom is substituted with a halogen atom or a $C_1$-$C_3$ alkyl group in which one hydrogen atom is substituted with the cyclopropyl group.)

In the formula (XVII), $R^3$ represents a cyclopropyl group in which at least one hydrogen atom is substituted with a halogen atom, a methyl group or an ethyl group or a $C_1$-$C_4$ alkyl group in which one hydrogen atom is substituted with the cyclopropyl group. In particular, $R^3$ is preferably a cyclopropyl group in which at least one hydrogen atom is substituted with a halogen atom or a methyl group or a $C_1$-$C_3$ alkyl group in which one hydrogen atom is substituted with the cyclopropyl group. Examples of the $C_1$-$C_4$ alkyl group in which at least one hydrogen atom is substituted with the cyclopropyl group encompass a methyl group, an ethyl group, an n-propyl group, an isopropyl group, an n-butyl group, a sec-butyl group and a tert-butyl group.

Examples of the halogen atom contained in an organic group represented by $R^3$ encompass a fluorine atom, a chlorine atom, a bromine atom and an iodine atom. In particular, the halogen atom is preferably a chlorine atom or a bromine atom.

$R^4$ represents a cyclopropyl group in which at least one hydrogen atom is substituted with a halogen atom or a $C_1$-$C_3$ alkyl group in which one hydrogen atom is substituted with the cyclopropyl group. In particular, $R^4$ is preferably (i) a cyclopropyl group in which one or two hydrogen atoms each are substituted with a halogen atom or (ii) a methyl group or ethyl group where one hydrogen atom is substituted with the cyclopropyl group.

Examples of the halogen atom included in an organic group represented by $R^4$ encompass a fluorine atom, a chlorine atom, a bromine atom and an iodine atom. In particular, the halogen atom is preferably a chlorine atom or a bromine atom.

Note that in Compound (XVII), a carbon atom to which a hydroxy group is bound becomes an asymmetric carbon in a case where $R^3$ and $R^4$ are different from each other. In other words, in Compound (XVII), an enantiomer is present. Further, functional groups represented by $R^3$ and $R^4$ each may include an asymmetric carbon atom. In this case, there are a plurality of asymmetric carbon atoms including the above-described asymmetric carbon atom. This means that diastereomer is present in Compound (XVII). In other words, Compound (XVII) includes both a compound that contains one of the above-described isomers and a compound that contains the above-described isomers at a given ratio.

As one embodiment of Compound (XVII), there is a compound represented by the formula (XVIIa) below, for example.

[Chem. 12]

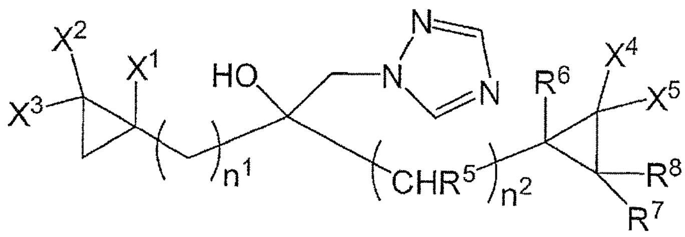

(XVIIa)

Here, $X^1$ to $X^3$ each represent a halogen atom or a hydrogen atom and at least one of $X^1$ to $X^3$ is a halogen atom. When $X^1$ is a hydrogen atom, both $X^2$ and $X^3$ are preferably a halogen atom.

$R^5$ represents a hydrogen atom or a methyl group. In a case where $n^2$ is 2, two $R^5$ may be different from each other.

$R^6$ to $R^8$ each represent a hydrogen atom, a halogen atom or a methyl group, and preferably, a hydrogen atom or a halogen atom.

$X^4$ and $X^5$ each represent a halogen atom. Preferably, $X^4$ and $X^5$ are an identical halogen atom.

Further, $n^1$ represents 0 or 1; $n^2$ represents 0, 1 or 2.

The following provides specific examples of Compound (XVII).

[Chem. 13]

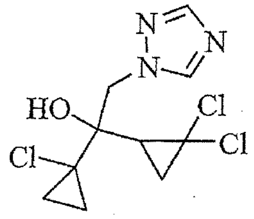

(XVII-1)

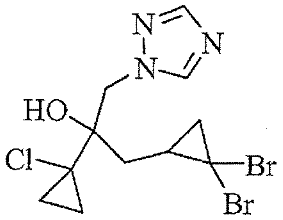

(XVII-2)

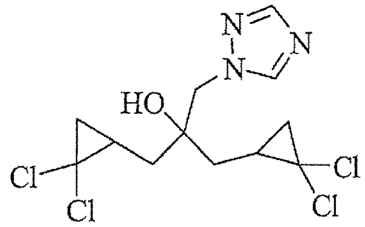

(XVII-3)

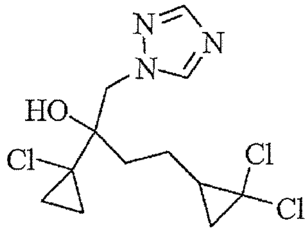

(XVII-4)

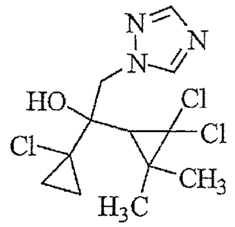

(XVII-5)

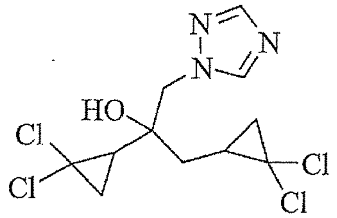

(XVII-6)

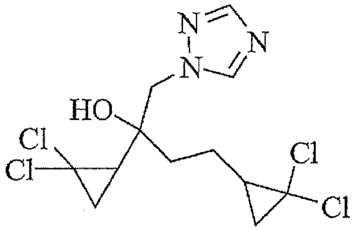

(XVII-7)

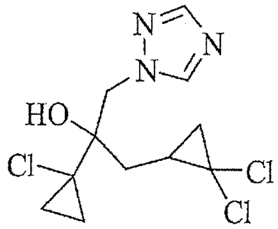

(XVII-8)

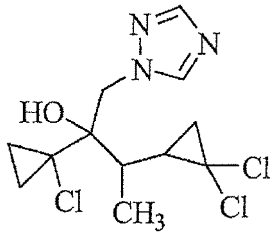

(XVII-9)

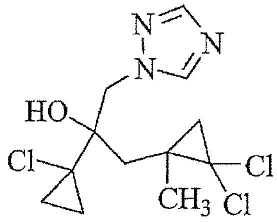

(XVII-10)

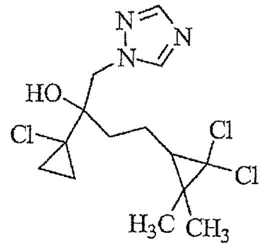

(XVII-11)

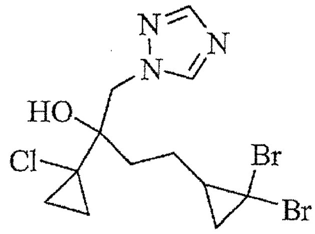

(XVII-12)

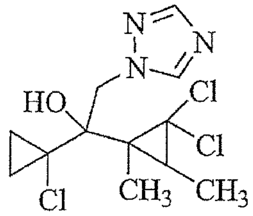

(XVII-13)

Compound (I) is a compound as described above. However, in a case where Compound (I) is used in the plant disease control composition of the present invention, a haloalkyl group in $R^a$ of Compound (I) is more preferably a $C_1$ or $C_2$ haloalkyl group, and particularly preferably, a $C_1$ haloalkyl group.

3. Production Method of Compound (I)

(1) First Production Method of Compound (I)

(1-1) Step 1A

Next, the following discusses specific production methods of Compound (I). One embodiment of a production method of Compound (I) includes the step (Step 1A) of obtaining a 2-(halogenated hydrocarbon-substituted)-5-benzyl-1-azolylmethylcyclopentanol derivative represented by the general formula (Ia) by replacing, with a halogen atom, a predetermined functional group in a compound represented by the following general formula (II) (see the following Reaction Formula (1)). Note that the compound represented by the general formula (II) is a compound having a leaving group on a substituent at 2-position of a cyclopentane ring. Hereinafter, a compound represented by the general formula $\alpha$ is referred to as "Compound $\alpha$". For example, the compound represented by the general formula (Ia) is referred to as "Compound (Ia)".

Reaction Formula (1)

[Chem. 14]

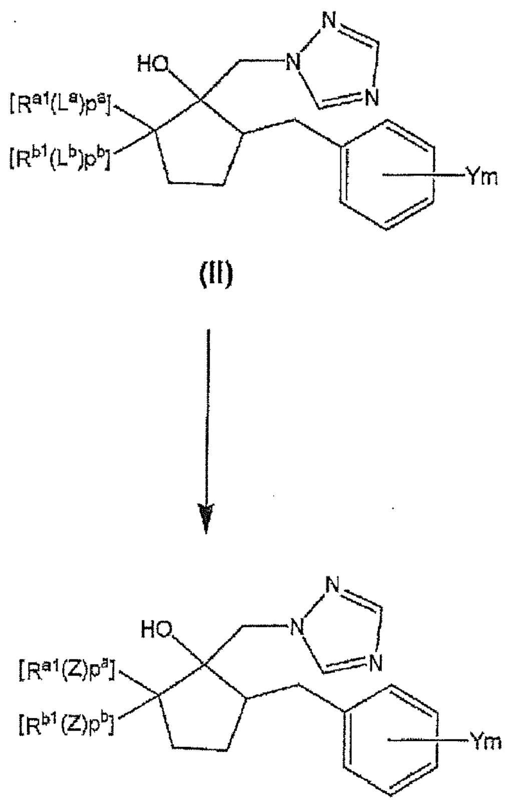

(II)

(Ia)

Here, Y and m are the same as described above.

Z indicates a halogen atom such as a chlorine atom or a bromine atom.

$R^{a1}$ represents a methyl group, an ethyl group, a propyl group or a 2-propenyl group. $R^{b1}$ represents a methyl group or an ethyl group.

$L^a$ and $L^b$ represents a leaving group that can be substituted with a halogen atom.

Further, $p^a$ represents the number of $L^a$ on $R^{a1}$ and $p^b$ represents the number of $L^b$ on $R^{b1}$. Here, "$p^a$+$p^b$" is preferably 1 or 2.

Examples of the method for substituting a leaving group with a halogen atom encompass (a) a method according to which a compound having a substituted sulfonyloxy group such as a p-toluenesulfonyloxy group or a methanesulfonyloxy group is substituted with a halogenated salt in a solvent, (b) a method according to which substitution with a hydroxy group or an alkoxy group is carried out by use of hydrochloric acid or hydrobromic acid, (c) a method according to which substitution with a hydroxy group is carried out by use of a halogenated phosphorus, and (d) a method according to which a hydroxy group is reacted with a thionyl halide.

Among the above-described substitution methods (a) to (d), particularly, the method (a) is preferable.

(1-2) Step 1B

Among Compounds (II) used in Step 1A, a compound used in the method (a) above is a compound represented by the following general formula (IIa). Compound (IIa) is obtained by the step ("Step 1B") of reacting a compound represented by the following general formula (VI) and substituted sulfonyl chloride (Compound XV) as represented by the following general formula (XV) (See Reaction Formula (2)). Compound (IIa) is a 5-benzyl-1-azolylmethylcyclopentanol derivative having, at 2-position, a substituent substituted with a substituted-sulfonyloxy group. Compound (VI) is a 5-benzyl-1-azolylmethylcyclopentanol derivative having a hydroxy group-substituted substituent at 2-position.

Reaction Formula (2)

[Chem. 15]

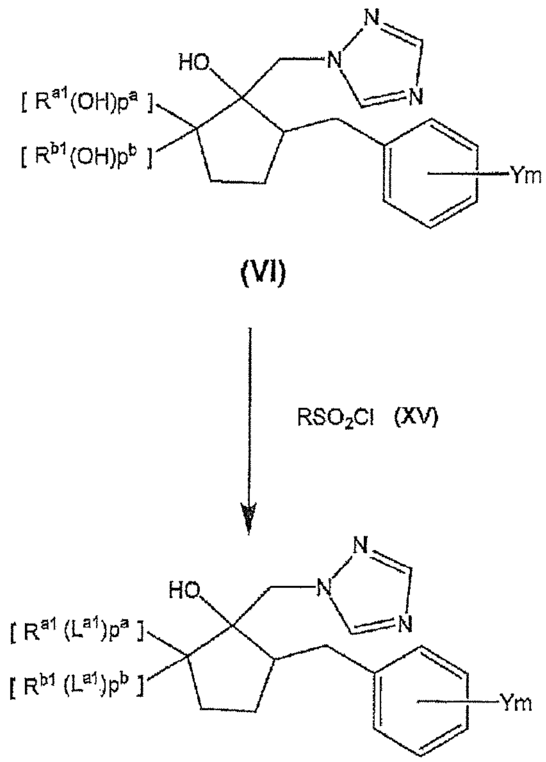


(VI)

(IIa)

Here, Y, m, $R^{a1}$, $R^{b1}$, $p^a$ and $p^b$ are the same as described above. Further, $L^{a1}$ and $L^{b1}$ each represent a substituted sulfoxy group that can be substituted with a halogen atom.

R in the general formula (XV) represents a lower alkyl group, a phenyl group, or a naphthyl group. The lower alkyl group may for example be a methyl group, an ethyl group, an n-propyl group, an isopropyl group, and a trifluoromethyl group. In the phenyl group and the naphthyl group, a hydrogen atom may be substituted. Examples of the phenyl group and the naphthyl group in which a hydrogen atom may be substituted encompass a 4-methylphenyl group, a 2-nitrophenyl group, and a 5-dimethylaminonaphthyl group. Among these, the methyl group and the 4-methylphenyl group are preferred.

An amount of Compound (XV) used per mole of Compound (VI) is for example, 0.5 mole to 10 moles and preferably, 0.8 mole to 5 moles. Though reaction may proceed without addition of a base, it is preferable to add a base in order to remove hydrogen chloride produced in the reaction.
The base to be used here is not particularly limited.
A reaction temperature can be set as appropriate, depending on a kind of solvent, base, and the like to be used.

(1-3) Step 1C

Compound (VI) used in Step 1B may be produced by a conventionally known method (see Patent Literature 4, for example). However, a compound represented by the general formula (VIa) below including a hydroxymethyl group and an alkyl group at 2-position is produced preferably by a synthesis method as follows.
First, an oxirane derivative represented by the following general formula (VIII) is obtained by converting a carbonyl compound represented by the following general formula (IX) into an oxirane. Next, thus obtained Compound (VIII) is reacted with 1,2,4-triazole represented by the following general formula (IV) so as to give a compound represented by the following general formula (VII). Then, Compound (VIa) is synthesized by deprotection of a protective group of a hydroxy group represented by G in the Compound (VII). This series of reaction steps ("Step 1C") is shown by the following Reaction Formula (3).

Reaction Formula (3)

[Chem. 16]

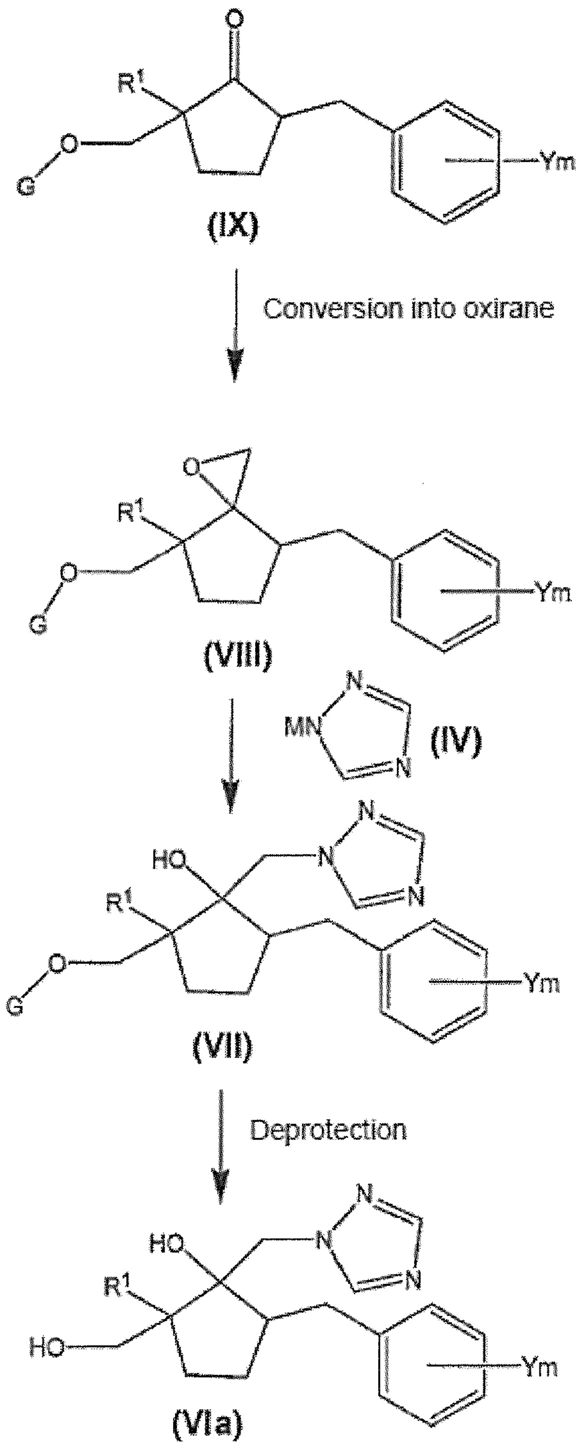


(IX) (VIII) (IV) (VII) (VIa)

Here, Y and m are the same as described above.

Further, $R^1$ is identical to the above-described $R^a$ and $R^b$, and therefore, detailed examples thereof are omitted here.

G represents a protective group, and is not particularly limited, provided that Compound (VIa) can be produced from Compound (VII). Examples of the protective group encompass: alkoxymethyl groups such as a methoxymethyl group and an ethoxymethyl group; lower alkyl groups such as a t-buthyl group and a methyl group; and substituted or

unsubstituted benzyl groups.

M represents a hydrogen atom or an alkali metal.

(1-3-1) Step 1C1

The following discusses the step (Step 1C1) of obtaining Compound (VIII) by converting Compound (IX) into an oxirane.

As a preferred first method of synthesizing Compound (VIII), there is a method according to which Compound (IX) is reacted with sulfur ylide in a solvent. Examples of sulfur ylide encompass sulfonium methylides such as dimethylsulfonium methylide and sulfoxonium methylides such as dimethylsulfoxonium methylide.

The sulfonium methylides and the sulfoxonium methylides employed can be prepared by reacting, in a solvent, a sulfonium salt (for example, trimethylsulfonium iodide or trimethylsulfonium bromide) or a sulfoxonium salt (for example, trimethylsulfoxonium iodide and trimethylsulfoxonium bromide) with a base.

An amount of sulfonium methylides or sulfoxonium methylides to be used per mole of Compound (IX) is preferably 0.5 mole to 5 moles, and more preferably 0.8 mole to 2 moles.

The solvent and the base to be used to prepare sulfonium methylides or sulfoxonium methylides are not particularly limited.

A reaction temperature and a reaction time can be set as appropriate in accordance with kinds of the solvent, Compound (IX), the sulfonium salt or sulfoxonium salt, the base, etc. to be used.

(1-3-2) Step 1C2

Next, the following discusses the step (Step 1C2) of obtaining Compound (VII) by reacting Compound (VIII) and Compound (IV) in the present Step 1C.

Compound (VII) is produced by mixing Compound (VIII) with Compound (IV) in a solvent, and thereby forming a carbon-nitrogen bond between a carbon atom constituting an oxirane ring in an oxirane derivative (Compound (VIII)) and a nitrogen atom in 1,2,4-triazole.

The solvent employed is not particularly limited, and can be, for example, an amide such as N-methylpyrrolidone or N,N-dimethylformamide.

The amount of Compound (IV) employed per mole of Compound (VIII) is preferably 0.5 mole to 10 moles, and more preferably 0.8 mole to 5 moles. A base may be added if desired.

A reaction temperature may be set as appropriate in accordance with kinds of the solvent, the base, and the like to be used.

Note that for details of the steps of a method for concurrent conversion into an azole and production of an oxirane derivative in the production of the azolylmethylcycloalkanol derivative, see Patent Literature 5.

(1-3-3) Step 1C3

The following description will discuss the step (Step 1C3) of obtaining Compound (VIa) by deprotecting a protective group of Compound (VII) in Step 1C.

Note that though a preferable condition of the deprotection differs depending on a kind of the protective group, the deprotection is carried out preferably in a solvent under an acidic condition involving hydrogen chloride or sulfuric acid and the like in a case where an alkoxymethyl group such as a methoxymethyl group or an ethoxyethyl group, or a lower alkyl group such as a t-butyl group or a methyl group is used.

The acid preferably employed here is a halogenated hydrogen such as hydrogen chloride or an inorganic acid such as sulfuric acid. An amount of such an acid employed is not particularly limited.

A reaction temperature is preferably 0°C to 200°C, and more preferably a room temperature to 100°C. A reaction time is preferably 0.1 hour to several days, and more preferably 0.5 hour to 2 days.

(1-4)Step 1D

Compound (IX) for use in Step 1C can be synthesized preferably by a method shown below.

That is, a keto ester compound represented by the following general formula (XII) is hydroxymethylated to give a compound represented by the following general formula (XI). Then, for example, a protective group such as a methoxymethyl group or a t-butyl group is introduced into the hydroxy group in Compound (XI) to effect derivatization into a compound represented by the following general formula (X). Thereafter, Compound (X) is hydrolyzed/decarbonated to give a carbonyl compound represented by the following general formula (IX). A series of these reaction steps ("Step 1D") is represented by the following reaction formula (5).

Reaction Formula (5)

[Chem. 17]

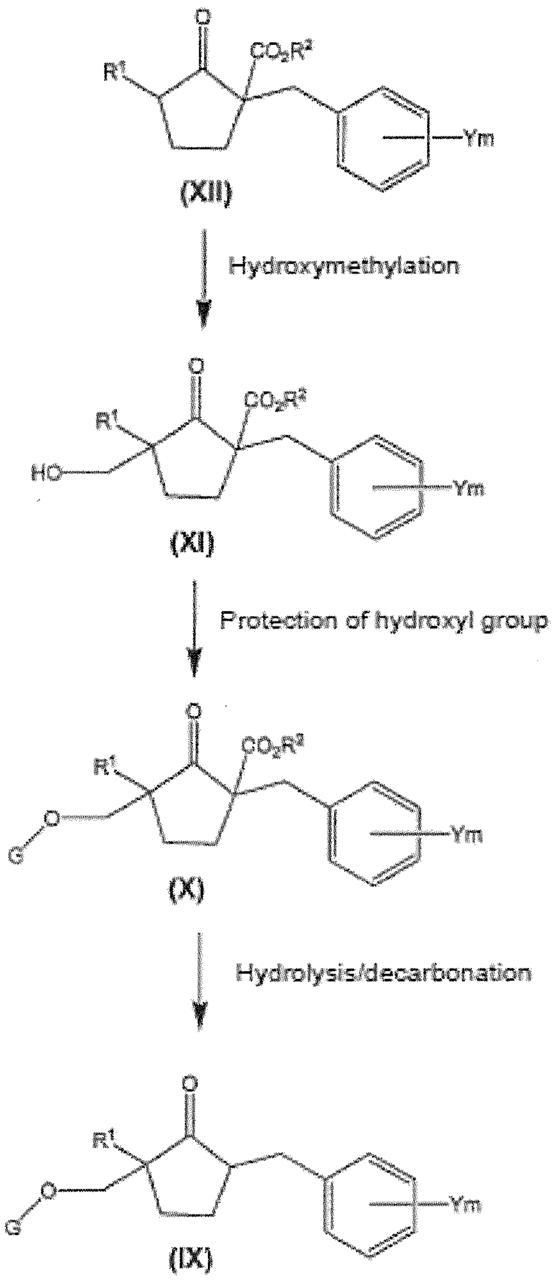


Here, Y, m, $R^1$, and G are the same as described above.
$R^2$ represents a $C_1$-$C_4$ alkyl group.

(1-4-1) Step 1D1

In the present Step 1D, it is possible to employ a method involving reaction of Compound (XII) with formaldehyde in the presence of a base in a solvent in the step (Step 1D1) of obtaining Compound (XI) by hydroxymethylation of Compound (XII).
An amount of formaldehyde used per mole of Compound (XII) is, for example, 0.5 mole to 20 moles, and

preferably 0.8 to 10 moles.

The base can for example be, but not limited to, an alkali metal carbonate such as sodium carbonate and potassium carbonate or a an alkali metal hydroxide such as sodium hydroxide. The amount of the base employed per mole of Compound (XII) is, for example, 0.1 mole to 10 moles, and preferably 0.2 mole to 5 moles.

A reaction temperature is preferably 0°C to 250°C, and more preferably 0 to 100°C. A reaction time is preferably 0.1 hour to several days, and more preferably 0.5 hour to 2 days.

Note that Compound (XII) used here may be produced by a conventionally known method (for example, a method disclosed in Patent Literature 1).

(1-4-2) Step 1D2

Next, the following discusses the step (Step 1D2) of obtaining Compound (X) by introducing a protective group into a hydroxy group of Compound (XI) in Step 1D.

The protective group for protecting the hydroxy group is not specifically limited, but the protective group is preferably an alkoxymethyl group such as a methoxymethyl group or an ethoxymethyl group or a lower alkyl group such as a t-butyl group. Preferably, introduction of any of these protective groups is carried out under an acid catalyst condition, (a) by an acetal exchange of the hydroxy group in Compound (XI) with use of formaldehyde dialkylacetal in the case of introduction of an alkoxymethyl group or (b) by addition of the hydroxy group in Compound (XI) with use of isobutene in the case of introduction of a t-butyl group.

(1-4-3) Step 1D3

Next, the following discusses the step (Step 1D3) of obtaining Compound (IX) by hydrolysis and decarbonization of Compound (X) in the present Step 1D.

The reaction in Step 1D3 is preferably carried out in a solvent in the presence of a base. As the base, for example, an alkali metal base such as sodium hydroxide and potassium hydroxide can be used. An amount of the base employed per mole of Compound (X) is, for example, 0.1 mole to 50 moles, and preferably 0.2 mole to 20 moles.

Examples of the solvent encompass (i) water, (ii) water combined with, for example, an alcohol, (iii) a solvent composition consisting of solvents (such as water and toluene) which do not form a homogenous layer (when a solvent which does not form a homogenous layer is used, a phase transfer catalyst (e.g., a customary quaternary ammonium salt) may preferably be used in a reaction system).

A reaction temperature is preferably 0°C to a reflux temperature, and more preferably a room temperature to the reflux temperature. A reaction time is preferably 0.1 hour to several days, and more preferably 0.5 hour to 24 hours.

(2) Second Production Method of Compound (I)

(2-1) Step 2A

The following discusses another embodiment of the production method of the present invention. The present embodiment includes the step (Step 2A) of obtaining Compound (I) by reacting, with Compound (IV), an oxirane derivative represented by the following general formula (III) obtained by converting a carbonyl compound represented by the following general formula (V) into an oxirane (See the following Reaction Formula (6)).

Reaction Formula (6)

[Chem. 18]

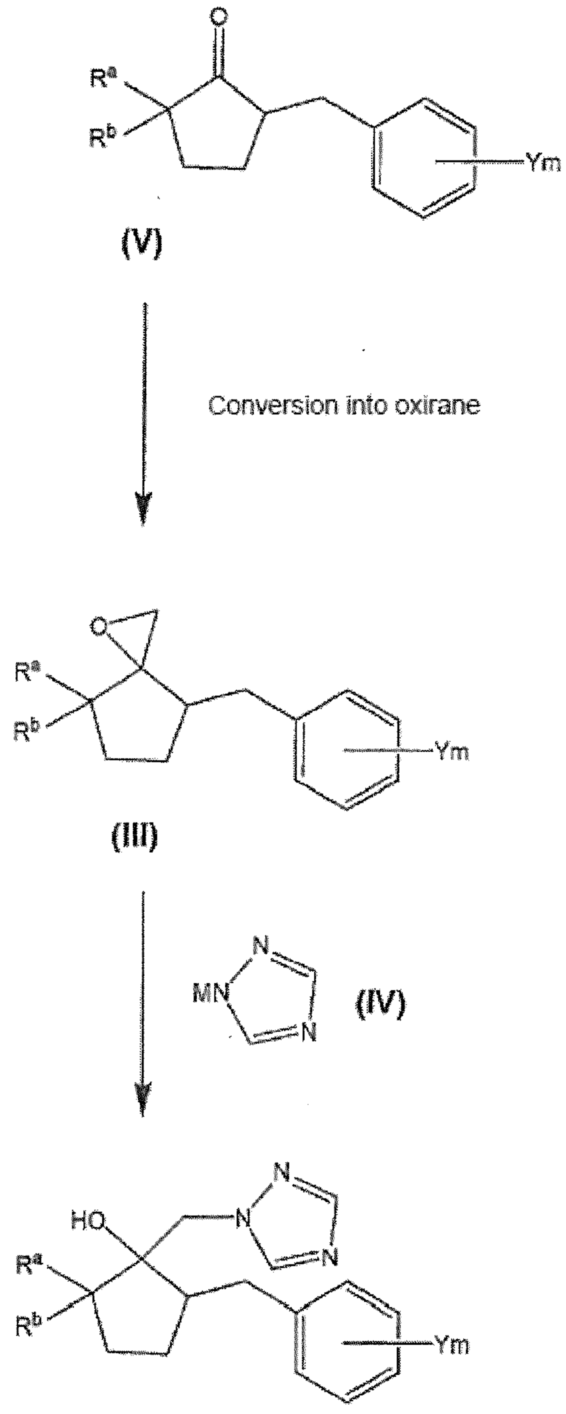


(V)

(III)

(IV)

(I)

Here, $R^a$, $R^b$, Y, m, and M are the same as described above.

(2-1-1) Step 2A1

First, the following discusses a reaction (Step 2A1) of obtaining Compound (III) by converting Compound (V) into an oxirane.

A first preferred method of synthesizing Compound (III) is, for example, a method in which Compound (V) is

reacted with sulfur ylide in a solvent. The sulfur ylide encompasses sulfonium methylides such as dimethylsulfonium methylide or sulfoxonium methylides such as dimethylsulfoxonium methylide.

The sulfonium methylides and the sulfoxonium methylides can be prepared by reacting, in a solvent, a sulfonium salt (e.g., trimethylsulfonium iodide and trimethylsulfonium bromide) or a sulfoxonium salt (e.g., trimethylsulfoxonium iodide and trimethylsulfoxonium bromide) with a base. The base here is not particularly limited.

An amount of any of the sulfonium methylides and the sulfoxonium methylides per mole of Compound (V) is 0.5 mole to 5 moles, and preferably 0.8 mole to 2 moles.

The solvent is not specifically limited.

A reaction temperature and a reaction time can be set as appropriate in accordance with kinds of the solvent, Compound (V), the sulfonium salt or sulfoxonium salt, the base, and the like to be used.

A second preferred method of synthesizing Compound (III) is, for example, a method in which Compound (V) is first reacted with samarium iodide and diiodomethane in a solvent and then treat thus reacted Compound (V) with a base. The base to be used here is not particularly limited and for example, the base may be sodium hydroxide.

An amount of samarium iodide per mole of Compound (V) is for example, 0.5 mole to 10 moles and preferably 1 mole to 6 moles. An amount of diiodomethane per mole of Compound (V) is, for example, 0.5 mole to 10 mole, and preferably 0.8 mole to 5 mole. The samarium iodide can be produced by reacting, in an anhydrous solvent, 1,2-diiodoethane or diiodomethane with metallic samarium.

An amount of the base relative to Compound (V) is not particularly limited. Further, in a case where the compound thus reacted is treated with a base, the solvent does not need to be an anhydrous one. Accordingly, the solvent may be for example, a sodium hydroxide aqueous solution.

A reaction temperature and a reaction time can be set as appropriate in accordance with kinds of the solvent, Compound (V), the base, etc. to be used.

(2-2-2) Step 2A2

Next, the following discusses the step (Step 2A2) of obtaining Compound (I) from Compound (III) and Compound (IV).

Compound (I) is produced by mixing Compound (III) with Compound (IV) in a solvent, and thereby forming a carbon-nitrogen bond between a carbon atom in an oxirane ring in an oxirane derivative and a nitrogen atom in 1,2,4-triazole.

The solvent is not particularly limited.

The amount of Compound (IV) employed per mole of Compound (III) is preferably 0.5 mole to 10 moles, and more preferably 0.8 mole to 5 moles. A base may be added if desired. An amount of the base employed per mole of Compound (IV) is preferably 0 mole to 5 moles (excluding 0), and more preferably 0.5 mole to 2 moles.

A reaction temperature may be set as appropriate in accordance with kinds of the solvent, the base, and the like to be used.

(2-2) Step 2B

Compound (V) used in Step 2A can be a compound that can be synthesized by a conventional technique. However, in the case of Compound (Va), Compound (Va) is produced preferably by the following synthesis method.

First, in the presence of a base, Compound (XII) is reacted with a halogenated compound represented by the following general formula (XIV) and thereby a keto ester compound represented by the following general formula (XIII) is obtained. Then, by hydrolysis and decarbonization of thus obtained Compound (XIII), Compound (Va) is obtained. This series of reaction steps ("Step 2B") is shown in the Reaction Formula (7) below.

Reaction Formula (7)

[Chem. 19]

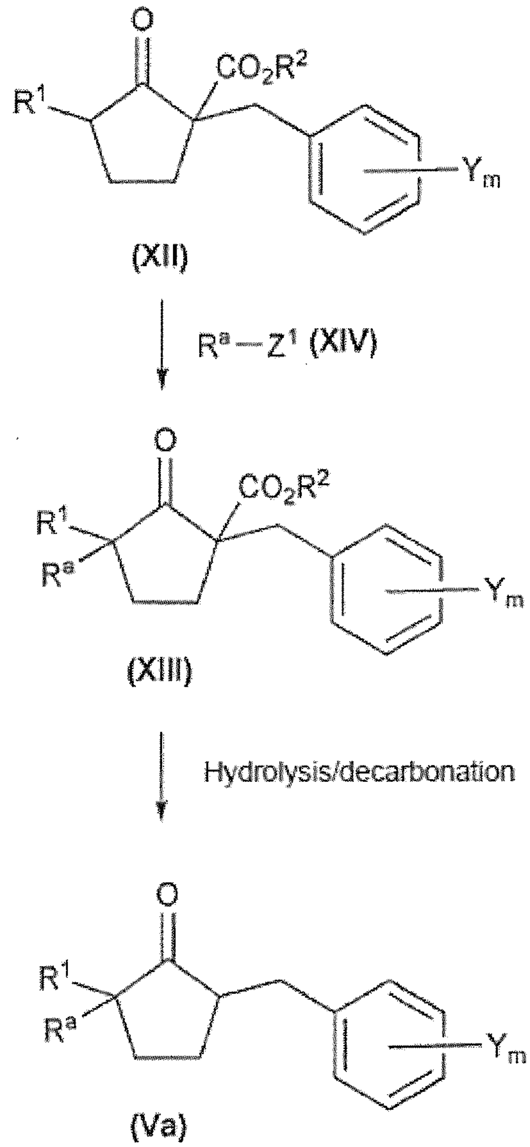


Here, $R^1$, $R^2$, $R^a$, Y, and m are the same as described above. $Z^1$ represents a halogen atom.

(2-2-1) Step 2B1

The following discusses the step (Step 2B1) of obtaining Compound (XIII) by reacting Compound (XII) with Compound (XIV) in the presence of a base.

This reaction is preferably carried out in a solvent. The base is not particularly limited. The base may, for example, be any of alkali metal carbonates such as sodium carbonate and potassium carbonate and alkali metal hydrides such as sodium hydride. An amount of the base per mole of Compound (XII) is preferably 0.5 mole to 5 moles, and more preferably, 0.8 mol to 2 moles.

An amount of Compound (XIV) per mole of Compound (XII) is preferably 0.5 mole to 10 moles, and more preferably, 0.8 mole to 5 moles.

A reaction temperature and a reaction time can be set as appropriate in accordance with kinds of the solvent, Compound (XII), Compound (XIV), the base and the like.

(2-2-2) Step 2B2

The following discusses the step of (Step 2B2) hydrolyzing and decarbonizing Compound (XIII).

This reaction can be carried out in a solvent under either a basic condition or an acidic condition.

In a case where hydrolysis is carried out under a basic condition, in general, the base is alkali metal bases such as sodium hydroxide or potassium hydroxide. Further, as the solvent, water or water combined with, for example, an alcohol is used in general.

Further, in a case where the hydrolysis is carried out under an acidic condition, preferably, an inorganic acid such as hydrochloric acid, hydrobromic acid, or sulfuric acid is used as an acid catalyst. As the solvent, for example, water or water to which an organic acid such as acetic acid is added is used.

A reaction temperature is preferably 0°C to a reflux temperature, and more preferably a room temperature to the reflux temperature. A reaction time is 0.1 hour to several days, and preferably 0.5 hour to 24 hours.

(3) Third Production Method of Compound (I)

(3-1) Step 3A

The following discusses still another embodiment of the production method of the present invention. This embodiment includes the step of obtaining an oxetane compound represented by the following general formula (XVI) by reacting a compound represented by the following general formula (VIa) with substituted sulfonyl chloride represented by the following general formula (XV). The present embodiment further includes the step of obtaining Compound (Ib) by ring-opening reaction of the oxetane compound represented by the following general formula (XVI) with use of a given halogen acid (Step 3A; see Reaction Formula (8) below).

Reaction Formula (8)

[Chem. 20]

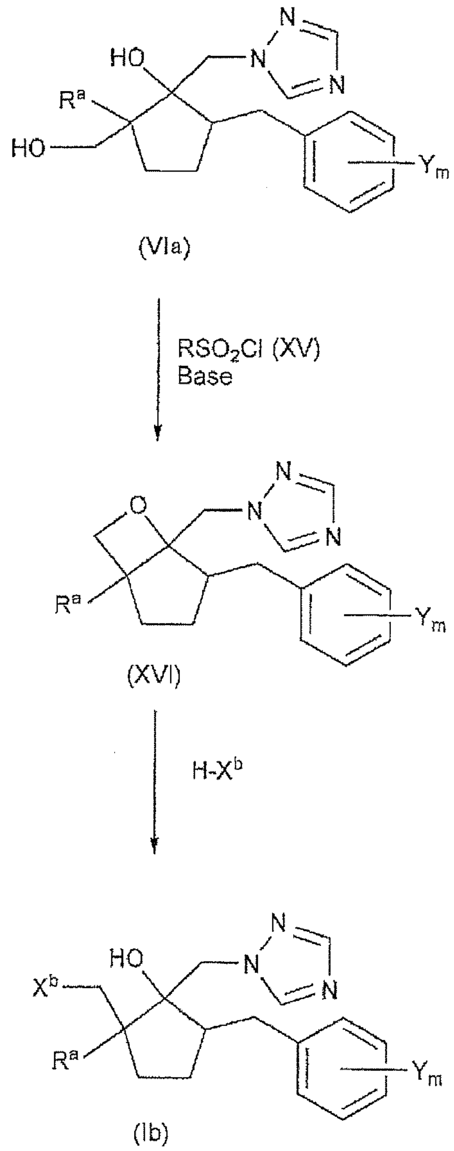


Here, $R^a$, R, Y, and m are the same as described above. $X^b$ represents a halogen atom such as a chlorine atom or a bromine atom.

(3-1-1) Step 3A1

First, the following discusses the step (Step 3A1) of obtaining Oxetane Compound (XVI) by ring-closing reaction of Compound (VIa).

Compound (XVI) is suitably synthesized by reacting Compound (VIa) in a solvent in the presence of any of sulfonyl chlorides and an excess amount of the base.

Examples of sulfonyl chlorides encompass p-toluene sulfonyl chloride and methan sulfonyl chloride. The base here is not particularly limited.

An amount of sulfonyl chloride per mole of Compound (VIa) is preferably 0.5 mole to 5 moles, and more preferably, 0.8 mole to 2 moles. An amount of the base per mole of Compound (VIa) is preferably 1.5 moles to 5 moles and more preferably, 1.8 moles to 3 moles.

The solvent is not specifically limited.

A reaction temperature and a reaction time can be set as appropriate in accordance with kinds of the solvent, Compound (VIa), the sulfonyl chloride, and the base, and the like.

(3-1-2) Step 3A2

Next, the following discusses the step (Step 3A2) of obtaining Compound (Ib) from Compound (XVI).

Compound (Ib) can be suitably produced by mixing Compound (XVI) and Compound H-$X^b$ in a solvent and carrying out ring-opening reaction of an oxetane ring of Compound (XVI), and then producing a halogenated methyl group and a tertiary hydroxy group.

H-$X^b$ represents a halogen acid. In this case, the halogen acid can be hydrogen chloride or hydrogen bromide. The halogen acid may be introduced in the form of gas or alternatively added in a state where the halogen acid is dissolved in an organic solvent. Note that Compound (Ib) may be obtained from Compound (XVI) by addition of halogenated salt and other kind of acid (e.g., toluenesulfonic acid or methanesulfonic acid).

The solvent is not specifically limited.

An amount of Compound H-$X^b$ per mole of Compound (XVI) is, for example, 0.5 mole to 50 moles, and preferably, 1 mole to 20 moles.

A reaction temperature and a reaction time can be set as appropriate in accordance with kinds of the solvent, the base, and the like.

Note that a method for synthesizing Compound (VIa) used in Step 3A1 can be the same as the method of Step 1C and Step 1D discussed in the first production method of Compound (I).

4. Production Method of Compound (XVII)

Compound (XVII) in the present embodiment can be produced, according to Scheme 1 below, from (i) a compound represented by the following formula (XXI) obtained by a conventional technique and (ii) a compound represented by the following formula (XX) obtained by a conventional technique.

[Chem. 21]

(Scheme 1)

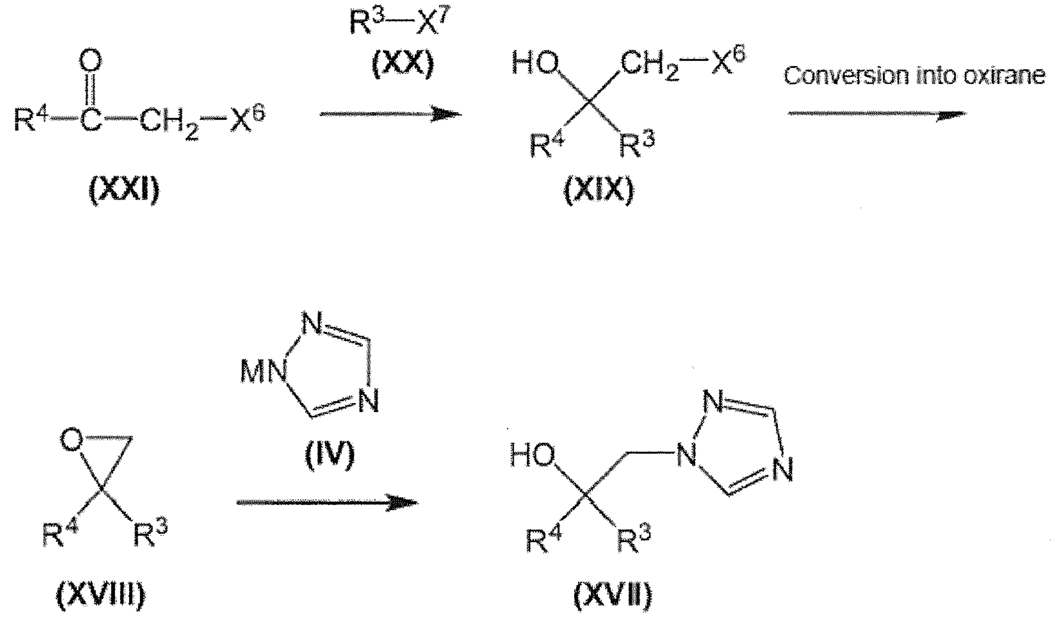

(XXI) (XX) (XIX) (XVIII) (IV) (XVII)

In regard to compounds shown in Scheme 1, $X^6$ represents a halogen atom, and $X^7$ represents alkali metal, alkaline earth metal-Q1 (Q1 represents a halogen atom), 1/2 (Cu alkali metal), or zinc-Q2 (Q2 is a halogen atom).

Note that among Compounds (XVIII) above, a compound that has a gem-dihalocyclopropane structure in a molecule and that is represented by Formula (XVIIIa) below is suitably obtained, according to Scheme 2 shown below, from Compound (XXI) and an organic metal compound represented by Formula (XXIV) below obtained by a conventional

art.

[Chem. 22]

( Scheme 2)

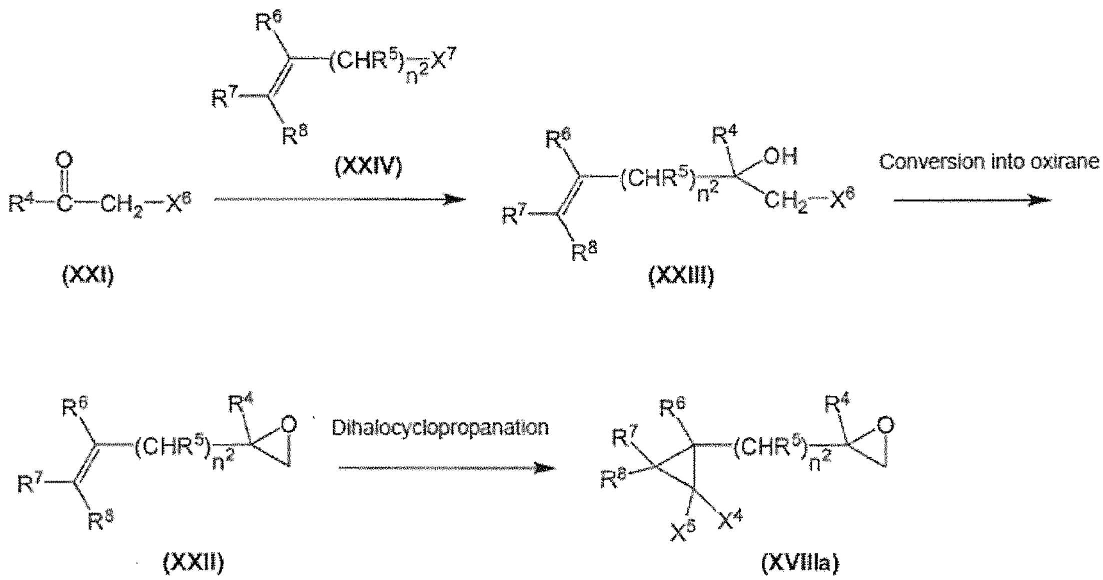


(XXIV) (XXI) (XXIII) (XXII) (XVIIIa)

Unless specifically specified otherwise, the solvent, the base, the acid, and the like to be used in the steps of the above-described production method of the present invention are not particularly limited and ones described below can be used.

[Solvents]

A solvent employed is not particularly limited provided that the solvent does not affect any reaction. Examples of the solvent encompass: ethers such as diethyl ether, tetrahydrofuran, and dioxane; alcohols such as methanol, ethanol, and isopropanol; aromatic hydrocarbons such as benzene, toluene, and xylene; aliphatic hydrocarbons such as petroleum ether, hexane, and methylcyclohexane; and amides such as N,N-dimethylformamide, N,N-dimethylacetamide, and N-methyl-2-pyrrolidinone. In addition, for example, water, acetonitrile, ethyl acetate, acetic anhydride, acetic acid, pyridine, and dimethyl sulfoxide may be also used as the solvent. Two or more of these solvents may be used in combination.

Exemplified as a solvent is a solvent composition consisting of solvents which do not form a homogenous layer with each other. In this case, a phase transfer catalyst such as customary quaternary ammonium salt or crown ether may be added to the reaction system.

[Bases and Acids]

A base or an acid may be added to the solvent described above.

A base employed is not particularly limited. Examples of the base encompass: alkali metal carbonates such as sodium carbonate, sodium hydrogen carbonate, potassium carbonate, and potassium hydrogen carbonate; alkaline earth metal carbonates such as calcium carbonate and barium carbonate; alkali metal hydroxides such as sodium hydroxide and potassium hydroxide; alkali metals such as lithium, sodium, and potassium; alkali metal alkoxides such as sodium methoxide, sodium ethoxide, and potassium t-butoxide; alkali metal hydrides such as sodium hydride, potassium hydride, and lithium hydride; organometallic compounds of alkali metals such as n-butyl lithium; alkali metal amides such as lithium diisopropyl amide; and organic amines such as triethylamine, pyridine, 4-dimethylaminopyridine, N,N-dimethylaniline, and 1,8-diazabicyclo-7-[5.4.0]undecene.

An acid employed is not particularly limited. Examples of the acid encompass: inorganic acids such as hydrochloric acid, hydrobromic acid, hydroiodic acid, and sulfuric acid; organic acids such as formic acid, acetic acid, butyric acid, trifluoroacetic acid, and p-toluenesulfonic acid; and Lewis acids such as lithium chloride, lithium bromide, rhodium chloride, aluminum chloride, and boron trifluoride.

The "halogen acid" in the present specification means any of hydrogen fluoride, hydrogen chloride, hydrogen bromide, and hydrogen iodide. The halogen acid may be in the form of any of gas, liquid, and aqueous solution. Alternatively, the halogen acid may dissolved in an appropriate organic solution and used as a solution.

5. Agro-Horticultural Agent and Plant Disease Control Composition

Compound (I) added as an active ingredient to the agro-horticultural agent or plant disease control composition of the present invention shows a control effect to a broad range of plant diseases. Further, Compound (I) is used in combination with, for example, an ergosterol biosynthesis inhibitor compound, an SDHI compound, a strobilurin compound and/or Compound (XVII), and thereby shows a synergistic effect as compared to a case where each of the above compounds are solely used.

Compound (I) includes 1,2,4-triazolyl group and thereby forms an acid addition salt with an inorganic acid or organic acid, or a metal complex. Compound (I) may be used in the form of any of the acid addition salts and a metal complex.

Further, at least three asymmetric carbons are present in Compound (I), unless $R^a$ and $R^b$ have an identical substituent. Therefore, depending on a composition, Compound (I) becomes either a mixture of stereoisomers (enantiomer or diastereomer) or either one of these stereoisomers. Therefore, at least one kind of these stereoisomers can also be used as an active ingredient of an agro-horticultural agent or the like.

(1) Plant Disease Control Effect

The following discusses usefulness of the agro-horticultural agent and the plant disease control composition of the present invention.

Compound (I) shows a controlling effect on a broad range of plant diseases. Examples of diseases are as follows.

Soybean rust (Phakopsora pachyrhizi, Phakopsora meibomiae), rice blast (Pyricularia oryzae), rice brown spot (Cochliobolus miyabeanus), rice leaf blight (Xanthomonas oryzae), rice sheath blight (Rhizoctonia solani), rice stem rot (Helminthosporium sigmoideun), rice Bakanae disease (Fusarium fujikuroi), rice bacterial seedling blight (Pythium aphanidermatum), apple powdery mildew (Podosphaera leucotricha), apple scab (Venturia inaequalis), apple blossom blight (Monilinia mali), apple alternaria blotch (Alternaria alternata), apple valsa canker (Valsa mali), pear black spot (Alternaria kikuchiana), pear powdery mildew (Phyllactinia pyri), pear rust (Gymnosporangium asiaticum), pear scab (Venturia nashicola), grape powdery mildew (Uncinula necator), grape downy mildew (Plasmopara viticola), grape ripe rot (Glomerella cingulata), barley powdery mildew (Erysiphe graminis f. sp hordei), barley stem rust (Puccinia graminis), barley stripe rust (Puccinia striiformis), barley stripe (Pyrenophora graminea), barley leaf blotch (Rhynchosporium secalis), wheat powdery mildew (Erysiphe graminis f. sp tritici), wheat brown rust (Puccinia recondita), wheat stripe rust (Puccinia striiformis), wheat eye spot (Pseudocercosporella herpotrichoides), wheat Fusarium head blight (Fusarium graminearum, Microdochium nivale), wheat glume blotch (Phaeosphaeria nodorum), wheat leaf blight (Septoria tritici), gourd powdery mildew (Sphaerotheca fuliginea), gourd anthracnose (Colletotrichum lagenarium), cucumber downy mildew (Pseudoperonospora cubensis), cucumber phytophthora rot (Phytophthora capsici), tomato powdery mildew (Erysiphe cichoracearum), tomato early blight (Alternaria solani), eggplant powdery mildew (Erysiphe cichoracearum), strawberry powdery mildew (Sphaerotheca humuli), tobacco powdery mildew (Erysiphe cichoracearum), sugar beet cercpspora leaf spot (Cercospora beticola), maize smut (Ustillaga maydis), plum brown rot (Monilinia fructicola), various plants-affecting gray mold (Botrytis cinerea), sclerotinia rot (Sclerotinia sclerotiorum) and the like may be exemplified.

In addition to the above diseases, barley loose smut (Ustilago nuda), wheat pink snow mold (Microdochium nivale), wheat take-all (Gaeumannomyces graminis), grape rust (Phakopsora ampelopsidis), tobacco brown spot (Alternaria longipes), potato early blight (Alternaria solani), soybean brown spot (Septoria glycines), soybean purple stain (Cercospora kikuchii), watermelon wilt (Fusarium oxysporum f.sp.niveum), cucumber wilt (Fusarim oxysporum f.sp.cucumerinum), citrus fruit blue mold (Penicillium italicum), white radish yellow (Fusarium oxysporum f.sp.raphani), and the like may be exemplified.

Examples of applicable plants may be, for example, wild plants, cultivated plant cultivars, plants and cultivated plant cultivars obtained by conventional biological breeding such as heterologous mating or plasma fusion, and plants and cultivated plant cultivars obtained by genetic engineering. The genetically-modified plants and the cultivated plant cultivars may be, for example, herbicide-resistant crops, vermin-resistant crops having insecticidal protein-producing genes integrated therein, disease-resistant crops having disease resistance inducer-producing genes integrated therein, palatably improved crops, yield improved crops and preservability improved crops. The genetically-modified cultivated plant cultivars may be, for example, those involving trademarks such as ROUNDUP READY, LIBERTY LINK, CLEARFIELD, YIELDGARD, HERCULEX, BOLLGARD and the like.

Further, Compound (I) can be used as an active ingredient of an industrial material protecting agent, because Compound (I) shows an excellent effect in protection of materials from a broad range of harmful microorganisms that

damage industrial materials.

(2) Formulations

In the agro-horticultural agent of the present invention, a mixture ratio of (a) Compound (I) and (b) metconazole and/or epoxiconazole is, in ratio by weight, 100:1 to 1:100, and preferably, 5:2 to 50:3. The same applies to a mixture ratio of (a) Compound (I) and (b) any of the ergosterol biosynthesis inhibitor compound other than metconazole and epoxiconazole, the SDHI compound, and the strobilurin compound. Note that in a case where the agro-horticultural agent of the present invention contains a plurality of active ingredients in addition to Compound (I), a mixture ratio of the active ingredients except Compound (I) can be set as appropriate in accordance with a use application of a resultant agent.

An agro-horticultural formulation of the present invention may contain various ingredients and can be mixed with a solid carrier, a liquid carrier, a surfactant, and other formulation auxiliary agents. The agro-horticultural formulation may be in various forms such as dust formulation, wettable powder, granule, emulsifiable concentrate and the like.

The above agro-horticultural formulation preferably contains 0.1% to 95% by weight of active ingredients relative to the total amount of the agro-horticultural formulation. The agro-horticultural formulation contains more preferably 0.5% to 90% by weight of the active ingredient, and most preferably 2% to 80% by weight of active ingredients relative to the total amount of the agro-horticultural formulation.

In a case where agro-horticultural agents of various formulations are formed by mixing other ingredients, it is possible to take not only a method in which an agro-horticultural formulation is produced from a mixture of active ingredients but also a method in which respective formulations of a plurality of active ingredients are separately prepared first as separate agents and then mixed so as to make up an agro-horticultural formulation containing the plurality of active ingredients. Therefore, the present invention encompasses a plant disease control product that separately contains Compound (I) and other active ingredient as combination preparations to be used in mixture in plant disease control. In a case where three or more active ingredients are contained, the active ingredients other than Compound (I) may also be separate from each other.

Carriers, diluents, and surfactants employed as formulation auxiliary agents are exemplified below. Examples of the solid carriers encompass talc, kaolin, bentonite, diatomaceous earth, white carbon, and clay. Examples of the liquid diluents encompass water, xylene, toluene, chlorobenzene, cyclohexane, cyclohexanone, dimethyl sulfoxide, dimethyl formamide, and alcohols. The surfactant may be selected appropriately in accordance with an intended effect. In the case where the surfactant is an emulsifier, the emulsifier may be any of, for example, polyoxiethylene alkylaryl ether, polyoxyethylene sorbitan monolaurate and the like. In the case where the surfactant is a dispersing agent, the dispersing agent may be any of, for example, lignin sulfonate salt, and dibutylnaphthalene sulfonate salt. In the case where the surfactant is a wetting agent, the wetting agent may be any of, for example, an alkyl sulfonate salt or alkylphenyl sulfonate salt.

The formulation may be used as it is, or used as being diluted in a diluent such as water to a predetermined concentration. In the case where the formulation is used as being diluted, a concentration of the active ingredient is preferably 0.001% to 1.0% with respect to a total amount of a diluted formulation.

The amount of Compound (I) in the agro-horticultural agent of the present invention per hectare of agro-horticultural field such as a farm, paddy field, orchard, or greenhouse is 20 g to 5000 g, and more preferably 50 g to 2000 g. A content of other active ingredient contained in the agro-horticultural agent should be set as appropriate in accordance of an amount of Compound (I) to be used. However, because the above concentration and the amount may vary depending on the form of the formulation, timing of use, usage, place of use, subject crop, and the like, it is possible to increase or decrease the concentration and the amount regardless of the ranges mentioned above.

Further, the plant disease control composition of the present embodiment containing Compound (I) and Compound (XVII), as active ingredients for plant disease control, shows a synergistic (cooperative) control effect. This synergistic effect can be found at a broad range of mixture ratio. For example, a ratio by weight of Compound (I) with respect to Compound (XVII) can be in a range of 0.1 to 10, preferably in a range of 1 to 8, and most preferably in a range of 2 to 6.

As described above, the plant disease control composition of the present embodiment provides a synergistic effect in control effect and therefore, an amount of respective compounds used in a formulation can be reduced. Therefore, the plant disease control composition of the present embodiment can reduce toxicity to non-target organisms and negative effects on environment. In addition, because respective amounts of compounds to be used can be reduced, the plant disease control composition of the present embodiment is also expected to prevent emergence of fungicide-resistant pathogens. Furthermore, the plant disease control composition of the present invention has a broad spectrum in disease control, because the plant disease control composition of the present invention contains, as active ingredients for a plant disease control effect, two ingredients that are significantly different from each other in molecular structure.

Note that both Compound (I) and Compound (XVII) are compounds each having an ergosterol biosynthesis

inhibiting ability. Therefore, the plant disease control composition of the present embodiment is preferably used as a fungicide whose mechanism of action is inhibition of ergosterol biosynthesis.

The plant disease control composition of the present embodiment only needs to contain at least Compound (I) and Compound (XVII). This plant disease control composition can take various formulations such as dust formulation, wettable powder, granule, and emulsifiable concentrate by mixing a solid carrier, a liquid carrier, a surfactant, and other formulation auxiliary agents.

Note that in a case where the plant disease control composition contains other ingredients in addition to Compound (I) and Compound (XVII), a total amount of Compound (I) and Compound (XVII) contained in the plant disease control composition should be arranged in a range of 0.1% by weigh to 95% by weight, preferably 0.5% by weight to 90% by weight, and more preferably 2% by weight to 80% by weight.

In a case where the plant disease control compositions of various formulations are formed by mixing other ingredients in the plant disease control compositions, it is possible to take not only a method in which a plant disease control composition is prepared as a formulation from a mixture of Compound (I) and Compound (XVII) but also a method in which respective formulations of Compound (I) and Compound (XVII) are separately prepared first as separate agents and then mixed so as to make up the plant disease control composition having a formulation containing Compound (I) and Compound (XVII). Therefore, the present invention encompasses a plant disease control product separately containing Compound (I) and Compound (XVII) as combination preparations to be used in mixture in plant disease control.

Carriers, diluents, and surfactants each used as a formulation auxiliary agent can be the same as the above-described carriers, diluents, and surfactants.

The formulations can be classified into a formulation directly used as it is and a formulation that is used as being diluted with a diluent such as water to a predetermined concentration. In a case where a formulation is used as being diluted, a total concentration of Compound (I) and Compound (XVII) in a dispersion solution is desirably in a range of 0.001% to 1.0%.

Further, the plant disease control composition may contain three or more kinds of active ingredients. In other words, the plant disease control composition may contain an active ingredient discussed later in addition to Compound (I) and Compound (XVII).

The agro-horticultural agent and the plant disease control composition of the present invention can be used by containing any of other active ingredients (active ingredients including fungicides, insecticides, acaricides, and herbicides) listed below other than the above-described active ingredients and thereby enabling the use as an agro-horticultural agent having an enhanced performance.

<Anti-Bacterial Substances>

The following lists compounds as melanin biosynthesis inhibitor (MBI agent).

Carpropamid, diclocymet, fenoxanil, phthalide, pyroquilon, and tricyclazole.

The following lists other compounds.

Acibenzolar-S-methyl, amisulbrom, 2-phenylphenol (OPP), benalaxyl, benthiavalicarb-isopropyl, Bordeaux mixture, borax, bicarbonate, biphenyl, blasticidin-S , bronopol, bupirimate, sec-butylamine, calcium polysulphide, captafol, captan, carboxin, quinomethionate, chloroneb, chloropicrin, chlorothalonil, chlozolinate, cyazofamid, diethofencarb, cyflufenamid, cymoxanil, cyprodinil, dazomet, debacarb, dichlofluanid, diclomezine, dicloran, diflumetorim, dinocap, diphenylamine, dithianon, dodemorph, dodine, metalaxyl, dimethomorph, edifenphos, ethaboxam, ethoxyquin, etridiazole, enestroburin, fenfuram, fenpiclonil, fentin, ferbam, ferimzone, fluazinam, fludioxonil, flumorph, fluoroimide, flusulfamide, folpet, fosetyl-Al, furalaxyl, fluopicolide, fluopyram, guazatine, hexachlorobenzene, hymexazol, iminoctadine, iprobenfos, iprodione, iprovalicarb, isoprothiolane, isopyrazam, isotianil, kasugamycin, copper preparations (e.g.: copper hydroxide, copper naphthenate, copper oxychloride, copper sulphate, copper oxide, and oxine copper), kresoxim-methyl, mancopper, mancozeb, maneb, mandipropamid, mepanipyrim, mepronil, metiram, mildiomycin, nitrothal-isopropyl, ofurace, oxadixyl, oxolinic acid, oxycarboxin, oxytetracycline, pencycuron, pyribencarb, picoxystrobin, piperalin, polyoxin, probenazole, procymidone, propamocarb, propineb, proquinazid, pyrazophos, pyrifenox, pyrimethanil, quinoxyfen, quintozene, silthiopham, sulfur and sulfur preparations, tecloftalam, tecnazen, thiram, thiadinil, tolclofos-methyl, tolylfluanid, triazoxide, validamycin, vinclozolin, zineb, ziram, zoxamide, amisulbrom, flutianil, valiphenal, ametoctradin, metrafenone, hydroxyisoxazole, thifluzamide, metasulfocarb and the like.

Further, in the plant disease control composition of the present invention, compound shown as examples of the ergosterol biosynthesis inhibitor compound, compounds shown as examples of the SDHI compound, compounds shown as examples of the strobilurin compound, compounds shown as the benzimidazole compound, metalaxyl and chlorothalonil may be combined.

<Insecticides/Acaricides/Nematocides>

Abamectin, acephate, acrinathrin, alanycarb, aldicarb, allethrin, amitraz, avermectin, azadirachtin, azamethiphos, azinphos-ethyl, azinphos-methyl, azocyclotin, Bacillus firmus, Bacillus subtilis, Bacillus thuringiensis, bendiocarb, benfuracarb, bensultap, benzoximate, bifenazate, bifenthrin, bioallethrin, bioresmethrin, bistrifluron, buprofezin, butocarboxim, butoxycarboxim, cadusafos, carbaryl, carbofuran, carbosulfan, cartap, CGA50439, chlordane, chlorethoxyfos, chlorphenapyr, chlorfenvinphos, chlorfluazuron, chlormephos, chlorpyrifos, chlorpyrifos methyl, chromafenozide, clofentezine, clothianidin, chlorantraniliprole, coumaphos, cryolite, cyanophos, cycloprothrin, cyfluthrin, cyhalothrin, cyhexatin, cypermethrin, cyphenothrin, cyromazine, Cyazapyr, cyenopyrafen, DCIP, DDT, deltamethrin, demeton-S-methyl, diafenthiuron, diazinon, dichlorophen, dichloropropene, dichlorvos, dicofol, dicrotophos, dicyclanil, diflubenzuron, dimethoate, dimethylvinphos, dinobuton, dinotefuran, emamectin, endosulfan, EPN, esfenvalerate, ethiofencarb, ethion, ethiprole, ethofenprox, ethoprophos, etoxazole, famphur, fenamiphos, fenazaquin, fenbutatin oxide, fenitrothion, fenobucarb, fenothiocarb, fenoxycarb, fenpropathrin, fenpyroximate, fenthion, fenvalerate, fipronil, flonicamid, fluacrypyrim, flucycloxuron, flucythrinate, flufenoxuron, flumethrin, fluvalinate, flubendiamide, formetanate, fosthiazate, halfenprox, furathiocarb, halofenozide, gamma-HCH, heptenophos, hexaflumuron, hexythiazox, hydramethylnon, imidacloprid, imiprothrin, indoxacarb, isoprocarb, isoxathion, lufenuron, malathion, mecarbam, metam, methamidophos, methidathion, methiocarb, methomyl, methoprene, methothrin, methoxyfenozide, metolcarb, milbemectin, monocrotophos, naled, nicotine, nitenpyram, novaluron, noviflumuron, omethoate, oxamyl, oxydemethon methyl, parathion, permethrin, phenthoate, phorate, phosalone, phosmet, phosphamidon, phoxim, pirimicarb, pirimiphos-methyl, profenofos, propoxur, prothiophos, pymetrozin, pyrachlophos, pyrethrin, pyridaben, pyridalyl, pyrimidifen, pyriproxifen, pyrifluquinazon, pyriprole, quinalphos, silafluofen, spinosad, spirodiclofen, spiromesifen, spirotetramat, sulfluramid, sulphotep, SZI-121, tebufenozid, tebufenpyrad, tebupirimphos, teflubenzuron, tefluthrin, temephos, terbufos, tetrachlorvinphos, thiacloprid, thiamethoxam, thiodicarb, thiofanox, thiometon, tolfenpyrad, tralomethrin, tralopyril, triazamate, triazophos, trichlorfon, triflumuron, vamidothion, valifenal, XMC, xylylcarb, imicyafos, lepimectin and the like.

<Plant Growth Regulators>

Ancymidol, 6-benzylaminopurine, paclobutrazol, diclobutrazole, uniconazole, methylcyclopropene, mepiquat chloride, ethefon, chlormequat chloride, inabenfide, prohexadione and its salts, trinexapac-ethyl and the like. As plant hormones, jasmonic acid, brassinosteroid, gibberellin and the like.

The plant disease control composition of the present invention shows, as a result of regulating the growth of the crops and plants, yield-increasing effects and quality-improving effects. Examples of such crops encompass: wheat, barley, oats, rice, rapeseed, sugarcane, corn, maize, soybean, pea, peanut, sugar beet, cabbage, garlic, radish, carrot, apple, pear, citric fruits such as mandarin, orange, and lemon, peach, cherry, avocado, mango, papaya, red pepper, cucumber, melon, strawberry, tobacco, tomato, eggplant, lawn grass, chrysanthemum, azalea, and other ornamental plants.

(3) Method for Controlling Plant Disease with use of Agro-Horticultural Agent or Plant Disease Control Agent

The agro-horticultural agent and the plant disease control agent of the present embodiment can be applied by not only foliage treatments such as foliage application but also non-foliage treatments such as a seed treatment, a soil-drenching treatment, and a water-surface treatment. Therefore, the method of the present invention for controlling a plant disease includes the step of carrying out a foliage treatment or a non-foliage treatment by using the above-described agro-horticultural agent or plant disease control agent. Note that in a case where a non-foliage treatment is carried out, an amount of work can be reduced as compared to a case where a foliage treatment is carried out.

In application by a seed treatment, for example, the above-described agro-horticultural agent or plant disease control agent in the form of wettable powder or dust formulation and seeds are mixed and stirred or alternatively, seeds are impregnated in a diluted wettable powder so that the above-described agro-horticultural agent or plant disease control agent is adhered to the seeds. In the case of the seed treatment, a total amount of active ingredients with respect to 100 kg of seeds is in a range of 0.01 g to 10000 g, and preferably, in a range of 0.1 g to 1000 g. The seeds treated with the agro-horticultural agent or the plant disease control composition may be used in the same manner as regular seeds.

In application by the soil-drenching treatment, a planting hole or an area in the vicinity of a planting hole is treated with the agro-horticultural agent or the plant disease control composition in the form of granule or the like at the time of transplantation of seedlings or alternatively, soil around seeds or plant bodies is treated with the agro-horticultural agent or the plant disease control composition in the form of granule or wettable powder. In the case of the soil-drenching treatment, a total amount of active ingredients with respect to 1 $m^2$ of agro-horticultural field is in a range of 0.01 g to 10000 g, and preferably, in a range of 0.1 g to 1000 g.

In application by the water-surface treatment, paddy water of paddy field is treated with the agro-horticultural agent or the plant disease control composition in the form of granule or the like. In the case of the water-surface treatment, a total amount of active ingredients with respect to 10 a. of paddy field is in a range of 0.01 g to 10000 g, and preferably, in a range of 0.1 g to 1000 g.

In a case where the agro-horticultural agent or the plant disease control composition is used in foliage application, a total amount of active ingredients with respect to 1 ha. of agro-horticultural field such as a farm, paddy field, orchard, or greenhouse is in a range of 20 g to 5000 g, and preferably, in a range of 50 g to 2000 g.

Note that a concentration and an amount of the agro-horticultural agent or the plant disease control composition vary depending on the form of the agro-horticultural agent or the plant disease control composition, timing of use, usage, place of use, subject crop, and the like. Therefore, the total amount is not necessarily be in the above range but can be increased/decreased from the above range.

The following provide Examples and discusses in more detail the embodiment of the present invention. Certainly, the present invention is by no means limited to the following Examples and the details of the embodiment can be variously modified. Further, the present invention is not limited to the above embodiment and can be variously modified within the scope of the claims. The technical scope of the present invention also encompasses embodiments obtained in appropriate combination of technical means disclosed in the above embodiments. Further, all Literatures mentioned in the present Specification are incorporated herein by reference.

[Examples]

The following more specifically discusses the present invention with reference to Production Examples, Formulation Examples, and Test Examples. Note that the invention is not limited to the following Production Examples, Formulation Examples, and Test Examples unless the inventions departs from its scope.

<Test Example 1: Test for Examining Controlling Effect of Metconazole and Compound I-1 on Wheat Fusarium Head Blight Control>

First, metconazole and a compound (Compound I-1 of Production Example 1 below) represented by the following chemical formula were mixed at a given ratio and a test for a cooperative effect against wheat Fusarium head blight was carried out.

[Chem. 23]

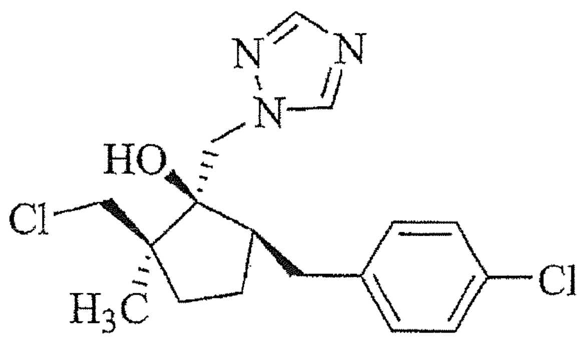

Cut ears, cut from wheat plants (cultivar: NORIN No. 61) at the flowering stage, were prepared. Then, a chemical suspension containing metconazole and Compound I-1 was prepared and sprayed on the cut ears so that an amount of thus sprayed metconazole and Compound I-1 became a predetermined dosage. Then, after the cut ears were left for approximately one hour at a room temperature and dried, the cut ears were inoculated with ascospores of Fusarium graminearum by spraying a suspension ($1 \times 10^5$/ml) of the ascospores. Then, the cut ears were kept in a wet chamber at 20°C, and after 5 days, onset of disease was examined according to an evaluation method described in Literature (See Ban & Suenaga Euphyitica 113, p87-99, (2000)). The test was conducted in three test plots, each of which test plots included three ears. By using Colby's formula (see below), a theoretical value of a protective value in a case where a mixture of metconazole and Compound 1-I was sprayed was calculated from respective protective values of metconazole and Compound I-1 in cases where metconazole and Compound I-1 each were solely sprayed. Then, in a case where an actual protective value was greater than the theoretical value at the time when the mixture was sprayed, an

effect was judged as synergistic; in a case where the actual protective value was equal to the theoretical value, the effect was judged as additive; and in a case where the actual protective value was smaller than the theoretical value, the effect was judged as opposing.

$$\text{Protective Value (Theoretical Value) at Mixture Spraying} = \alpha + ((100 - \alpha) \times \beta)/100$$

In the above formula, $\alpha$ and $\beta$ are protective values of respective chemical agents in cases where these chemical agents each were solely sprayed.

Fig. 1 shows a result of this efficacy test. As shown in Fig. 1, when the mixture of metconazol and Compound I-1 was sprayed, a protective value of the mixture was greater than a theoretical value of the mixture calculated from protective values in a case where metconazol and Compound I-1 each were solely sprayed. This clarified that Compound I-1 and metconazole show a synergistic effect.

<Test Example 2: Test for Examining Controlling Effect of Epoxiconazole and Compound I-1 on Wheat Fusarium Head Blight Control>

Epoxiconazol and Compound I-1 were mixed at a given ratio and a test for a cooperative effect against wheat Fusarium head blight was carried out. First, a chemical suspension containing epoxiconazole and Compound I-1 was prepared and thus prepared chemical suspension was sprayed on cut ears so that an amount of thus sprayed epoxiconazole and Compound I-1 became a predetermined dosage. Except this, the same test method as that of Test Example 1 was applied. The cooperative effect as a result of mixing was carried out according to an isoeffect curve method as described in Literature (See Agricultural Chemical Testing Method Vol. 3, Soft Science Co., Ltd., pp. 109-116). From protective values in respective case where epoxiconazole and Compound I-1 were used in combination at different concentrations, an isoeffect curve indicative of a constant protective value was produced. Then, when the isoeffect line is linearly extended, an effect of mixing was judged as additive; when the isoeffect curve was convex upward, the effect was judged as opposing; and when the isoeffect curve was convex downward, the effect was judged as synergistic.

Fig.2 shows a result of the efficacy test. Fig. 2 shows (i) an isoeffect curve where a protective value 60 was obtained and (ii) an isoeffect curve where a protective value of 80 was obtained in a case where epoxiconazole and Compound I-1 were used in combination of different concentrations. These isoeffect curves were convex downward and therefore clarified that Compound I-1 and epoxiconazole show a synergistic effect.

<Test Example 3: Test for Examining Controlling Effect of Pyraclostrobin and Compound I-1 on Wheat Fusarium Head Blight Control with Use>

Pyraclostrobin and Compound I-1 were mixed at a given ratio and a test for a cooperative effect against wheat Fusarium head blight was carried out. First, a chemical suspension containing pyraclostrobin and Compound I-1 was prepared and thus prepared chemical suspension was sprayed on cut ears so that an amount of thus sprayed pyraclostrobin and Compound I-1 became a predetermined spray amount. Except this, the same test method as that of Test Example 1 was applied. Similarly, a method for judging the cooperative effect in Test Example 1 with use of Colby's formula was also applied.

Table 1 shows a result of this efficacy test. A protective value in a case where a mixture of pyraclostrobin and Compound I-1 was sprayed was greater than a corresponding theoretical value calculated from respective protective values of pyraclostrobin and Compound I-1 in cases where pyraclostrobin and Compound I-1 each were solely sprayed. This clarified that Compound I-1 and pyraclostrobin show a synergistic effect.

[Table 1]

| Compound (I) g/ha | Pyraclostrobin g/ha | Actual Protective Value | Theoretical Protective Value When Mixed |
|---|---|---|---|
| 0 | 0 | 0.0 | - |
| 4 | 0 | 9.4 | - |
| 8 | 0 | 12.9 | - |
| 0 | 10 | 10.6 | - |
| 0 | 20 | 23.5 | - |

(continued)

| Compound (I) g/ha | Pyraclostrobin g/ha | Actual Protective Value | Theoretical Protective Value When Mixed |
|---|---|---|---|
| 0 | 30 | 36.5 | - |
| 4 | 10 | 25.9 | 19.0 |
| 4 | 20 | 41.2 | 30.7 |
| 4 | 30 | 50.6 | 42.4 |
| 8 | 10 | 38.8 | 22.2 |
| 8 | 20 | 49.4 | 33.4 |
| 8 | 30 | 51.8 | 44.7 |

<Test Example 4: In Vitro Antimicrobial Activity Test with Use of Bixafen and Compound I-1>

Bixafen and Compound I-1 were mixed in a PDA medium at a given concentration. In the test, a flora disk of 4 mm in diameter was cut from an area around a colony of Glomerella cingulata pre-cultured in advance in a pre-culture PDA medium, and Glomerella cingulata was inoculated on the PDA medium where chemical agents were mixed. After culturing at 25°C for 5 days, a diameter of a grown colony was measured. Then, a mycelial growth inhibition ratio was calculated by comparing the diameter of this grown colony with a diameter of a colony on a medium without the chemical agents. As in Test Example 1, a cooperative effect was judged by use of Colby's formula.

Table 2 shows a result of this test. In a case where bixafen and Compound I-1 were mixed, a protective value was greater than a theoretical value calculated from respective protective values of bixafen and Compound I-1 in cases where bixafen and Compound I-1 each were solely used. This clarified that Compound I-1 and bixafen show a synergistic effect.

[Table 2]

| Compound (I) ppm | Bixafen ppm | Mycelial Growth Inhibition Ratio % | |
|---|---|---|---|
| | | Measured Value | Theoretical Value |
| 0 | 0.0393 | 5 | - |
| 0 | 0.1575 | 7 | - |
| 0 | 0.63 | 7 | - |
| 0 | 2.5 | 16 | - |
| 0 | 10 | 38 | - |
| 0.005 | 0 | 13 | - |
| 0.02 | 0 | 23 | - |
| 0.005 | 0.0393 | 4 | 18 |
| 0.005 | 0.1575 | 32 | 19 |
| 0.005 | 0.63 | 32 | 19 |
| 0.005 | 2.5 | 34 | 27 |
| 0.005 | 10 | 35 | 46 |
| 0.02 | 0.0393 | 44 | 27 |
| 0.02 | 0.1575 | 44 | 28 |
| 0.02 | 0.63 | 44 | 28 |
| 0.02 | 2.5 | 46 | 35 |
| 0.02 | 10 | 54 | 52 |

<Test Example 5: Test for Examining Controlling Effect of Boscalid and Compound I-1 on Wheat Fusarium Head Blight Control>

Boscalid and Compound I-1 were mixed at a given ratio and a cooperative effect against wheat Fusarium head blight was tested. Cut ears, cut from wheat plants (cultivar: NORIN No. 61) at the flowering stage, were prepared. Then, a chemical suspension containing boscalid and Compound I-1 was prepared and sprayed on the cut ears so that an

amount of thus sprayed boscalid and Compound I-1 became a predetermined dosage. Then, after the cut ears were left for approximately one hour at a room temperature and dried, the cut ears were inoculated with ascospores of Fusarium graminearum by spraying a suspension ($1 \times 10^5$/ml) of the ascospores. Then, the cut ears were kept in a wet chamber at 20°C, and after 5 days, onset of disease was examined according to an evaluation method described in Literature (See Ban & Suenaga Euphyitica 113, p87-99, (2000)). The test was conducted in three test plots, each of which test plots included three ears. By using Colby's formula (see below), a theoretical value of a protective value in a case where a mixture of boscalid and Compound 1-I was sprayed was calculated from respective protective values in cases where metconazole and Compound I-1 each were solely sprayed. Then, in a case where an actual protective value was greater than the theoretical value at the time when the mixture was sprayed, an effect was judged as synergistic; in a case where the protective value was equal to the theoretical value, the effect was judged as additive; and in a case where the protective value was smaller than the theoretical value, the effect was judged as opposing.

Protective Value (Theoretical Value) at Mixture Spraying

$$= \alpha + ((100 - \alpha) \times \beta)/100$$

In the above formula, $\alpha$ and $\beta$ are protective values of respective chemical agents in cases where these chemical agents were solely sprayed.

Table 3 shows a result of this test. When the mixture of boscalid and Compound I-1 was sprayed, a protective value of the mixture of boscalid and Compound I-1 became greater than a theoretical value calculated from respective protective values of boscalid and Compound I-1 in cases where boscalid and Compound I-1 each were solely sprayed. This clarified that Compound I-1 and boscalid show a synergistic effect.

[Table 3]

| Compound I-1 g/ha | Boscalid g/ha | Actual Protective Value | Theoretical Protective Value When Mixed |
|---|---|---|---|
| 0 | 0 | 0 | |
| 10 | 0 | 24 | |
| 15 | 0 | 37 | |
| 0 | 20 | 0 | |
| 10 | 20 | 31 | 24 |
| 15 | 20 | 38 | 37 |
| 0 | 40 | 4 | |
| 10 | 40 | 31 | 27 |
| 15 | 40 | 43 | 40 |
| 0 | 60 | 15 | |
| 10 | 60 | 57 | 35 |
| 15 | 60 | 57 | 46 |
| 0 | 80 | 8 | |
| 10 | 80 | 54 | 30 |
| 15 | 80 | 61 | 42 |

<Test Example 6: Test for Examining Controlling Effect of Fluopyram and Compound I-1 on Wheat Fusarium Head Blight Control>

Fluopyram and Compound I-1 were mixed at a given ratio and a test for a cooperative effect against wheat Fusarium head blight was carried out. The same test method as that of Test Example 5 was applied here.

Table 4 shows a result of this test. A protective value as a result of mixture spraying of fluopyram and Compound I-1 was greater than a theoretical value calculated from respective protective values of fluopyram and Compound I-1 in cases where fluopyram and Compound I-1 each were solely sprayed. This clarified that Compound I-1 and fluopyram

show a synergistic effect.

[Table 4]

| Compound I-1 g/ha | Fluopyram g/ha | Actual Protective Value | Theoretical Protective Value When Mixed |
|---|---|---|---|
| 0 | 0 | 0 | |
| 5 | 0 | 67 | |
| 10 | 0 | 66 | |
| 15 | 0 | 71 | |
| 20 | 0 | 72 | |
| 0 | 20 | 0 | |
| 5 | 20 | 70 | 67 |
| 10 | 20 | 81 | 66 |
| 15 | 20 | 78 | 71 |
| 20 | 20 | 78 | 72 |

<Test Example 7: Test for Examining Controlling Effect of Isopyrazam and Compound I-1 on Wheat Brown Rust Control>

Isopyrazam and Compound I-1 were mixed at a given ratio and a test for a cooperative effect against wheat brown rust was carried out. First, a chemical suspension containing isopyrazam and Compound I-1 were prepared and sprayed on a pot of a wheat plant at two leaves stage so that thus sprayed isopyrazam and Compound I-1 became a predetermined dosage. Then, after the pot was left for approximately one hour at a room temperature so that the plant body dries, Puccinia recondida was inoculated by spraying an urediniospore suspended solution (1 1 $\times$ $10^5$/ml) of Puccinia recondida. Then, the pot was kept in a wet chamber at 20 °C for 15 hours, and after 14 days, onset of disease was examined by a disease-onset area index. Here, the test was conducted by use of one plot pot.

Table 5 shows a test result. In a case where a mixture of isopyrazam and Compound I-1 was sprayed, a protective value of the mixture was greater than a theoretical value calculated from respective protective values of isopyrazam and Compound I-1 in cases where isopyrazam and Compound I-1 each were solely sprayed. This clarified that Compound I-1 and isopyrazam show a synergistic effect.

[Table 5]

| Compound I-1 g/ha | Isopyrazam g/ha | Actual Protective Value | Theoretical Protective Value When Mixed |
|---|---|---|---|
| 0 | 0 | 0 | |
| 3 | 0 | | 93 |
| 1.5 | 0 | 80 | |
| 075 | 0 | 67 | |
| 0.375 | 0 | 37 | 37 |
| 0.1875 | 0 | 13 | |
| 0 | 3.125 | 57 | |
| 3 | | 99 | 97 |
| 1.5 | 3.125 | 100 | 91 |
| 0.75 | 3.125 | 90 | 86 |
| 0.375 | 3.125 | 84 | 73 |
| 0.1875 | 3.125 | 63 | 86 62 |

<Test Example 8: Test for Examining Controlling Effect of Furametpyr and Compound I-1 on Wheat Fusarium Head Blight Control>

Furametpyr and Compound I-1 were mixed at a given ratio and a test for a cooperative effect against wheat Fusarium head blight was carried out. The same test method as that of Test Example 5 was applied here.

Table 6 shows a result of this test. In a case where a mixture of furametpyr and Compound I-1 was sprayed, a protective value of the mixture was greater than a theoretical value calculated from respective protective values of furametpyr and Compound I-1 in cases where furametpyr and Compound I-1 each were solely sprayed. This clarified that Compound I-1 and furametpyr show a synergistic effect.

[Table 6]

| Compound I-1 g/ha | Furametpyr g/ha | Actual Protective Value | Theoretical Protective Value When Mixed |
|---|---|---|---|
| 0 | 0 | 0 | |
| 5 | 0 | 44 | |
| 10 | 0 | 66 | |
| 15 | 0 | 44 | |
| 20 | 0 | 38 | |
| 0 | 20 | 0 | |
| 5 | 20 | 74 | 44 |
| 10 | 20 | 94 | 66 |
| 15 | 20 | 96 | 44 |
| 20 | 20 | 90 | 38 |

<Test Example 9: In Vitro Antimicrobial Activity Test with Use of Benodanil and Compound I-1>

Benodanil and Compound I-1 were mixed in a PDA medium at a given concentration. In the test, a flora disk of 4 mm in diameter was cut from an area around a colony of Microdocum nivale pre-cultured in advance in a pre-culture PDA medium, and Microdocum nivale was inoculated on the PDA medium where chemical agents were mixed. After culturing at 25°C for 3 days, a diameter of a grown colony was measured. Then, a mycelial growth inhibition ratio was calculated by comparing the diameter of this grown colony with a diameter of a colony on a medium without the chemical agents. As in Test Example 1, a cooperative effect was judged by use of Colby's formula.

Table 7 shows a result of this test. In a case where benodanil and Compound I-1 were mixed, a growth inhibition ratio was greater than a theoretical value calculated from respective inhibition ratios of benodanil and Compound I-1 in cases where benodanil and Compound I-1 each were solely used. This clarified that Compound I-1 and benodanil show a synergistic effect.

[Table 7]

| Compound I-1 ppm | Benodanil ppm | Mycelial Growth Inhibition Ratio % | |
|---|---|---|---|
| | | Measured Value | Theoretical Value |
| 0.078 | 10 | 43 | 12 |
| 0.078 | 2.5 | 38 | 8 |
| 0.078 | 0.63 | 35 | 8 |
| 0.078 | 0.1575 | 33 | 8 |
| 0.078 | 0.0393 | 33 | 8 |
| 0 | 10 | 4 | |
| 0 | 2.5 | 0 | |
| 0 | 0.63 | 0 | |
| 0 | 0.1575 | 0 | |
| 0 | 0.0393 | 0 | |

(continued)

| Compound I-1 ppm | Benodanil ppm | Mycelial Growth Inhibition Ratio % | |
|---|---|---|---|
| | | Measured Value | Theoretical Value |
| 0.078 | 0 | 8 | |

<Test Example 10: In Vitro Antimicrobial Activity Test with Use of Penthiopyrad and Compound I-1>

Penthiopyrad and Compound I-1 were mixed in a PDA medium at a given concentration. Then, a mycelial growth inhibition ratio against Microdocum nivale was obtained. The same test method as in Test Example 9 was applied here.

Table 8 shows a result of this test. In a case where penthiopyrad and Compound I-1 were mixed, a growth inhibition ratio was greater than a theoretical value calculated from respective inhibition ratios of penthiopyrad and Compound I-1 in cases where penthiopyrad and Compound I-1 each were solely used. This clarified that Compound I-1 and penthiopyrad show a synergistic effect.

[Table 8]

| Compound I-1 ppm | Penthiopyrad ppm | Mycelial Growth Inhibition Ratio % | |
|---|---|---|---|
| | | Measured Value | Theoretical Value |
| 0.078 | 10 | 60 | 44 |
| 0.078 | 2.5 | 43 | 18 |
| 0.078 | 0.63 | 38 | 13 |
| 0.078 | 0.1575 | 35 | 14 |
| 0.078 | 0.0393 | 35 | 14 |
| 0.02 | 10 | 54 | 43 |
| 0.02 | 2.5 | 41 | 16 |
| 0.02 | 0.63 | 31 | 11 |
| 0.02 | 0.1575 | 32 | 12 |
| 0.02 | 0.0393 | 28 | 12 |
| 0.005 | 10 | 62 | 39 |
| 0.005 | 2.5 | 46 | 11 |
| 0.005 | 0.63 | 41 | 6 |
| 0.005 | 0.1575 | 50 | 7 |
| 0.005 | 0.0393 | 35 | 7 |
| 0 | 10 | 36 | |
| 0 | 2.5 | 7 | |
| 0 | 0.63 | 2 | |
| 0 | 0.1575 | 2 | |
| 0 | 0.0393 | 2 | |
| 0.078 | 0 | 12 | |
| 0.02 | 0 | 10 | |
| 0.005 | 0 | 5 | |

<Test Example 11: In Vitro Antimicrobial Activity Test with Use of Azoxystrobin and Compound I-1>

Azoxystrobin and Compound I-1 were mixed in a PDA medium at a given concentration. Then, a mycelial growth inhibition ratio against Botrytis cinere was obtained. In this test, a flora disk of 4 mm in diameter was cut from an area around a colony of Botrytis cinere and inoculated on a PDA medium where chemical agents were mixed. After culturing at 20°C for 2 days, a diameter of a grown colony was measured. Then, a mycelial growth inhibition ratio was calculated by comparing the diameter of this grown colony with a diameter of a colony on a medium without the chemical agents. As in Test Example 1, a cooperative effect was judged by use of Colby’s formula.

Table 9 shows a result of this test. In a case where azoxystrobin and Compound I-1 were mixed, a growth inhibition ratio was greater than a theoretical value calculated from respective inhibition ratios of azoxystrobin and Compound I-1 in cases where azoxystrobin and Compound I-1 each were solely used. This clarified that Compound I-1 and azoxystrobin show a synergistic effect.

[Table 9]

| Compound I-1 ppm | Azoxystrobin ppm | Mycelial Growth Inhibition Ratio % | |
|---|---|---|---|
| | | Measured Value | Theoretical Value |
| 0.078 | 10 | 94 | 85 |
| 0.078 | 2.5 | 94 | 84 |
| 0.078 | 0.63 | 84 | 78 |
| 0.078 | 0.1575 | 74 | 68 |
| 0.02 | 10 | 100 | 79 |
| 0.02 | 2.5 | 96 | 77 |
| 0.02 | 0.63 | 83 | 70 |
| 0.02 | 0.1575 | 71 | 56 |
| 0 | 10 | 71 | |
| 0 | 2.5 | 69 | |
| 0 | 0.63 | 60 | |
| 0 | 0.1575 | 41 | |
| 0.078 | 0 | 47 | |
| 0.02 | 0 | 25 | |

<Test Example 12: In Vitro Antimicrobial Activity Test with Use of Ipconazole and Compound I-1>

Ipconazole and Compound I-1 were mixed in a PDA medium at a given concentration. Then, a mycelial growth inhibition ratio against Pyricularia oryzae was obtained. In this test, a flora disk of 4 mm in diameter was cut from an area around a colony of Pyricularia oryzae, and inoculated on the PDA medium where chemical agents were mixed. After culturing at 25°C for 7 days, a diameter of a grown colony was measured. Then, a mycelial growth inhibition ratio was calculated by comparing the diameter of this grown colony with a diameter of a colony on a medium without the chemical agents. As in Test Example 1, a cooperative effect was judged by use of Colby's formula.

Table 10 shows a result of this test. In a case where ipconazole and Compound I-1 were mixed, a growth inhibition ratio was greater than a theoretical value calculated from respective inhibition ratios of ipconazole and Compound I-1 in cases where ipconazole and Compound I-1 each were solely used. This clarified that Compound I-1 and ipconazole show a synergistic effect.

[Table 10]

| Compound I-1 ppm | Ipconazole ppm | Mycelial Growth Inhibition Ratio % | |
|---|---|---|---|
| | | Measured Value | Theoretical Value |
| 0.313 | 0.63 | 100 | 92 |
| 0.313 | 0.1575 | 100 | 81 |
| 0.313 | 0.0393 | 80 | 75 |
| 0 | 0.63 | 72 | |
| 0 | 0.1575 | 33 | |
| 0 | 0.0393 | 11 | |
| 0.313 | 0 | 72 | |

<Test Example 13: In Vitro Antimicrobial Activity Test with Use of Prochloraz and Compound I-1>

Prochloraz and Compound I-1 were mixed in a PDA medium at a given concentration. Then, a mycelial growth

inhibition ratio against Gaeumannomyces graminis was obtained. In this test, a flora disk of 4 mm in diameter was cut from an area around a colony of Gaeumannomyces graminis, and Gaeumannomyces graminis was inoculated on the PDA medium where chemical agents was mixed. After culturing at 20°C for 3 days, a diameter of a grown colony was measured. Then, a mycelial growth inhibition ratio was calculated by comparing the diameter of this grown colony with a diameter of a colony on a medium without the chemical agents. As in Test Example 1, a cooperative effect was judged by use of Colby's formula.

Table 11 shows a result of this test. In a case where prochloraz and Compound I-1 were mixed, a growth inhibition ratio was greater than a theoretical value calculated from respective inhibition ratios of prochloraz and Compound I-1 in cases where prochloraz and Compound I-1 each were solely used. This clarified that Compound I-1 and prochloraz show a synergistic effect.

[Table 11]

| Compound I-1 ppm | Prochloraz ppm | Mycelial Growth Inhibition Ratio % | |
|---|---|---|---|
| | | Measured Value | Theoretical Value |
| 0.313 | 0.63 | 100 | 99 |
| 0.313 | 0.1575 | 99 | 92 |
| 0.313 | 0.0393 | 92 | 77 |
| 0.078 | 0.63 | 100 | 98 |
| 0.078 | 0.1575 | 89 | 74 |
| 0.078 | 0.0393 | 43 | 27 |
| 0.02 | 0.63 | 100 | 98 |
| 0.02 | 0.1575 | 76 | 69 |
| 0.02 | 0.0393 | 15 | 12 |
| 0 | 0.63 | 98 | |
| 0 | 0.1575 | 69 | |
| 0 | 0.0393 | 12 | |
| 0.313 | 0 | 47 | |
| 0.078 | 0 | 17 | |
| 0.02 | 0 | 0 | |

<Test Example 14: In Vitro Antimicrobial Activity Test with Use of Prothioconazole and Compound I-1>

Prothioconazole and Compound I-1 were mixed in a PDA medium at a given concentration. Then, a mycelial growth inhibition ratio against Microdocum nivale was obtained. The same test method as in Test Example 9 was applied here.

Table 12 shows a result of this test. In a case where prothioconazole and Compound I-1 were mixed, a growth inhibition ratio was greater than a theoretical value calculated from respective inhibition ratios of prothioconazole and Compound I-1 in cases where prothioconazole and Compound I-1 each were solely used. This clarified that Compound I-1 and prothioconazole show a synergistic effect.

[Table 12]

| Compound I-1 ppm | Prothioconazole ppm | Mycelial Growth Inhibition Ratio % | |
|---|---|---|---|
| | | Measured Value | Theoretical Value |
| 0.313 | 2.5 | 100 | 84 |
| 0.313 | 0.63 | 70 | 56 |
| 0.313 | 0.1575 | 61 | 41 |
| 0.078 | 2.5 | 100 | 77 |
| 0.078 | 0.63 | 64 | 39 |
| 0.078 | 0.1575 | 23 | 17 |
| 0 | 2.5 | 76 | |

(continued)

| Compound I-1 ppm | Prothioconazole ppm | Mycelial Growth Inhibition Ratio % | |
|---|---|---|---|
| | | Measured Value | Theoretical Value |
| 0 | 0.63 | 34 | |
| 0 | 0.1575 | 11 | |
| 0.313 | 0 | 34 | |
| 0.078 | 0 | 8 | |

<Test Example 15: In Vitro Antimicrobial Activity Test with Use of Fenpropimorph and Compound I-1>

Fenpropimorph and Compound I-1 were mixed in a PDA medium at a given concentration. Then, a mycelial growth inhibition ratio against Alternaria alternata was obtained. In this test, a flora disk of 4 mm in diameter was cut from an area around a colony of Alternaria alternate, and Alternaria alternate was inoculated on the PDA medium where chemical agents were mixed. After culturing at 25°C for 3 days, a diameter of a grown colony was measured. Then, a mycelial growth inhibition ratio was calculated by comparing the diameter of this grown colony with a diameter of a colony on a medium without the chemical agents. As in Test Example 1, a cooperative effect was judged by use of Colby's formula. Table 13 shows a result of this test. In a case where fe npropimorph and Compound I-1 were mixed, a growth in hibition ratio was greater than a theoretical value calcul ated from respective inhibition ratios of fenpropimorph a nd Compound I-1 in cases where fenpropimorph and Com pound I-1 each were solely used. This clarified that Com pound I-1 and fenpropimorph show a synergistic effect.

[Table 13]

| Compound I-1 ppm | Fenpropimorph ppm | Mycelial Growth Inhibition Ratio % | |
|---|---|---|---|
| | | Measured Value | Theoretical Value |
| 0.313 | 0.1575 | 72 | 50 |
| 0.313 | 0.0393 | 65 | 50 |
| 0.078 | 0.1575 | 42 | 24 |
| 0.078 | 0.0393 | 32 | 24 |
| 0.02 | 0.1575 | 26 | 3 |
| 0.02 | 0.0393 | 20 | 3 |
| 0 | 0.1575 | 0 | |
| 0 | 0.0393 | 0 | |
| 0.313 | 0 | 50 | |
| 0.078 | 0 | 24 | |
| 0.02 | 0 | 3 | |

<Test Example 16: In Vitro Antimicrobial Activity Test with Use of Thiophanate-methyl and Compound I-1>

Thiophanate-methyl and Compound I-1 were mixed in a PDA medium at a given concentration. In the test, a flora disk of 4 mm in diameter was cut from an area around a colony of Pseudocercoporella herpotrichoides pre-cultured in advance in a pre-culture PDA medium, and Pseudocercoporella herpotrichoides was inoculated on the PDA medium where chemical agents were mixed. After culturing at 20°C for 7 days, a diameter of a grown colony was measured. Then, a mycelial growth inhibition ratio was calculated by comparing the diameter of this grown colony with a diameter of a colony on a medium without the chemical agents. As in Test Example 1, a cooperative effect was judged by use of Colby's formula.

Table 14 shows a result of this test. In a case where thiophanate-methyl and Compound I-1 were mixed, a growth inhibition ratio was greater than a theoretical value calculated from respective inhibition ratios of thiophanate-methyl and Compound I-1 in cases where thiophanate-methyl and Compound I-1 each were solely used. This clarified that Compound I-1 and thiophanate-methyl show a synergistic effect.

[Table 14]

| Compound I-1 ppm | Thiophanate-methyl ppm | Mycelial Growth Inhibition Ratio % | |
|---|---|---|---|
| | | Measured Value | Theoretical Value |
| 0.313 | 0.63 | 100 | 72 |
| 0.313 | 0.1575 | 63 | 42 |
| 0.313 | 0.0393 | 49 | 42 |
| 0.078 | 0.63 | 87 | 53 |
| 0.078 | 0.1575 | 8 | 3 |
| 0 | 0.63 | 52 | |
| 0 | 0.1575 | 0 | |
| 0 | 0.0393 | 0 | |
| 0.313 | 0 | 42 | |
| 0.078 | 0 | 3 | |

<Test Example 17: In Vitro Antimicrobial Activity Test with Use of Tebuconazole and Compound I-1>

Tebuconazole and Compound I-1 were mixed in a PDA medium at a given concentration. In the test, a flora disk of 4 mm in diameter was cut from an area around a colony of Pyricularia oryzae pre-cultured in advance in a pre-culture PDA medium, and Pyricularia oryzae was inoculated on the PDA medium where chemical agents were mixed. After culturing at 25°C for 7 days, a diameter of a grown colony was measured. Then, a mycelial growth inhibition ratio was calculated by comparing the diameter of this grown colony with a diameter of a colony on a medium without the chemical agents. As in Test Example 1, a cooperative effect was judged by use of Colby's formula.

Table 15 shows a result of this test. In a case where tebuconazole and Compound I-1 were mixed, a growth inhibition ratio was greater than a theoretical value calculated from respective inhibition ratios of tebuconazole and Compound I-1 in cases where tebuconazole and Compound I-1 each were solely used. This clarified that Compound I-1 and tebuconazole show a synergistic effect.

[Table 15]

| Compound I-1 ppm | Tebuconazole ppm | Mycelial Growth Inhibition Ratio % | |
|---|---|---|---|
| | | Measured Value | Theoretic Value |
| 0.313 | 0.63 | 100 | 87 |
| 0.313 | 0.1575 | 100 | 77 |
| 0.313 | 0.0393 | 100 | 75 |
| 0 | 0.63 | 50 | |
| 0 | 0.1575 | 12 | |
| 0 | 0.0393 | 3 | |
| 0.313 | 0 | 74 | |

<Test Example 18: In Vitro Antimicrobial Activity Test with Use of Chlorothalonil and Compound I-1>

Chlorothalonil and Compound I-1 were mixed in a PDA medium at a given concentration. In the test, a flora disk of 4 mm in diameter was cut from an area around a colony of Rhizoctonia solani pre-cultured in advance in a pre-culture PDA medium, and Rhizoctonia solani was inoculated on the PDA medium where chemical agents were mixed. After culturing at 25°C for 1 day, a diameter of a grown colony was measured. Then, a mycelial growth inhibition ratio was calculated by comparing the diameter of this grown colony with a diameter of a colony on a medium without the chemical agents. As in Test Example 1, a cooperative effect was judged by use of Colby's formula.

Table 16 shows a result of this test. In a case where chlorothalonil and Compound I-1 were mixed, a growth inhibition ratio was greater than a theoretical value calculated from respective inhibition ratios of chlorothalonil and Compound I-1 in cases where each of chlorothalonil and Compound I-1 each were solely used. This clarified that Compound I-1 and chlorothalonil show a synergistic effect.

[Table 16]

| Compound I-1 ppm | Chlorothalonil ppm | Mycelial Growth Inhibition Ratio % | |
|---|---|---|---|
| | | Measured Value | Theoretical Value |
| 1.25 | 10 | 100 | 99 |
| 1.25 | 2.5 | 100 | 95 |
| 1.25 | 0.63 | 97 | 92 |
| 1.25 | 0.1575 | 76 | 73 |
| 1.25 | 0.0393 | 72 | 68 |
| 0 | 10 | 98 | |
| 0 | 2.5 | 84 | |
| 0 | 0.63 | 74 | |
| 0 | 0.1575 | 15 | |
| 0 | 0.0393 | 0 | |
| 1.25 | 0 | 68 | |

<Test Example 19: In Vitro Antimicrobial Activity Test with Use of Metalaxyl and Compound I-1>

Metalaxyl and Compound I-1 were mixed in a PDA medium at a given concentration. In the test, a flora disk of 4 mm in diameter was cut from an area around a colony of Pythium aphanidermatum pre-cultured in advance in a pre-culture PDA medium, and Pythium aphanidermatum was inoculated on the PDA medium where chemical agents were mixed. After culturing at 25°C for 3 days, a diameter of a grown colony was measured. Then, a mycelial growth inhibition ratio was calculated by comparing the diameter of this grown colony with a diameter of a colony on a medium without the chemical agent. As in Test Example 1, a cooperative effect was judged by use of Colby's formula.

Table 17 shows a result of this test. In a case where metalaxyl and Compound I-1 were mixed, a growth inhibition ratio was greater than a theoretical value calculated from respective inhibition ratios of metalaxyl and Compound I-1 in cases where metalaxyl and Compound I-1 each were solely used. This clarified that Compound I-1 and metalaxyl show a synergistic effect.

[Table 17]

| Compound I-1 ppm | Metalaxyl ppm | Mycelial Growth Inhibition Ratio % | |
|---|---|---|---|
| | | Measured Value | Theoretical Value |
| 0.005 | 10 | 40 | 31 |
| 0.005 | 2.5 | 37 | 22 |
| 0.005 | 0.63 | 22 | 20 |
| 0.005 | 0.1575 | 27 | 15 |
| 0.005 | 0.0393 | 27 | 11 |
| 0 | 10 | 25 | |
| 0 | 2.5 | 14 | |
| 0 | 0.63 | 12 | |
| 0 | 0.1575 | 7 | |
| 0 | 0.0393 | 3 | |
| 0.005 | 0 | 9 | |

<Test Example 20: Test for Examining Controlling Effect of Metconazole and Compound I-11 or Compound I-12 on Wheat Fusarium Head Blight Control>

Metconazole and Compound I-11 or Compound I-12 were mixed at a given ratio and a test for a cooperative effect against wheat Fusarium head blight was carried out. The same test method as that of Test Example 5 was applied here.

Table 14 shows a result of this test. Each protective value in a case where a mixture of metconazole and

Compound I-11 or Compound I-12 was sprayed was greater than a theoretical value calculated from respective protective values of metconazole and Compound I-11 or Compound I-12 in cases where metconazole and Compound I-11 or Compound I-12 each were solely sprayed. This clarified that Compound I-11 or Compound I-12 and metconazole show a synergistic effect.

[Table 18]

| Compound No. | Compound on the Left g/ha | Metconazole g/ha | Actual Protective Value | Theoretical Protective Value When Mixed |
|---|---|---|---|---|
| Compound I-11 | 25 | 0 | 25.6 | - |
| Compound I-11 | 50 | 0 | 56.7 | - |
| Compound I-11 | 75 | 0 | 66.7 | - |
| Compound I-11 | 25 | 10 | 63.3 | 35.9 |
| Compound I-11 | 50 | 10 | 66.7 | 62.7 |
| Compound I-11 | 75 | 10 | 844 | 713 |
| Compound I-12 | 25 | 0 | 40.0 | - |
| Compound I-12 | 50 | 0 | 65.6 | - |
| Compound I-12 | 75 | 0 | 75.6 | - |
| Compound I-12 | 25 | 10 | 57.8 | 48.3 |
| Compound I-12 | 50 | 10 | 87.8 | 70.3 |
| Compound I-12 | 75 | 10 | | |
| - | - | 10 | 13.9 | - |
| - | - | 20 | 26.7 | - |
| Non-Treated | | | 0.0 | - |

<Test Example 21: Test for Examining Controlling Effect of Foliage Application Treatment with Use of Plant Disease Control Composition on Wheat Fusarium Head Blight Control>

Cut ears, cut from wheat plants (cultivar: NORIN No. 61) at the flowering stage, were prepared. Then, a formulation in the form of wettable powder as in Mixture Formulation Example 1 described later was prepared so that the formulation contains Compound XVII-2 and Compound I-1 at respective given concentrations. Then, thus prepared formulation was diluted with and suspended in water at a predetermined concentration, and then sprayed the ear portion at a rate of 1,000 L/ha. After the ear portion was air-dried, the ear portion was inoculated by spraying with Fusarium graminearum spores (adjusted to $1 \times 10^5$/ml, containing Gramin S at a final concentration of 60 ppm) and then kept at 20°C under a high-humidity condition. On the fifth day after the inoculation, a lesion degree of wheat Fusarium head blight was examined and a protective value was calculated by the following formula.

$$\text{Protective value (\%)} = (1 - \text{mean lesion degree in sprayed plot/mean lesion degree in unsprayed plot}) \times 100$$

Note that the test was conducted in three test plots, each of which test plots included three ears.

Judgement of a cooperative effect as a result of mixing Compound XVII-2 and Compound I-1 was carried out with reference to a method for judging a mixing effect according to an isoeffect curve method as described on pages 109 to 116 of Agricultural Chemical Testing Method, Vol. 3 (Soft Science Co., Ltd., March, 1981). According to this judgement method, when an effect of combining two kinds of compounds is additive, the isoeffect curve is linearly extended; when the effect of combining the two kinds of compounds is opposing, the isoeffect curve is convex upward (convex curve); and when the effect of the two kinds of compounds is cooperative (synergistic), the isoeffect curve is convex downward (concave curve).

Based on control effects obtained from various combinations of concentrations of the compounds, an isoeffect curve of a protective value of 60% was prepared. Fig. 3 shows thus prepared isoeffect curve.

As shown in Fig. 3, the isoeffect curve was a concave curve that was convex downward, in a case where a

mixture of Compound XVII-2 (in Fig. 3, Compound A) and Compound I-1 (in Fig. 3, Compound B) was sprayed. In other words, this result shows that when Compound XVII-2 and Compound I-1 are mixed, a cooperative control effect can be obtained.

<Reference Test Example: Test for Examining Controlling Effect of Foliage Application Treatment on Wheat Fusarium Head Blight Control>

Cut ears, cut from wheat plants (cultivar: NORIN No. 61) at the flowering stage, were prepared. Then, a formulation in the form of wettable powder was prepared so that the formulation contains only Compound XVII-2. Then, thus prepared formulation was diluted with water and suspended in water at a predetermined concentration (500 mg/L), and then sprayed onto the ear portion at a rate of 1,000 L/ha. After the ear portion was air-dried, the ear portion was inoculated by spraying with Fusarium graminearum spores (adjusted to $2 \times 10^5$/ml, containing Gramin S at a final concentration of 60 ppm and saccharose at a final concentration of 0.5%) and then kept at 20°C under a high-humidity condition. On the fourth to seventh days after the inoculation, a lesion degree of wheat Fusarium head blight was examined and a protective value was calculated by the following formula.

$$\text{Protective value (\%)} = (1 - \text{mean lesion degree in sprayed plot/mean lesion degree in unsprayed plot}) \times 100$$

As a result, the formulation containing Compound XVII-2 showed a protective value of 90% or higher.
Further, a similar test was carried out by preparing a formulation in the form of wettable powder containing only Compound I-1.
As a result, the formulation containing Compound I-1 showed a protective value of 90% or higher.

<Production Example 1>

Synthesis of (1RS,2SR,5SR)-5-(4-chlorobenzyl)-2-chloromethyl-2-methyl-1-(1H-1,2,4-triazole-1-ylmethyl)cyclopentanol (Compound I-1 (Compound (I), $R^a$=$CH_3$, $R^b$=$CH_2Cl$, Ym=4-Cl, isomer type C))
In an argon atmosphere, (1RS,2RS,3SR)-p-toluenesulfonic acid 3-(4-chlorobenzyl)-2-hydroxy-1-methyl-2-(1H-1,2,4-triazole-1-ylmethyl)cyclopentyl methyl ester (Compound II-1 (Compound (II), $R^{a1}(L^a)p^a$=$CH_3$, $R^{b1}(L^b)p^b$=$CH_2OTos$, Ym=4-Cl, isomer type C)) (0.0245 mmol) was dissolved in dehydrated DMF (0.24 ml). Then, after lithium chloride (0.245 mmol) was added, stirring was carried out at 100°C for 1.5 hours. Into thus obtained reaction solution, ethyl acetate (2 ml) was added. Then, washing with saturated brine was carried out. Subsequently, an organic layer was dried with anhydrous sodium sulfate and then concentrated. Thereafter, a target substance was obtained as a result of purification by silica gel column chromatography.
Yield: 58%
$^1$H-NMR (400 MHz, $CDCl_3$) δ: 1.18 (3H, s), 1.46 (2H, m), 1.70 (1H, m), 1.92 (2H, m), 2.35 (2H, m), 3.26 (1H, d, J=10.8 Hz), 3.57 (1H, d, J=10.8 Hz), 4.06 (1H, s), 4.25 (1H, d, J=14.2 Hz), 4.54(1H, d, J=14.2 Hz), 6.98 (2H, d, J=8.4 Hz), 7.21 (2H, d, J=8.4 Hz), 8.02 (1H, s), 8.19 (1H, s).

<Production Example 2>

Synthesis of (1RS,2RS,5SR)-5-(4-chlorobenzyl)-2-chloromethyl-2-methyl-1-(1H-1,2,4-triazole-1-ylmethylcyclopentanol (Compound I-2 (Compound (I), $R_a$=$CH_2Cl$, $R^b$=$CH_3$, Ym=4-Cl, isomer type C))
In an argon atmosphere, (1RS,2SR,3RS)-p-toluenesulfonic acid 3-(4-chlorobenzyl)-2-hydroxy-1-methyl-2-(1H-1,2,4-triazole-1-ylmethyl)cyclopentyl methyl ester (Compound II-2 (Compound (II), $R^{a1}(L^a)p^a$=$CH_2OTos$, $R^{b1}(L^b)p^b$=$CH_3$, Ym=4-Cl, isomer type C)) 0.0216 mmol) was dissolved in dehydrated DMF (0.21 ml). Then, after lithium chloride (0.216 mmol) was added, stirring was carried out at 100°C for 3 hours. Into thus obtained reaction solution, ethyl acetate (2 ml) was added. Then, washing with saturated brine was carried out. Subsequently, an organic layer was dried with anhydrous sodium sulfate and then concentrated. Thereafter, a target substance was obtained as a result of purification by silica gel column chromatography.
Yield: 60 %
$^1$H-NMR (400 MHz, $CDCl_3$) δ: 0.81 (3H, s), 1.41-1.77 (4H, m), 2.30 (1H, m), 2.42 (1H, dd, J=13.6,4.7 Hz), 2.51 (1H, dd, J=13.6, 10.1 Hz), 3.52 (1H, d, J=11.1 Hz), 3.61 (1H, d, J=11.1 Hz), 3.98 (1H, s), 4.24 (1H, d, J=14.2 Hz), 4.38 (1H, d, J=14.2 Hz), 7.03 (2H, d, J=8.4 Hz), 7.22 (2H, d, J=8.4 Hz), 7.99 (1H, s), 8.20 (1H, s).

<Production Example 3>

Synthesis of (1RS,2SR,5SR)-2-bromomethyl-5-(4-chlorobenzyl)-2-methyl-1-(1H-1,2,4-triazole-1-ylmethyl)cyclopentanol (Compound I-3 (Compound (I), $R^a$=$CH_3$, $R^b$=$CH_2Br$, Ym=4-Cl, isomer type C))

In an argon atmosphere, Compound (II) (0.8163 mmol) of Compound II-1 was dissolved into dehydrated DMF (8 ml). Then, lithium bromide (8.706 mmol) was added and stirring was carried out at 60°C for 8 hours. Thus obtained reaction solution was cooled down and ethyl acetate was added. Further, washing with saturated brine was carried out. Subsequently, an organic layer was dried with anhydrous sodium sulfate and then concentrated. Thereafter, a target substance was obtained as a result of purification by silica gel column chromatography.

Yield: 17%

$^1$H-NMR (400 MHz, $CDCl_3$) $\delta$:

1.19 (3H, s), 1.41-1.53 (2H, m), 1.65-1.75 (1H, m), 1.91-2.04 (2 H, m), 2.32-2.41 (2H, m), 2.96 (1H, d, J=9.9 Hz), 3.54 (1H, d, J=9.9 Hz), 4.09 (1H, s), 4.23 (1H, d, J=14.2 Hz), 4.50(1H, d, J=14.2 Hz), 6.99 (2H, d, J=8.4 Hz), 7.21(2H, d, J=8.4 Hz), 8.01 (1H, s), 8.18 (1H, s).

<Production Example 4>

Synthesis of (1RS,2SR,5SR)-5-(4-chlorobenzyl)-2-(2-chloroethyl)-2-methyl-1-(1H-1,2,4-triazole-1-ylmethyl)cyclopentanol (Compound I-4 (Compound (I), $R^a$=$CH_2CH_2Cl$, $R^b$=$CH_3$, Ym=4-Cl, isomer type C))

First, p-toluenesulfonic acid 2-[(1RS,2SR,3RS)-3-(4-chlorobenzyl)-2-hydroxy-1-methyl-2-(1H-1,2,4-triazole-1-ylmethyl)cyclopentyl]ethyl ester (Compound II-3 (Compound (II), $R^{a1}(L^a)p^a$=$CH_3$, $R^{b1}(L^b)p^b$=$CH_2CH_2OTos$, Ym=4-Cl, isomer type C)) (0.084 mmol) was dissolved in DMF (1 ml). Then, lithium chloride (0.77 mmol) was added and stirring was carried out at 80°C for 4 hours. Then, a solvent was distilled away and ethyl acetate was added. Subsequently, after an organic layer was washed with water and saturated brine, the organic layer was dried with anhydrous sodium sulfate and then concentrated. Thereafter, a target substance was obtained as a result of purification by silica gel column chromatography.

Yield: 71%

$^1$H-NMR (400 MHz, $CDCl_3$) $\delta$: 0.66 (3H, s), 1.43-1.53 (2H, m), 1.61-1.74 (2H, m), 1.83-1.89 (2H, m), 2.18-2.26 (1H, m), 2.40 (1H, dd, J=13.6, 4.9 Hz), 2.48 (1H, dd, J=13.6, 10.0 Hz), 3.46-3.57 (2H, m), 4.01 (1H, s), 4.16 (1H, d, J=14.1 Hz), 4.18 (1H, d, J=14.1 Hz), 7.01 (2H, d, J=8.4 Hz), 7.21 (2H, d, J=8.4 Hz), 7.99 (1H, s), 8.16 (1H, s).

<Production Example 5>

Synthesis of (a) (1RS,2RS,5SR)-5-(4-chlorobenzyl)-2-(2-chloropropenyl)-2-methyl-1-(1H-1,2,4-triazole-1-ylmethyl)cyclopentanol (Compound I-5 (Compound (I), $R^a$ = $CH_3$, $R^b$=$CH_2CCl$=$CH_2$, Ym=4-Cl, isomer type C)) and (b) (1RS,2SR,5SR)-5-(4-chlorobenzyl)-2-(2-chloropropenyl)-2-methyl-1-(1H-1,2,4-triazole-1-ylmethyl)cyclopentanol (Compound I-6 (Compound (I), $R^a$ = $CH_2CCl$=$CH_2$, $R^b$= $CH_3$, Ym=4-Cl, isomer type C))

(1) Synthesis of Intermediate, 7-(4-chlorobenzyl)-4-(2-chloropropenyl)-4-methyl-1-oxaspiro[2.4]heptane (Compound (III), $R^a$ =$CH_3$, $R^b$=$CH_2CCl$=$CH_2$, Ym=4-Cl)

In an argon atmosphere, Sm (samarium) (6.71 mmol) was added in anhydrous THF (9 ml). Then, at a room temperature, 1,2-diiodoethane (3.73 mmol) was added. After thus obtained reaction solution was stirred at a room temperature for one hour, the reaction solution was cooled down to a temperature in a range of -7°C to -2°C. Further, to this reaction solution, 2-(2-chloro-2-propenyl)-5-(4-chlorobenzyl)-2-methylcyclopentanone (Compound (V), $R^a$ =$CH_3$, $R^b$ = $CH_2CCl$=$CH_2$, Ym=4-Cl) dissolved in THF (5ml) and diiodomethane (0.90 g) were added and stirring was carried out for 1.5 hour at the temperature in the range of - 7°C to -2°C. To thus obtained solution, 2N NaOH aqueous solution (8 ml) was added and stirring was carried out under cooling with ice for an hour. Then, 2N hydrochloric acid aqueous solution (8 ml) was added. Further, extraction with hexane was carried out. Subsequently, after an organic layer was washed with water and saturated brine, the organic layer was dried with anhydrous sodium sulfate and concentrated. Thereby, a crude target substance was obtained.

(2) Synthesis of Compound I-15 and Compound I-115

Crude Compound (III) (0.77 mmol) synthesized as above was dissolved into DMF (1.5 ml) and potassium carbonate (0. 781 mmol) and 1H-1,2,4-triazole (0.77 mmol) were added. Then, stirring was carried out first at approximately 80°C for 2 hours and then at approximately 90°C for 2 hours. Then, ethyl acetate and water was added to thus obtained reaction solution and a resultant solution was partitioned. Subsequently, after an aqueous layer was extracted

with ethyl acetate, an organic layer was dried with anhydrous sodium sulfate and concentrated. Thereafter, a target substance was obtained by purification with use of a silica gel column.

<Compound I-5>

Yield: 4%
$^1$H-NMR (400 MHz, $CDCl_3$) δ: 1.11 (3H, s), 1.40-2.50 (8H, m), 2.59 (1H, d, , J= 14.0 Hz), 3.82 (1H, s), 4.23 (1H, d, , J= 14.2 Hz), 4.33 (1H, d, J= 14.2 Hz), 5.02 (1H, s), 5.20 (1H, s), 6.99-7.07 (2H, m), 7.18 - 7.25 (2H, m), 8.01 (1H, s), 8.19 (1H, s).

<Compound 1-6>

Yield: 16%
$^1$H-NMR (400 MHz, $CDCl_3$) δ: 0.75 (3H, s), 1.40-1.58 (1H, m), 1.62-1.83 (3H, m), 2.15-2.53 (5H, m), 3.72 (1H, s), 4.14 (1H, d, , J= 14.1 Hz), 4.25 (1H, d, , J= 14.1 Hz), 5.12 (1H, d,, J= 1.1 Hz), 5.32 (1H, d, , J= 1.1 Hz), 6.99-7.06 (2H, m), 7.18 - 7.26 (2H, m), 7.99 (1H, s), 8.16 (1H, s).

These two kinds of isomers of the compound are produced in Production Example 5 though there may exist 4 possible types of isomers of the compound in terms of relative steric configurations. In view of reactivity of samarium iodide, the hydroxy group and the benzyl group at 5-position were considered to take a cis configuration, thereby predicting and assigning the isomer type of the compound to type C. However, the isomer type could possibly be type T.

<Production Example 6>

Synthesis of (1RS,2SR,5SR)-5-(4-chlorobenzyl)-2-chloromethyl-2-ethyl-1-(1H-1,2,4-triazole-1-ylmethyl)cyclopentanol (Compound 1-7 (Compound (I), $R^a$=$CH_2CH_3$, $R^b$ =$CH_2Cl$, Ym=4-Cl, isomer type C))

(1RS,2RS,3SR)-p-toluenesulfonic acid 3-(4-chlorobenzyl)-1-ethyl-2-hydroxy-2-(1H-1,2,4-triazole-1-yl)methyl cyclopentyl methyl ester (Compound II-4 (Compound (II), $R^{a1}(L^a)p^a$=$CH_2CH_3$, $R^{b1}(L^b)p^b$ =$CH_2OTos$, Ym=4-Cl, isomer type C)) (0.111 mmol) was dissolved into DMF (1.1 ml). Then, lithium chloride (1.11 mmol) was added and stirring was carried out at 80°C for 30 minutes. After the end of reaction, water was added and extraction with ethyl acetate was carried out. Then, after an organic layer was washed with saturated brine, the organic layer was further washed with anhydrous sodium sulfate. Subsequently, a solvent was distilled away. Thereafter, by purification of a resultant residue by silica gel column chromatography, a target substance was obtained.
Yield: 7%
$^1$H-NMR (400 MHz, $CDCl_3$) δ: 0.94 (3Ht, J=7.3 Hz), 1.31-1.46 (2H, m), 1.49 (1H, dd, J=13.0, 3.2 Hz), 1.50-1.63 (3H, m), 1.79-1.80 (1H, m), 2.13 (1H, dd, J=13.0, 11.5 Hz), 2.23-2.31 (1H, m), 3.50 (1H, d, J=11.4 Hz), 4.03 (1H, s), 4.09 (1H, d, J=11.4 Hz), 4.34 (1H, d, J=14.2 Hz), 4.79 (1H, d, J=14.2 Hz), 6.88 (2H, d, J=8.4 Hz), 7.17 (2H, d, J=8.4 Hz), 8.01 (1H, s), 8.21 (1H, s).

<Production Example 7>

Synthesis of cis-5-(4-chlorobenzyl)-2,2-bis(chloromethyl)-1-(1H-1,2,4-triazole-1-ylmethyl)cyclopentanol (Compound 1-8 (Compound (I), $R^a$=$CH_2Cl$, $R^b$ =$CH_2Cl$, Ym=4-Cl, isomer type C))

First, cis-5-(4-chlorobenzyl)-2,2-bis(methanesulfonyloxymethyl)-1-(1H-1,2,4-triazole-1-yl)methylcyclopentanol (Compound II-5 (Compound (II), $R^{a1}(L^a)p^a$=$CH_2OMs$, $R^{b1}(L^b)p^b$= $CH_2OMs$, Ym=4-Cl, isomer type C)) (0.136 mmol) was dissolved into DMF (1.5 ml). Then, lithium chloride (1.42 mmol) was added and stirring was carried out at 80°C for 7 hours. To thus obtained solution, p-toluenesulfonic acid monohydrate (0.68 mmol) was added and stirring was further carried out for 4 hours. After the end of reaction, water was added and extraction with ethyl acetate was carried out. Then, after an organic layer was washed with saturated brine, the organic layer was dried with anhydrous sodium sulfate. Subsequently, a solvent was distilled away. Thereafter, by purification of a resultant residue by silica gel column chromatography, a target substance was obtained.
Yield: 18%
$^1$H-NMR (400 MHz, $CDCl_3$) δ: 1.45-1.55 (1H, m), 1.61-1.75 (2H, m), 1.86-1.95 (1H, m), 2.26-2.37 (2H, m), 3.72 (1H, d, J=11.7 Hz), 3.73 (1H, d, J=11.3 Hz), 3.80 (1H, d, J=11.3 Hz), 3.82 (1H, d, J=1 1.7 Hz), 4.30 (1H, d, J=14.1 Hz), 4.54 (1H, s), 4.78 (1H, d, J=14.1 Hz), 6.93 (2H, d, J=8.4 Hz), 7.19 (2H, d, J=8.4 Hz), 8.02 (1H, s), 8.22 (1H, s).

<Production Example 8>

Synthesis of (1RS,2RS,5RS)-5-(4-chlorobenzyl)-2-chloromethyl-2-methyl-1-[1,2,4]triazole-1-ylmethylcyclopentanol (Compound I-9 (Compound (I), $R^a$=$CH_2Cl$, $R^b$=$CH_3$, Ym=4-Cl, isomer type T))

(1RS,2SR,5RS)-5-(4-chlorobenzyl)-2-(p-toluenesulfonyl)oxymethyl-2-methyl-1-[1,2,4]triazole-1-ylmethylcyclopentanol (Compound II-6 (Compound (II), $R^{a1}(L^a)p^a$=$CH_2OTos$, $R^{b1}(L^b)p^b$ $R^{b1}$= $CH_3$, Ym=4-Cl, isomer type T)) (0.440 mmol) was dissolved in DMF (4 ml). Then, lithium chloride (6.60 mmol) was added and stirring was carried out at 80°C for 3.5 hours. After the end of reaction, a solvent was distilled away. Then, water was added and extraction with ethyl acetate was carried out. Further, after an organic layer was washed with water and saturated brine, the organic layer was dried with anhydrous sodium sulfate. Subsequently, a solvent was distilled away. Thereafter, by purification of a resultant residue by silica gel column chromatography, a target substance was obtained.
Yield: 22.2%
$^1$H-NMR (400 MHz, $CDCl_3$) $\delta$: 1.08 (3H, s), 1.29-1.39 (1H, m), 1.63-1.70 (1H, m), 1.71-1.82 (2H, m), 2.16 (1H, t, J=12.8 Hz), 2.39-2.46 (1H, m), 2.80 (1H, dd, J=12.8, 3.3 Hz), 3.47 (1H, d, J=11.1 Hz), 3.62 (1H, d, J=11.1 Hz), 3.80 (1H, s), 4.46 (2H, s), 7.03 (2H, d, J=8.4 Hz), 7.22 (2H, d, J=8.4 Hz), 7.99 (1H, s), 8.30 (1H, s).

<Production Example 9>

Synthesis of (1RS,2SR,5RS)-5-(4-chlorobenzyl)-2-chloromethyl-2-methyl-1-[1,2,4]triazole-1-ylmethylcyclopentanol (Compound I-10 (Compound (I), $R^a$=$CH_3$, $R^b$=$CH_2Cl$, Ym=4-Cl, isomer type T))
(1RS,4RS,5RS)-4-(4-chlorobenzyl)-1-methyl-5-(1H-1,2,4-triazole-1-ylmethyl)-6-oxabicyclo[3,2,0]heptane (Compound XVI-2, (Compound (XVI), $R^1$ = $CH_3$, Ym=4-Cl, isomer type T)) (0.472 mmol) was dissolved in DMF (3 ml). Then, lithium chloride (7.08 mmol) and p-toluenesulfonic acid monohydrate (0.566 mmol) were added and stirring was carried out at 80°C for 1.5 hours. After the end of reaction, DMF was distilled away under reduced pressure. To a resultant residue, saturated sodium hydrogen carbonate aqueous solution and water was added and extraction with ethyl acetate was carried out. After an organic layer was washed with water and saturated brine, the organic layer was dried with anhydrous sodium sulfate. Subsequently, a solvent was distilled away. Thereafter, the residue was recrystallized from ethyl acetate/hexane and thereby a target substance was obtained.
Yield: 77.8%.
$^1$H-NMR (400 MHz, $CDCl_3$) $\delta$: 1.23 (3H, s), 1.34-1.43 (1H, m), 1.61-1.69 (1H, m), 1.74-1.83 (1H, m), 1.86-1.94 (1H, m), 2.20-2.29 (1H, m), 2.33 (1H, t, J=12.1 Hz), 2.93 (1H, dd, J=12.1, 2.8 Hz), 3.56 (1H, d, J=10.9 Hz), 3.63 (1H, d, J=10.9 Hz), 4.19 (1H, s), 4.47 (1H, d, J=14.2 Hz), 4.52 (1H, d, J=14.2 Hz), 6.95 (2H, d, J=8.3 Hz), 7.21 (2H, d, J=8.3 Hz), 8.03 (1H, s). 8.21 (1H, s).

<Production Example 10>

Synthesis of (1RS,2SR,5SR)-2-chloromethyl-5-(4-fluorobenzyl)-2-methyl-1-(1H-1,2,4-triazole-1-ylmethyl)cyclopentanol (Compound I-11 (Compound (I), $R^a$=$CH_3$, $R^b$=$CH_2Cl$, Ym=4-F, isomer type C))
(1RS,4SR,5RS)-4-(4-fluorobenzyl)-1-methyl-5-(1H-1,2,4-triazole-1-ylmethyl)-6-oxabicyclo[3,2,0]heptane (Compound XVI-4, (Compound (XVI), $R^1$=$CH_3$, Ym=4-F, isomer type C)) (0.667 mmol) was dissolved in DMF (2 ml) and heated to 80°C. Into a resultant solution, lithium chloride (8.00 mmol) and p-toluenesulfonic acid monohydrate (0.800 mmol) were added and stirring was carried out for one hour. After the end of reaction, water was added to a residue and extraction with ethyl acetate was carried out. Then, an organic layer was washed with water and saturated brine, and dried with anhydrous sodium sulfate. Subsequently, a solvent was distilled away. Thereafter, by carrying out purification of a resultant residue by silica gel column chromatography, a target substance was obtained.
Yield: 99.6%
$^1$H-NMR ($CDCl_3$) $\delta$: 1.18 (3H, s), 1.41-1.53 (2H, m), 1.65-1.76 (1H, m), 1.89-1.98 (2H, m), 2.28-2.38 (2H, m), 3.26 (1H, d, J=10.8 Hz), 3.57 (1H, d, J=10.8 Hz), 4.05 (1H, s), 4.25 (1H, d, J=14.2 Hz), 4.54 (1H, d, J=14.2 Hz), 6.92 (2H, t, J=8.7 Hz), 7.00 (2H, dd, J=8.7, 5.5 Hz), 8.01 (1H, s), 8.19 (1H, s).

< Production Example 11>

Synthesis of (1RS,2SR,5SR)-2-chloromethyl-5-benzyl-2-methyl-1-(1H-1,2,4-triazole-1-ylmethyl)cyclopentanol (Compound I-12 (Compound (I), $R^a$=$CH_3$, $R^b$=$CH_2Cl$, Ym=-(m=0), isomer type C))
(1RS,4SR,5RS)-4-benzyl-1-methyl-5-(1H-1,2,4-triazole-1-ylmethyl)-6-oxabicyclo[3,2,0]heptane (Compound XVI-5, (Compound (XVI), $R^1$=$CH_3$, Ym=-(m=0), isomer type C)) (0.439 mmol) was dissolved in DMF (2.5 ml) and heated to 80°C. To a resultant solution, lithium chloride (5.26 mmol) and p-toluenesulfonic acid monohydrate (0.526 mmol) were added and stirring was carried out for one hour. After the end of reaction, water was added to a resultant residue and extraction with ethyl acetate was carried out. Subsequently, an organic layer was washed with water and saturated brine and dried with anhydrous sodium sulfate, a solvent was distilled away. Thereafter, recrystallization was carried out and thereby a target substance was obtained.
Yield: 65.6%

$^1$H-NMR ($CDCl_3$) δ: 1.18 (3H, s), 1.40-1.56 (2H, m), 1.67-1.77 (1H, m), 1.91-2.04 (2H, m), 2.34-2.43 (2H, m), 3.22 (1H, d, J=10.8 Hz), 3.57 (1H, d, J=10.8 Hz), 4.02 (1H, s), 4.25 (1H, d, J=14.2 Hz), 4.53 (1H, d, J=14.2 Hz), 7.05 (2H, d, J=7.3 Hz), 7.16 (1H, t, J=7.3 Hz), 7.23 (2H, d, J=7.3 Hz), 8.01 (1H, s), 8.19 (1H, s).

Further, Intermediate Compound (II) used above was prepared as follows.

[Chem. 24]

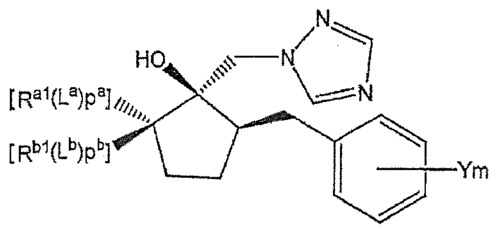

**(II-C)**

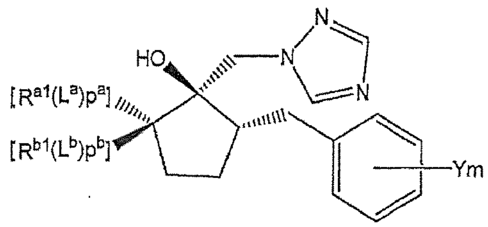

**(II-T)**

[Table 19]

| Compound No. | $R^{a1}(L^a)p^a$ | $R^{b1}(L^b)p^b$ | Ym | Type |
|---|---|---|---|---|
| II-1 | $CH_3$ | $CH_2OTos$ | 4-Cl | C |
| II-2 | $CH_2OTos$ | $CH_3$ | 4-Cl | C |
| II-3 | $CH_2CH_2OTos$ | $CH_3$ | 4-Cl | C |
| II-4 | $CH_2CH_3$ | $CH_2OTos$ | 4-Cl | C |
| II-5 | $CH_2OMs$ | $CH_2OMs$ | 4-Cl | C |
| II-6 | $CH_2OTos$ | $CH_3$ | 4-Cl | T |

<Reference Production Example 1 >

Synthesis of (1RS,2RS,3SR)-p-toluenesulfonic acid 3-(4-chlorobenzyl)-2-hydroxy-1-methyl-2-(1H-1,2,4-triazole-1-ylmethyl)cyclopentyl methyl ester (Compound (II) of

Compound II-1)

In an argon atmosphere, sodium hydride (1.83 mmol) was washed with hexane. Then, this sodium hydride was suspended in dehydrated THF (4 ml) and cooled with ice/water. Next, (1RS,2RS,5SR)-5-(4-chlorobenzyl)-2-hydroxymethyl-2-methyl-1-(1H-1,2,4-triazole-1-ylmethyl)cyclopentanol (Compound VI-1 (Compound (VI), $R^{a1}(OH)p^a$ =$CH_3$, $R^{b1}(OH)p^b$ =$CH_2OH$, Ym=4-Cl, isomer type C)) (1.52 mmol) dissolved in dehydrated THF (5 ml) was dropped. After a temperature was raised back to a room temperature and stirring was carried out for 30 minutes. Then, after the solution was cooled with ice/water again, p-toluenesulfonylchloride (1.97 mmol) was added. Then, stirring was carried out first for 1.5 hours at the same temperature as that cooled with ice/water, and then at a room temperature for 0.5 hour. To thus obtained reaction solution, water was added and reaction was stopped. Subsequently, a resultant solution was partitioned with use of ethyl acetate. Then, after an organic layer was washed with saturated brine, the organic layer was dried with anhydrous sodium sulfate and then concentrated. Thereafter, a target substance was obtained as a result of purification by silica gel chromatography. The same applied to preparation of Compounds II-2 to II-6.
Yield: 55%

Meanwhile, Intermediate Compound (VI) used above can be prepared by, for example, Reference Production Example 7, a method equivalent to Reference Production Example 7, or a method known in Literatures.

[Chem. 25]

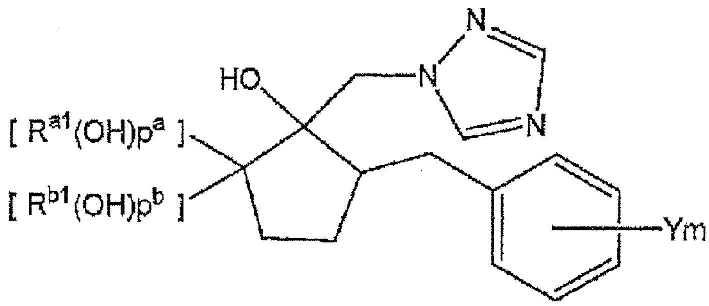

(VI)

<Reference Production Example 2>

Synthesis of 5-(4-chlorobenzyl)-2-hydroxymethyl-2-methyl-1-(1H-1,2,4-triazole-1-ylmethyl)cyclopentanol

(1) Synthesis of Intermediate, 1-(4-chlorobenzyl)-3-methyl-3-hydroxymethyl-2-oxocyclopentanecarboxylic acid methyl ester (Compound XI-1 (Compound (XI), $R^1$ =$CH_3$, $R^2$ =$CH_3$, Ym=4-Cl))

First, 37% formaldehyde aqueous solution (12 mmol) and potassium carbonate (2.0 mmol) were added to 1-(4-chlorobenzyl)-3-methyl-2-oxocyclopentanecarboxylic acid methyl ester (4.0 mmol), and then, vigorous stirring was carried out at a room temperature for 4 hours. After the end of reaction, water was added and extraction with ethyl acetate was carried out. Further, an organic layer was washed with saturated brine, and then dried with anhydrous sodium sulfate. Subsequently, a solvent was distilled away. By purification of a resultant residue by silica gel column chromatography, two types of isomers of Compound (XI-1) were obtained.
Yield: 18%

By a similar preparation method as described here, Compounds (XI) in Table 20 below were synthesized.

[Table 20]

| Compound No | $R^1$ | $R^2$ | Ym | Description | $^1$H-NMR(400MHz, $CDCl_3$)δ |
|---|---|---|---|---|---|
| XI-2 Isomer-(a) | $CH_3$ | $CH_3$ | 4-F | White solid | 0.68(3H, s), 1.45(1H, ddd, *J*= 12.7, 7.1, 3.0Hz), 1.88-1.98( 2H, m), 2.04-2.13(1H, m), 2.38(1H, ddd, *J*= 13.2, 7.1, 3.0Hz), 3.12(1H, d, *J*= 13.8Hz), 3.16(1H, d, J= 13.8Hz), 3.45(1H, dd, *J*= 11.0, 5.8Hz), 3.62(1H, dd, *J*=11.0, 6.9Hz), 3.72(3H, s), 6.95(2H, t, *J*= 8.7Hz), 7.08(2H, dd, J= 8.7, 5.4Hz). |
| XI-2 Isomer-(b) | $CH_3$ | $CH_3$ | 4-F | Colorless viscous liquid | 1.10(3H, s), 1.65-1.70(1H, m), 1.72(1H, dt, *J*= 13.3, 7.3Hz), 1.80-1.88(1H, m), 1.98(1H, dt, *J*= 13.6, 7.3Hz), 2.37-2.45( 1H, m), 3.03(1H, d, *J*=13.9Hz), 3.18(1H, d, *J*= 13.9Hz), 3.22(1H, dd, *J*= 10.8, 4.6Hz), 3.42(1H, dd, *J*= 10.8, 7.3Hz), 3.73(3H, s), 6.95(2H, t, *J*= 8.7Hz), 7.12(2H, dd, *J*= 8.7, 5.5Hz). |

(2) Synthesis of Intermediate, 5-(4-chlorobenzyl)-2-methoxymethoxymethyl-2-methylcyclopentanone (Compound IX-1 (Compound (IX), $R^1$ =$CH_3$, Ym=4-Cl, G=$CH_2OCH_3$))

First, Compound XI-1 (0.60 mmol) was dissolved into methylene chloride (5.6 ml), and dimethoxymethane (2.8 ml) was added. Then, a resultant solution was cooled in water and to thus cooled solution, diphosphorus pentaoxide (372 mg) was added. Further, vigorous stirring was carried out at a room temperature for 10 minutes. After the end of reaction, saturated brine was added to a resultant reaction solution and extraction with diethyl ether was carried out. Subsequently, an organic layer was washed with saturated brine and dried with anhydrous sodium sulfate. Thereafter, a solvent was distilled away and drying under reduced pressure was carried out. Thereby, crude 1-(4-chlorobenzyl)-3-methoxymethoxymethyl-3-methyl-2-oxocyclopentanecarboxylic acid methyl ester (Compound (X), $R^1$=$CH_3$, $R^2$=$CH_3$, Ym=4-Cl, G=$CH_2OCH_2OCH_3$) (195 mg) was obtained. Thus obtained Compound (X) was dissolved in isopropanol (0.53 ml), and 2M sodium hydroxide aqueous solution (1.12 mmol) was added. Then, stirring was further carried out at 60°C for one hour. After the end of reaction, water was added and extraction with ethyl acetate was carried out. Further, an organic layer was washed with saturated brine, and then dried with anhydrous sodium sulfate. Subsequently, a solvent was distilled away. Thereafter, by purification of a resultant residue by gel column chromatography, a mixture of two types of isomers of a target substance was obtained.
Yield: 66%

(3) Synthesis of Intermediate, 5-(4-chlorobenzyl)-2-methoxymethoxymethyl-2-methyl-1-(1H-1,2,4-triazole-1-ylmethyl)cyclopentanol (Compound VII-1 (Compound (VII), $R^1$=$CH_3$, Ym =4-Cl, G=$CH_2OCH_3$))

First, 1H-1,2,4-triazole sodium salt (13.1 mmol) was dissolved in NMP (7 ml) and an internal temperature of thus obtained mixture was raised to 115°C. Into this mixture, Compound IX-1 (8.76 mmol) was added and the mixture was washed with NMP (1.8 ml). Then, after the internal temperature rises back to 115°C, sodium t-butoxide (5.26 mmol) and trimethylsulfoxonium bromide (1.476 mmol) were added in parts over approximately 3 hours. After addition of these sodium t-butoxide and trimethylsulfoxonium bromide had completed, stirring was carried out for 75 minutes at the internal temperature of 115°C. Subsequently, after thus obtained reaction solution was cooled down to 35°C, water was added to the reaction solution. Then, extraction with ethyl acetate was carried out. Further, an organic layer was washed with water and saturated brine, and dried with anhydrous sodium sulfate. Subsequently, a solvent was distilled away. Thereafter, by purification of a resultant residue by silica gel column chromatography, a target substance was obtained.

Yield: 71% (4) Synthesis of 5-(4-chlorobenzyl)-2-hydroxymethyl-2-methyl-1-(1H-1,2,4-triazole-1-ylmethyl)cyclopentanol (Compound VIa-1 (Compound (VIa), $R^1$ =$CH_3$, Ym=4-Cl))

First, Compound VII-1 (1.66 mmol) was dissolved in methanol (6.3 ml). Then, 10% hydrogen chloride-methanol (1.73 mmol) was added and stirring was carried out at a room temperature for 48 hours. After the end of reaction, a solvent was distilled away and water was added. Further, after ethyl acetate (80 ml) was added, sodium hydroxide aqueous solution was added until pH became 10. Then, an organic layer was separated. Subsequently, the organic layer was washed with saturated brine and then dried with anhydrous sodium sulfate. Thereafter, a solvent was distilled away and thereby, compounds of the title of Reference Production Example 2 were obtained at a ratio of (VI-1 (Compound (VI), $R^{a1}(OH)p^a$ =$CH_3$, $R^{b1}(OH)p^b$=$CH_2OH$, Ym=4-Cl, isomer type C) : VI-2 (Compound (VI), $R^{a1}(OH)p^a$=$CH_2OH$, $R^{b1}(OH)p^b$=$CH_3$, Ym=4-Cl, isomer type C) : other isomer (isomer type T) =6 : 3 : 1).
Yield: 89.5%

Compounds (VI) below were synthesized by a method described in Reference Production Example above or the like method.

[Table 21]

| Compound No. | $R^{a1}(OH)p^a$ | $R^{b1}(OH)p^b$ | Ym | Type |
|---|---|---|---|---|
| VI-1 | $CH_3$ | $CH_2OH$ | 4-Cl | C |
| VI-2 | $CH_2OH$ | $CH_3$ | 4-Cl | C |
| VI-3 | $CH_2CH_2OH$ | $CH_3$ | 4-Cl | C |
| VI-4 | $CH_2CH_3$ | $CH_2OH$ | 4-Cl | C |
| VI-5 | $CH_2OH$ | $CH_2OH$ | 4-Cl | C |
| VI-6 | $CH_2OH$ | $CH_3$ | 4-Cl | T |

Further, part of Intermediate Compound (V) is prepared as described below.

<Reference Production Example 3>

Synthesis of 2-(2-chloro-2-propenyl)-5-(4-chlorobenzyl)-2-methylcyclopentanone (Compound (V), $(R^a)X^an^a$=$CH_3$, $(R^b)X^bn^b$=$CH_2CCl$=$CH_2$)

(1) Intermediate, 3-(2-chloro-2-propenyl)-1-(4-chlorobenzyl)-3-methyl-2-oxocyclopentanecarboxylic acid methyl ester (Compound XIII-1 (Compound (XIII), $R^1$=$CH_3$, ($R^b$)$X^bn^b$=$CH_2CCl$=$CH_2$, $R^2$=$CH_3$))

First, 1-(4-chlorobenzyl)-3-methyl-2-oxocyclopentanecarboxylic acid methyl ester (Compound (XII), $R^1$=$CH_3$, $R^2$=$CH_3$) (14.2 mmol) was dissolved in DMF (20 ml). Then, after NaH (15.8 mmol) was added and a temperature of a resultant mixture was raised to approximately 60°C, the mixture was cooled with ice. Next, 2,3-dichloropropene (17.0 mmol) was added. This time, an ice bath was removed. Then, stirring was carried out at a room temperature for 5 hours, and further stirring was carried out at approximately 60°C for 1 hour. Subsequently, water was added to a resultant reaction solution and extraction with ethyl acetate was carried out. Then, after an organic layer was washed with saturated brine, the organic layer was dried with anhydrous sodium sulfate and concentrated. Thereafter, a target substance was obtained as a result of purification with use of a silica gel column. Yield: 58%

(2) Synthesis of 2-(2-chloro-2-propenyl)-5-(4-chlorobenzyl)-2-methylcyclopentanone (Compound (V), ($R^a$)$X^an^a$=$CH_3$, ($R^b$)$X^bn^b$=$CH_2CCl$=$CH_2$)

First, Compound XIII-1 (8.16 mmol) was dissolved in i-PrOH (5 ml). Then, an aqueous solution obtained by dissolving NaOH (16.3 mmol) in water (5.4 ml) was added and stirring was carried out for 2.5 hours under reflux. Then, water was added and extraction with hexane was carried out. Further, an organic layer was dried with anhydrous sodium sulfate and concentrated, and thereby a target substance was obtained.
Yield: 81%

Moreover, Intermediate Compound (XVI) is prepared as follows.

[Chem. 26]

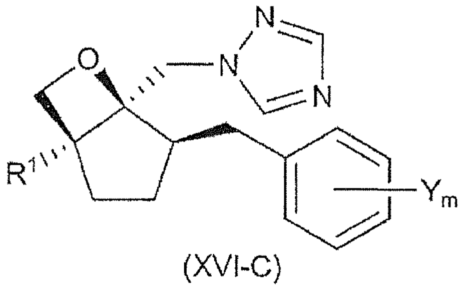

(XVI-C)

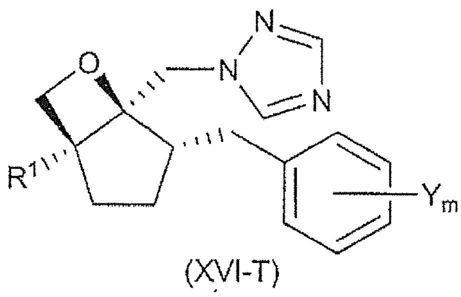

(XVI-T)

[Table 22]

| Compound No. | $R^1$ | Ym | Type |
|---|---|---|---|
| XVI-1 | $CH_3$ | 4-Cl | C |
| XVI-2 | $CH_3$ | 4-Cl | T |
| XVI-4 | $CH_3$ | 4-F | C |
| XVI-5 | $CH_3$ | - | C |

<Reference Production Example 4>

Synthesis of (1RS,4SR,5RS)-4-(4-chlorobenzyl)-1-methyl-5-(1H-1,2,4-triazole-1-ylmethyl)-6-oxabicyclo[3,2,0] heptane (Compound XVI-1 (Compound (XVI), [($R^a$)$X^an^a$]=CH3, Ym=4-Cl, isomer type C) and (IRS,4RS,5RS)-4-(4-chlorobenzyl)-1-methyl-5-(1H-1,2,4-triazole-1-ylmethyl)-6-oxabicyclo[3,2,0]heptane (Compound XVI-2 (Compound (XVI), [($R^{a2}$)$X^{a2}n^{a2}$($OR^3$)$p^{a1}$]=$CH_3$, Ym=4-Cl, isomer type T)

First, sodium hydride (95.5 mmol) was washed with hexane, and suspended in THF (50 ml). Thus obtained solution was cooled in an ice bath. Into the cooled solution, a mixture (77.7 mmol) of isomers of Compound VIa-1 dissolved in THF (185 ml) was dropped over 30 minutes.

After this dropping process had completed, stirring was carried out for 40 minutes while a temperature of the solution was being raised back to a room temperature. Then, while the solution was being cooled again in an ice bath,

p-toluene sulfonyl chloride (69.3 mmol) was added and stirring was carried out for 70 minutes. To thus obtained solution, sodium hydride (103 mmol) was added over 5 minutes and a resultant solution was stirred at a room temperature for one hour. After the end of reaction, a resultant solution was poured into ice water and extraction with ethyl acetate was carried out. Then, an organic layer was washed with saturated brine, and dried with anhydrous sodium sulfate. Subsequently, a solvent was distilled away. Thereafter, target substances were obtained as a result of purification of a resultant residue by silica gel column chromatography.

Compound XVI-1

Yield 70.0%

Compound XVI-2

Yield: 10.4%

By a similar production method, Compounds XVI-4 and XVI-5 in Table 22 above were synthesized.

<Production Example 12>

Synthesis of 2-(1-chlorocyclopropyl)-1-(2,2-dibromocyclopropyl)-3-(1H-1,2,4-triazole-1-yl)propane-2-ol

(Compound XVII-2)

(1) Synthesis of 1-chloro-2-(1-chlorocyclopropyl)-4-pentene-2-ol (Compound XXIII-1 (Compound (XXIII), $R^4$=1-chlorocyclopropyl, $R^5$=H, $R^6$=H, $R^7$=H, $R^8$=H, $X^6$=Cl, $n^2$=1))

In an argon atmosphere, 2-chloro-1-(1-chlorocyclopropyl)ethanone (Compound (XXI): $R^4$=1-chlorocyclopropyl, $X^6$=Cl) (0.0098 mol) was dissolved in diethyl ether (20 ml) and cooled down to -50°C. Then, a diethyl ether solution (18ml) of 1 M allylmagnesium bromide (Compound (XXIV): $R^5$=H, $R^6$=H, $R^7$=H, $R^8$=H, $X^7$=MgBr, $n^2$=1) was added. Thus obtained solution was stirred at -50°C for 20 minutes and while a temperature of the solution was being gradually raised to a temperature under cooling with ice, further stirring was carried out for one hour. After the stirring, ice water and saturated ammonium chloride aqueous solution were added. Subsequently, after extraction with diethyl ether was carried out, an organic layer was extracted with saturated sodium bicarbonate water and saturated brine. Then, the organic layer was dried with anhydrous sodium sulfate, and then concentrated. Thereby, a crude target substance was obtained. Crude Yield: 77%

(2) Synthesis of 2-(1-chlorocyclopropyl)-2-(2,2-dibromocyclopropylmethyl)oxirane (Compound XVIIIa-1 (Compound (XVIIIa), $R^4$=1-chlorocyclopropyl, $R^5$=H, $R^6$=H, $R^7$=H, $R^8$=H, $X^4$=Br, $X^5$=Br, $n^2$=1))

In Compound XXIII-1 (0.0031 mol), bromoform (9.2 mmol), 50% sodium hydroxide aqueous solution (2 g) and benzyltriethylammonium chloride (0.154 mmol) were added and stirring was carried out at a room temperature for one hour. Then, stirring was carried out further at approximately 60°C for one hour and additionally at 80°C for one hour. To thus obtained reaction solution, water was added and extraction with diethyl ether was carried out. Further, after an organic layer was washed with water and saturated brine, the organic layer was dried with anhydrous sodium sulfate and concentrated. To thus obtained crude product, bromoform (9.2 mmol), 50% sodium hydroxide aqueous solution (2 g) and benzyltriethylammonium chloride (0.30 mol) were added and stirring was carried out at 80°C for 4 hours. Then, water was added to a resultant reaction solution and extraction with diethylether was carried out. Subsequently, after an organic layer was washed with water and saturated brine, the organic layer was dried with anhydrous sodium sulfate and concentrated. Thereafter, a crude product was obtained as a result of purification by silica gel column chromatography,.
Crude Yield: 59%

(3) Synthesis of 2-(1-chlorocyclopropyl)-1-(2,2-dibromocyclopropyl)-3-(1H-1,2,4-triazole-1-yl)propane-2-ol (Compound (XVIIa): $X^1$=Cl, $X^2$=H, $X^3$=H, $X^4$=Br, X5=Br, $R^5$=H, $R^6$=H, $R^7$=H, $R^8$=H, $n^1$=0, $n^2$=1)

After potassium carbonate (2.7 mmol) was added and suspended in DMF (3 ml), sodium t-butoxide (0.36 mmol) and 1,2,4-triazole (Compound (IV): M=H) (2.7 mmol) were added to a resultant suspension. Further, into thus obtained mixture, Compound XVIIIa-1 (0.0018 mol) dissolved in DMF (3 ml) was added and stirring was carried out at 90°C for 2 hours. To thus obtained mixture, ethyl acetate and water were added and partitioned. Subsequently, an organic layer

was washed with saturated brine. Then, after an aqueous layer was extracted with ethyl acetate, an organic layer was dried with anhydrous sodium sulfate and concentrated. Thereafter, by carrying out purification by silica gel column chromatography, an isomer having a lower polarity from among two types of isomers was isolated.
Yield: 9%
NMR $\delta_H$ (400 MHz, $CDCl_3$): 0.28-0.38 (m, 1H), 0.42-0.52 (m, 1H), 0.73-0.84 (m, 1H), 1.02-1.12 (m, 1H), 1.42 (app.t, J=7.6 Hz, 1H), 1.88 (dd, J=7.3, 10.6 Hz, 1H), 1.92-2.19 (m, 3H), 4.36 (s, 1H), 4.39 (d, J=14.2 Hz, 1H,), 4.95 (d, J= 14.2 Hz, 1H), 8.04 (s, 1H), 8.28 (s, 1H).

The following shows Mixture Formulation Examples. Note that a carrier (diluent) and an auxiliary agent, and a mixture ratio of these can be varied in a broad range. Also, note that "parts" in each Formulation Example means parts by weight.

<Mixture Formulation Example 1 (Wettable Powder)>

| | |
|---|---|
| Compound (I) | 25 Parts |
| Metconazole | 25 Parts |
| Lignin sulfonate salt | 5 Parts |
| Alkyl sulfonate salt | 3 Parts |
| Diatomaceous earth | 42 Parts |

These are ground and mixed so as to form a wettable powder formulation, and used after diluted with water.

<Mixture Formulation Example 2 (Dust Formulation)>

| | |
|---|---|
| Compound (I) | 3 Parts |
| Metconazole | 3 Parts |
| Clay | 40 Parts |
| Talc | 54 Parts |

These are ground and mixed, and used as a dusting powder.

<Mixture Formulation Example 3 (Granule)>

| | |
|---|---|
| Compound (I) | 2.5 Parts |
| Metconazole | 2.5 Parts |
| Bentonite | 43 Parts |
| Clay | 45 Parts |
| Lignin sulfonate salt | 7 Parts |

These are mixed uniformly, and water is added to the mixture. A resultant mixture is kneaded, and is processed and dried by an extruding granulator. Thereby, a granule formulation is obtained.

<Mixture Formulation Example 4 (Emulsifiable Concentrate)>

| | |
|---|---|
| Compound (I) | 5 Parts |
| Metconazole | 5 Parts |
| Polyoxyethylene alkylaryl ether | 10 Parts |
| Polyoxyethylene sorbitan monolaurate | 3 Parts |

(continued)

| | |
|---|---|
| Xylene | 77 Parts |

These are mixed and dissolved uniformly, and used as an emulsifiable concentrate.

Industrial Applicability

The agro-horticultural agent of the present invention can be suitably applied as a chemical agent against plant diseases such as wheat Fusarium head blight.

## Claims

1. An agro-horticultural agent comprising a plurality of active ingredients, one of which is an azole derivative represented by the general formula (I):

[Chem. 1]

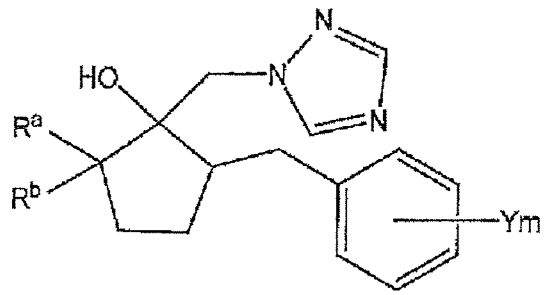

(I)

,

where: $R^a$ represents a $C_1$-$C_3$ alkyl group substituted with a halogen atom or a $C_2$-$C_3$ alkenyl group substituted with a halogen atom; $R^b$ represents a $C_1$-$C_2$ alkyl group unsubstituted or substituted with a halogen atom; Y represents a halogen atom; m represents 0 or 1; and when m is 1, Y binds to 4-position.

2. The agro-horticultural agent as set forth in claim 1, comprising, as another one of the plurality of active ingredients, a compound having an ergosterol biosynthesis inhibiting ability, in addition to a compound represented by the general formula (I).

3. The agro-horticultural agent as set forth in claim 2 wherein the compound having the ergosterol biosynthesis inhibiting ability is at least one selected from an azole compound and fenpropimorph.

4. The agro-horticultural agent as set forth in claim 3 wherein the azole compound is at least one selected from metconazole, epoxiconazole, ipconazole, prothioconazole, tebuconazole and prochloraz.

5. The agro-horticultural agent as set forth in any one of claims 1 to 4, further comprising, as another one of the active ingredients, a compound having a succinate dehydrogenase inhibiting ability, in addition to the compound represented by the general formula (I).

6. The agro-horticultural agent as set forth in claim 5, wherein the compound having the succinate dehydrogenase inhibiting ability is at least one selected from bixafen, boscalid, penthiopyrad, isopyrazam, fluopyram, furametpyr and benodanil.

7. The agro-horticultural agent as set forth in any one of claims 1 to 6, comprising, as another one of the active ingredients, a strobilurin compound in addition to the compound represented by the general formula (I).

**8.** The agro-horticultural agent as set forth in claim 7, wherein the strobilurin compound is at least one selected from pyraclostrobin, azoxystrobin and kresoxim-methyl.

**9.** The agro-horticultural agent as set forth in any one of claims 1 to 8, comprising, as another one of the active ingredients, a benzimidazole compound in addition to the compound represented by the general formula (I).

**10.** The agro-horticultural agent as set forth in claim 9, wherein the benzimidazole compound is thiophanate-methyl.

**11.** The agro-horticultural agent as set forth in any one of claims 1 to 10, comprising, as another one of the active ingredients, at least either one of metalaxyl and chlorothalonil, in addition to the compound represented by the general formula (I).

**12.** The agro-horticultural agent as set forth in any one of claims 1 to 11 being used as a fungicide.

**13.** A plant disease control composition comprising:

as an active ingredient, a compound represented by the general formula (I):

[Chem. 2]

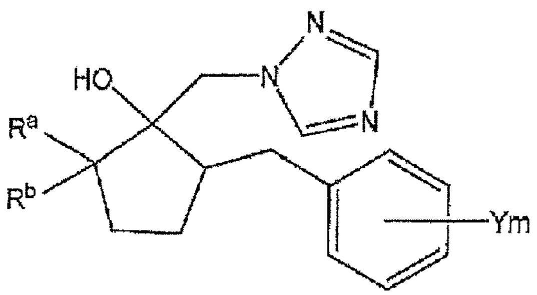

(I)

,

where: $R^a$ represents a $C_1$-$C_3$ alkyl group substituted with a halogen atom or a $C_2$-$C_3$ alkenyl group substituted with a halogen atom; $R^b$ represents a $C_1$-$C_2$ alkyl group unsubstituted or substituted with a halogen atom; Y represents a halogen atom; m represents 0 or 1; and when m is 1, Y binds to 4-position; and
as another active ingredient, a compound represented by the general formula (XVII):

[Chem. 3]

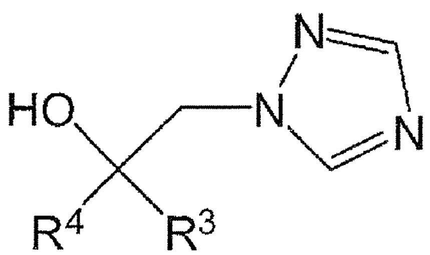

(XVII)

,

where: $R^3$ represents a cyclopropyl group in which at least one hydrogen atom is substituted with a halogen

atom, a methyl group or an ethyl group or a $C_1$-$C_4$ alkyl group in which one hydrogen atom is substituted with the cyclopropyl group; and $R^4$ represents a cyclopropyl group in which at least one hydrogen atom is substituted with a halogen atom or a $C_1$-$C_3$ alkyl group in which one hydrogen atom is substituted with the cyclopropyl group.

**14.** A plant disease control product comprising an azole derivative as represented by general formula (I) and other active ingredient, separately, as respective combination preparations for allowing a plurality of active ingredients to be used in mixture:

[Chem. 4]

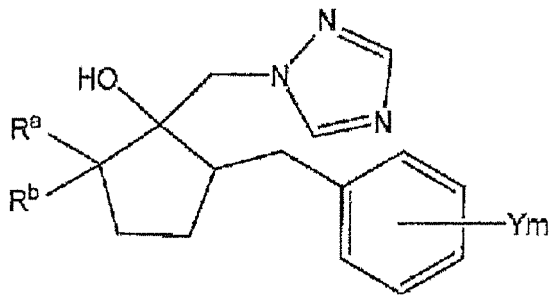

(I)

,

where: $R^a$ represents a $C_1$-$C_3$ alkyl group substituted with a halogen atom or a $C_2$-$C_3$ alkenyl group substituted with a halogen atom; $R^b$ represents a $C_1$-$C_2$ alkyl group unsubstituted or substituted with a halogen atom; Y represents a halogen atom; m represents 0 or 1; and when m is 1, Y binds to 4-position.

**15.** A method for controlling a plant disease, comprising the step of carrying out a foliage treatment or a non-foliage treatment by use of an agro-horticultural agent as set forth in any one of claims 1 to 12 or a plant disease control composition as set forth in claim 13.

FIG. 1

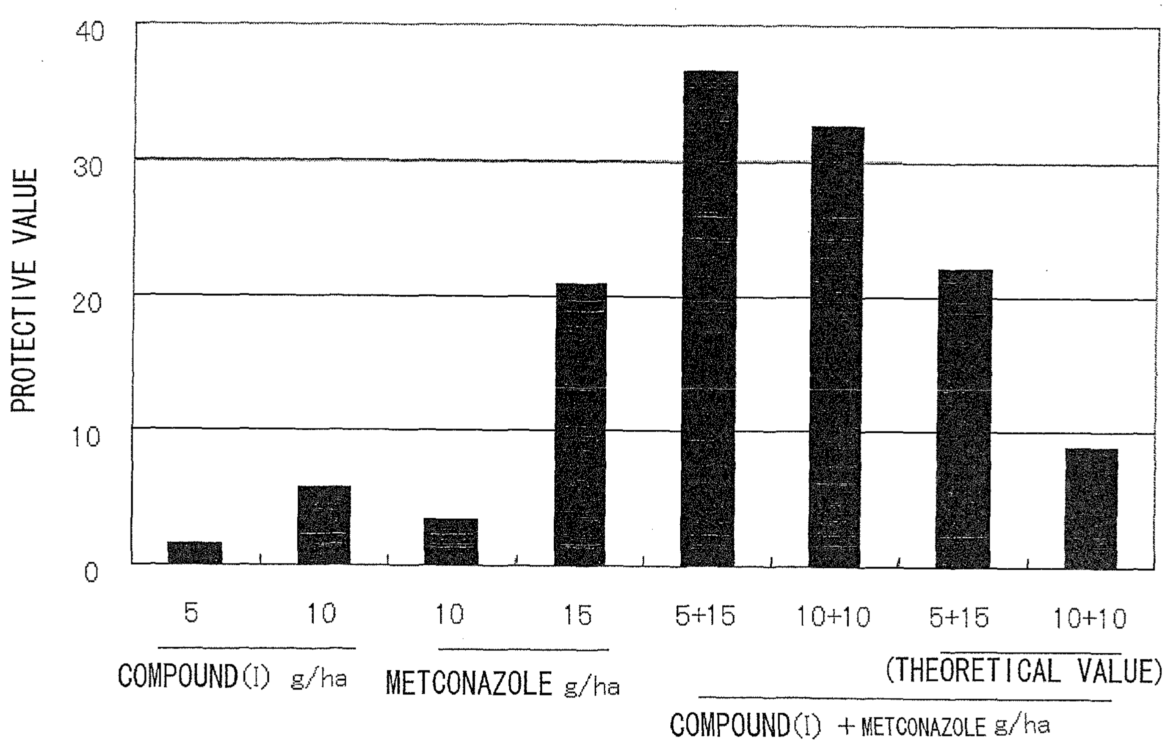
PROTECTIVE VALUE
40
30
20
10
0
5
10
10
15
5+15
10+10
5+15
10+10
COMPOUND(I) g/ha
METCONAZOLE g/ha
(THEORETICAL VALUE)
COMPOUND(I) + METCONAZOLE g/ha

FIG. 2

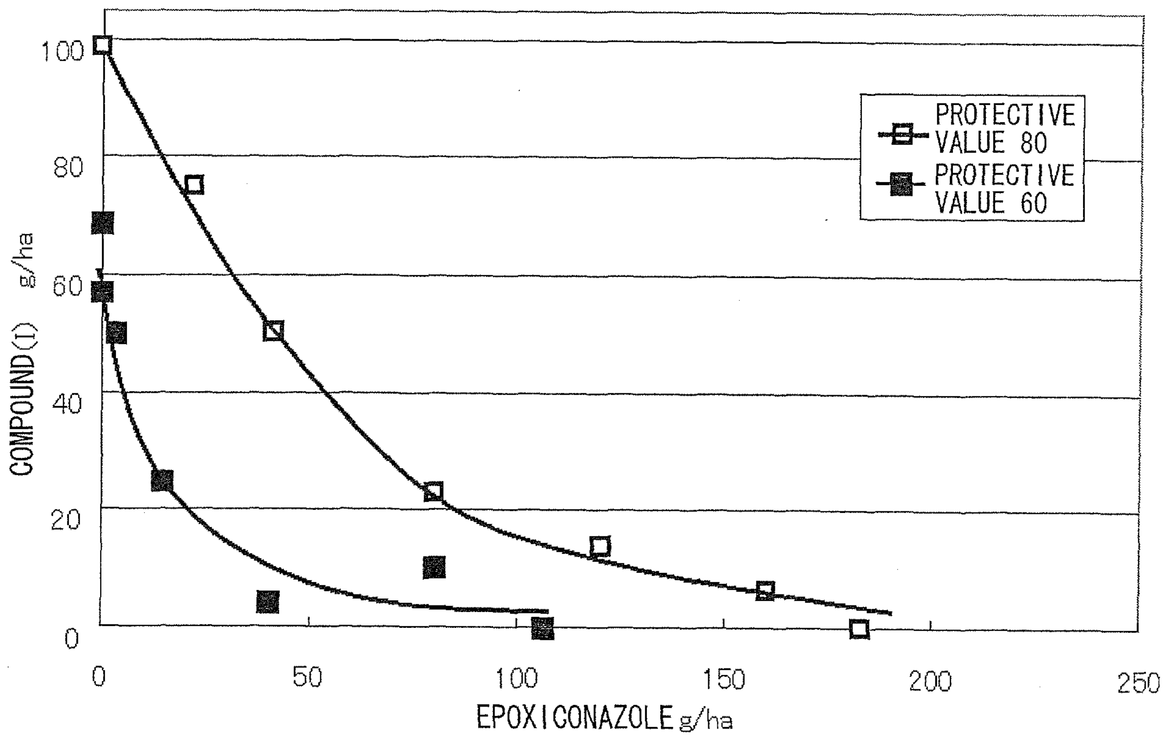
COMPOUND(I) g/ha
100
80
60
40
20
0
0
50
100
150
200
250
EPOXICONAZOLE g/ha
PROTECTIVE VALUE 80
PROTECTIVE VALUE 60

FIG. 3

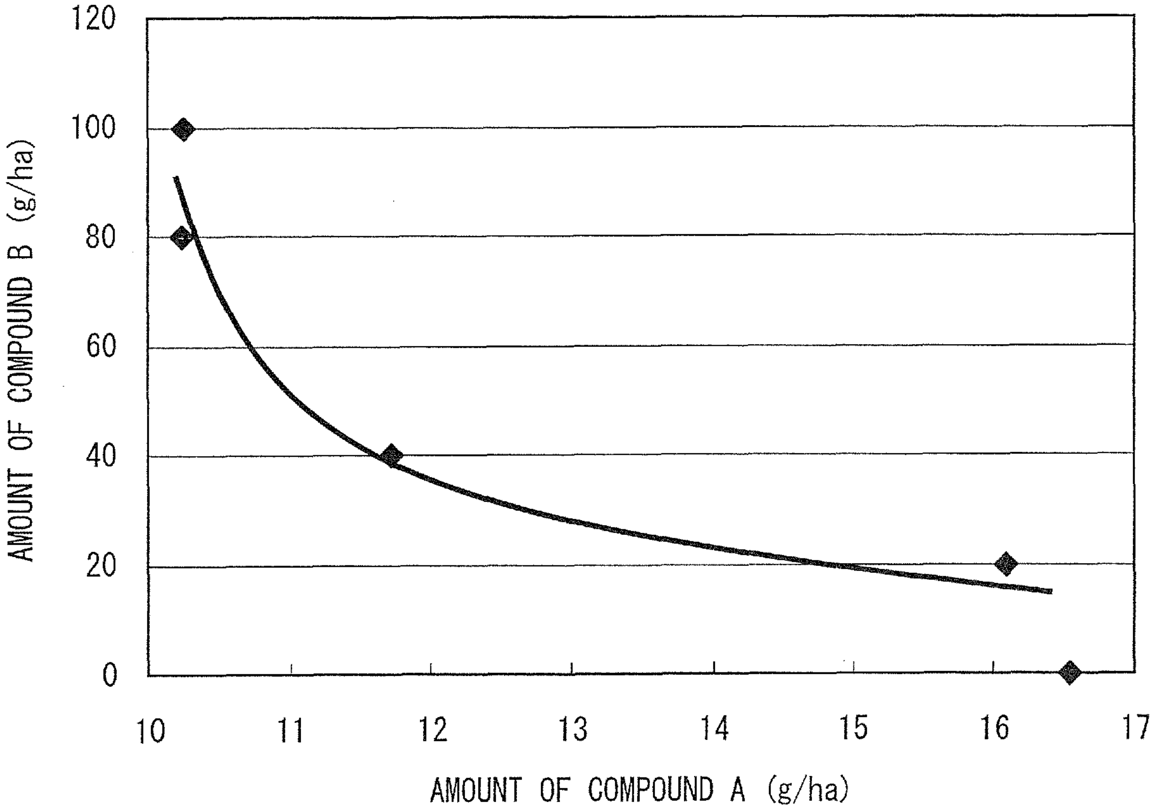
120
100
80
60
40
20
0
AMOUNT OF COMPOUND B (g/ha)
10
11
12
13
14
15
16
17
AMOUNT OF COMPOUND A (g/ha)

**INTERNATIONAL SEARCH REPORT**

International application No. PCT/JP2012/064549

A. CLASSIFICATION OF SUBJECT MATTER

*A01N43/653*(2006.01)i, *A01N37/34*(2006.01)i, *A01N37/46*(2006.01)i, *A01N37/50*(2006.01)i, *A01N43/40*(2006.01)i, *A01N43/54*(2006.01)i, *A01N43/56*(2006.01)i, *A01N43/84*(2006.01)i, *A01N47/24*(2006.01)i,

According to International Patent Classification (IPC) or to both national classification and IPC

B. FIELDS SEARCHED

Minimum documentation searched (classification system followed by classification symbols)

A01N43/653, A01N37/34, A01N37/46, A01N37/50, A01N43/40, A01N43/54, A01N43/56, A01N43/84, A01N47/24, A01N47/34, A01P3/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| P,X | WO 2011/070771 A1 (KUREHA CORP.), 16 June 2011 (16.06.2011), claims; paragraphs [0061] to [0073], [0294], [0306] to [0309] (Family: none) | 1-15 |
| A | JP 2010-525004 A (BASF SE), 22 July 2010 (22.07.2010), claims & WO 2008/132021 A2 & EP 2139335 A2 & US 2010/0062938 A1 & CN 10668427 A & CA 2682922 A1 | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>10 August, 2012 (10.08.12) | Date of mailing of the international search report<br>21 August, 2012 (21.08.12) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2012/064549

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-504811 A (Janssen Pharmaceutica N.V.), 12 May 1998 (12.05.1998), claims & WO 96/01054 A1 & EP 769906 A1 & US 5714507 A & US 5804591 A & DE 69523312 A | 1-15 |

Form PCT/ISA/210 (continuation of second sheet) (July 2009)

**INTERNATIONAL SEARCH REPORT**

International application No.
PCT/JP2012/064549

Continuation of A. CLASSIFICATION OF SUBJECT MATTER
(International Patent Classification (IPC))

*A01N47/34*(2006.01)i, *A01P3/00*(2006.01)i

(According to International Patent Classification (IPC) or to both national classification and IPC)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 1093574 A
- JP 1186871 A
- DE 3902031
- JP 5271197 A
- JP 1301664 A
- EP 0015756 A
- EP 0052424 A
- EP 0061835 A
- EP 0297345 A
- EP 0047594 A
- EP 0212605 A
- JP 56097276 A
- JP 61126049 A
- JP 2286664 A
- JP 59098061 A
- JP 61271276 A
- EP 0229642 A
- JP 4230270 A


### Non-patent literature cited in the description


- **BAN ; SUENAGA.** *Euphyitica,* 2000, vol. 113, 87-99
- Agricultural Chemical Testing Method. Soft Science Co., Ltd, vol. 3, 109-116
- Agricultural Chemical Testing Method. Soft Science Co., Ltd, March 1981, vol. 3, 109-116